# EUROPEAN PATENT APPLICATION

(11) **EP 4 765 341 A1**
(43) Date of publication of application: **24.06.2026**
(21) Application number: 24923229.9
(22) Date of filing: 01.08.2024
(51) Int. Cl.: H01M 10/6556

(54) **HEAT EXCHANGE ASSEMBLY, BATTERY AND ELECTRICAL DEVICE**

(30) Priority: 06.02.2024 CN 202420286907 U
(71) Applicant: Contemporary Amperex Technology Co., Limited, Ningde, Fujian 352100 (CN)
(72) Inventor: RUAN, Shengshen, Ningde, Fujian 352100 (CN); GUO, Xinfei, Ningde, Fujian 352100 (CN); YANG, Hui, Ningde, Fujian 352100 (CN); JIA, Jun, Ningde, Fujian 352100 (CN)
(74) Representative: Lorenz Seidler Gossel Part. mbB
(86) International application number: PCT/CN2024/109303
(87) International publication number: WO 2025/167014

(57) **Abstract**

Disclosed are a heat exchange assembly, a battery, and an electrical apparatus. The heat exchange assembly is configured to exchange heat with a battery cell and includes a plurality of heat exchange tubes, each heat exchange tube has two end portions; when one of the two end portions is used for liquid intake, the other one is used for liquid output; and at least one side of the periphery of the heat exchange assembly locally forms a converging position, and at least one end portion of each heat exchange tube extends to the converging position.

## Description

### CROSS-REFERENCE TO RELATED APPLICATIONS

The present application claims the priority of the Chinese patent application with the application number 202420286907.8 and filed by China Patent Office on February 06, 2024, the entire contents of which are incorporated herein by reference.

### TECHNCIAL FIELD

The present application relates to the technical field of batteries, and specifically relates to a heat exchange assembly, a battery, and an electrical apparatus.

### BACKGROUND

In recent years, new energy vehicles have made significant advancements. In the field of electric vehicles, batteries, as the sources of power for electric vehicles, play an irreplaceable important role. Generally, batteries use heat exchange assemblies to regulate the temperature of battery cells; however, it is relatively cumbersome to assemble the heat exchange assemblies, making it difficult to improve battery assembling efficiency.

### SUMMARY

The present application provides a heat exchange assembly, a battery, and an electrical apparatus, aiming at improving the assembling convenience and sealing convenience of a battery.

In a first aspect, the embodiment of the present application provides the heat exchange assembly; the heat exchange assembly is configured to exchange heat with a battery cell and includes a plurality of heat exchange tubes, each heat exchange tube has two end portions; when one of the two end portions is used for liquid intake, the other one is used for liquid output; and at least one side of the periphery of the heat exchange assembly locally forms a converging position, and at least one end portion of each heat exchange tube extends to the converging position.

In the above technical solution, the at least one side of the periphery of the heat exchange assembly locally forms the converging position, and the at least one end portion of each heat exchange tube extends to the converging position, so that the converging positions correspond to a plurality of end portions; the plurality of end portions corresponding to the converging positions are arranged in a relatively centralized manner, thereby quickly and simultaneously aligning the plurality of end portions corresponding to the converging positions with other components (such as a current collector, a fixed beam, and an expansion beam described in the following) in an assembling process of the heat exchange assembly, facilitating to improve the assembling convenience and assembling efficiency of the heat exchange assembly while realizing good assembling precision of each end portion. In addition, if it is needed to seal the whole heat exchange assembly, the plurality of end portions can be directly sealed at the converging position, which simplifies the sealing to the heat exchange assembly; and when the other components are provided with avoiding structures for avoiding the converging positions, the above arrangement is also beneficial to reducing the number of the avoiding structures, and meanwhile, if the avoiding structures will weaken the structural strength of the other components to a certain extent, such arrangement is beneficial to reducing the weakening of the avoiding structures on the other components.

In some embodiments, a size of the converging position on a corresponding side of the heat exchange assembly is smaller than or equal to 1/3 of the size of the corresponding side of the heat exchange assembly; and optionally, the size of the converging position on the corresponding side of the heat exchange assembly is smaller than or equal to 115 of the size of the corresponding side of the heat exchange assembly.

In the above technical solution, the size of the converging position on the corresponding side of the heat exchange assembly is set to be smaller than or equal to 1/3 of the size of the corresponding side of the heat exchange assembly, which facilitates the centralized arrangement of the plurality of end portions corresponding to the converging positions, helps further save the space occupied by the converging positions, and makes it easier to assemble and seal the heat exchange assembly at the converging positions; moreover, the end portions corresponding to the converging positions are used for liquid intake and/or liquid output, so a temperature of media in the end portions is relatively high or low, and the temperature of a corresponding area will intensively increase or decrease due to the arranged converging positions; and the size occupied by the converging positions on the corresponding side of the heat exchange assembly is relatively small, thus the influence range of the temperature of the media in the end portions corresponding to the converging positions is correspondingly small, which facilitates to reduce the concentration of the temperature of the areas corresponding to the converging positions R, and makes it convenient to improve a temperature uniformity of the battery to a certain extent.

In some embodiments, all the converging positions of the heat exchange assembly are located on one side of the periphery of the heat exchange assembly.

In the above technical solution, all the converging positions of the heat exchange assembly are located on one side of the periphery of the heat exchange assembly, thus all the converging positions of the heat exchange assembly are arranged in a relatively centralized manner, which facilitates to align the heat exchange assembly with other components in the assembling process of the heat exchange assembly, is conducive to quickly and simultaneously assembling all the converging positions, and further improving the assembling efficiency of the heat exchange assembly.

In some embodiments, a plurality of heat exchange tubes are arranged at intervals or are arranged in a mutually winding mode.

In the above technical solution, the plurality of heat exchange tubes are arranged at intervals or are arranged in the mutually winding manner, so that the plurality of heat exchange tubes can fully utilize an arrangement space, each battery cell can correspond to an appropriate portion of the corresponding heat exchange tube when the heat exchange assembly is applied to the battery, making it meet the heat exchange demand of each battery cell very well.

In some embodiments, a space between any two adjacent end portions of the converging positions is less than the maximum radial size of outer contours of cross sections of the end portions; one or a plurality of converging positions are provided, two end portions of each heat exchange tube extend to the same converging position; or, a plurality of converging positions are provided, two end portions of each heat exchange tube extend to different converging positions.

In the above technical solution, the two end portions of each heat exchange tube extend to the same converging position, or, the two end portions of each heat exchange tube extend to different converging positions, the number of the heat exchange tubes and the number of the converging positions are relatively flexible, which facilitates to realize flexible design of the heat exchange assembly.

In some embodiments, the converging positions are located between two corresponding ends of the heat exchange assembly; or, the converging positions at least in part exceed the corresponding end of the heat exchange assembly.

In the above technical solution, the converging positions are located between the two corresponding ends of the heat exchange assembly, or the converging positions at least in part exceed the corresponding end of the heat exchange assembly, therefore, the converging positions can be flexibly arranged on the corresponding side of the heat exchange assembly, which is conducive to matching the converging positions with the plurality of heat exchange tubes in arrangement mode, and facilitating the arrangement of the plurality of heat exchange tubes.

In some embodiments, one converging position is provided, and the converging position is opposite to the middle of the corresponding side of the heat exchange assembly; or, the converging position is opposite to one end of the corresponding side of the heat exchange assembly.

In the above technical solution, the converging position is opposite to the middle of the corresponding side of the heat exchange assembly, or opposite to the end portion of the corresponding side of the heat exchange assembly, therefore, the converging position at a proper position is reasonably selected according to the arrangement mode of heat exchange tubes and the like while all the end portions of the heat exchange assembly are converged, which facilitates all the end portions to smoothly extend to the converging position.

In some embodiments, the plurality of heat exchange tubes are arranged at intervals in a first direction, and two heat exchange tubes at two ends are symmetrically arranged about a center line of the heat exchange assembly vertical to the first direction.

In the above technical solution, the plurality of heat exchange tubes are arranged at intervals, so that the arrangement mode of the plurality of heat exchange tubes is simplified; the two heat exchange tubes at two ends are symmetrically arranged about the center line, thus the two heat exchange tubes at two ends can achieve basically same temperature regulation capability under other same conditions; and when the heat exchange assembly is applied to the battery, the heat exchange assembly can conveniently implement basically same temperature control on the battery cell at the outer side, thus the temperature difference of a plurality of battery cells can be reduced and the reliability of the battery can be improved.

In some embodiments, two end portions of each heat exchange tube are a first end portion and a second end portion separately, one of the first end portion and the second end portion is used for liquid intake and the other one is used for liquid output; all the first end portions of two adjacent heat exchange tubes that are arranged at an interval along the first direction are located between two second end portions of the two adjacent heat exchange tubes, and all the first end portions and all the second end portions of the two adjacent heat exchange tubes extend to the same converging position.

In the above technical solution, all the second end portions of the two adjacent heat exchange tubes that are arranged at the interval along the first direction are located between two first end portions of the two adjacent heat exchange tubes, and all the first end portions and all the second end portions of the two adjacent heat exchange tubes extend to the same converging position, so that the connection of the two adjacent heat exchange tubes to a liquid supply flow path and a liquid output flow path is simplified, and moreover, lengths of the liquid supply flow path and the liquid output flow path are reduced.

In some embodiments, two end portions of each heat exchange tube are the first end portion and the second end portion respectively; the first end portion is used for liquid intake and the second end portion is used for liquid output; the plurality of converging positions include a first converging position and a second converging position, the first end portion of each heat exchange tube extends to the first converging position, and the second end portion of each heat exchange tube extends to the second converging position; or, the first end portion of at least one heat exchange tube and the second end portion of at least one heat exchange tube extend to the first converging position, and the second end portion of at least one heat exchange tube and the first end portion of at least one heat exchange tube extend to the second converging position.

In the above technical solution, all the first end portions extend to the first converging position and all the second end portions extend to the second converging position, so that all the liquid intake ends and all the liquid output ends are separately arranged, which is conducive to connecting all the heat exchange tubes of the heat exchange assembly into a medium circulating system, thereby realizing parallel arrangement of the plurality of heat exchange tubes; and the first converging position and the second converging position correspond to at least one first end portion and at least one second end portion, so that different heat exchange requirements of the single battery can be flexibly met.

In some embodiments, the heat exchange assembly further includes at least one current collector; the current collectors correspond to the converging positions one by one; the current collectors are in communication with connectors of the plurality of end portions corresponding to the converging positions; or, the current collectors divide the connectors of the plurality of end portions corresponding to the converging positions into a plurality of independent flow channels.

In the above technical solution, the current collectors are arranged, and the plurality of end portions located at the same converging position share one current collector, thus the stability and reliability of the whole structure of the heat exchange assembly are conveniently improved on the premise that the medium in each heat exchange tube normally circulates.

In some embodiments, each heat exchange tube is further provided with a communication section connected between the two end portions; and central axes of at least the communication sections of all the heat exchange tubes are located on the same plane.

In the above technical solution, the central axes of all the heat exchange tubes are arranged on the same plane, so that the assembling consistency of the plurality of heat exchange tubes is improved, basically same heat resistance between each heat exchange tube and the corresponding battery cell is realized, and the heat exchange balance is improved.

In some embodiments, the heat exchange tubes are flat tubes or harmonica-shaped tubes.

In the above technical solution, the heat exchange tubes are arranged to be the flat tubes or the harmonica-shaped tubes, so that the space occupied by the heat exchange tubes is saved, moreover, the heat exchange between the sides of the heat exchange tubes in a thickness direction and the battery cells is facilitated, and the battery is balanced in volume energy density and heat management. For example, the heat exchange tubes can be extruded and molded, and a thickness of each heat exchange tube can be as small as about 0.7 mm; in related technologies, a structure of a water cooling plate is adopted, the water cooling plate generally includes two plate bodies which are stacked, the two plate bodies are welded and fixed and define the flow channel, so that the thickness of the water cooling plate is generally large and can be more than 2.4 mm; therefore, by means of above arrangement in the present application, the cost of the heat exchange assembly can be reduced, moreover, the space occupied by the heat exchange assembly is saved, and the battery can realize the improvement of the energy density when the heat exchange assembly is arranged in a box.

In some embodiments, each heat exchange tube is further provided with the communication section connected between two end portions, at least one heat exchange tube is constructed to be a first heat exchange tube, the communication section of the first heat exchange tube includes a first heat exchange section and a second heat exchange section, the second heat exchange section is bent to form a U-shaped area, and the first heat exchange section is bent and arranged in the U-shaped area and is connected to the second heat exchange section in a bent way.

In the above technical solution, the second heat exchange section is bent to form the U-shaped area, and the first heat exchange section is arranged in the U-shaped area in a bent way; when the first heat exchange tubes exchange heat with the plurality of battery cells, the U-shaped area formed by the second heat exchange section at the periphery can be opposite to the peripheral battery cell, the first heat exchange section in the U-shaped area is opposite to the internal battery cell, thus the first heat exchange tube can be make up an internal and external temperature difference caused by heat exchange between the peripheral battery cell and an environment, the heat exchange effects of the peripheral battery cell and the internal battery cell tend to be consistent, thereby improving the temperature uniformity of the battery, and prolonging the service life of the battery to a certain extent.

In some embodiments, the first heat exchange section includes a plurality of first heat exchange parts and first bending parts, the plurality of first heat exchange parts are arranged at intervals along the first direction, each first heat exchange part extends along a second direction, each first bending part is in an arc shape and is connected between two adjacent first heat exchange parts in a bent way, and thus the plurality of first heat exchange parts are sequentially connected; and an included angle is formed between the second direction and the first direction.

In the above technical solution, on one hand, the plurality of first heat exchange parts are arranged, so that a heat exchange area of the first heat exchange section can be increased, furthermore, the heat exchange area of the first heat exchange tubes can be increased, thereby improving the heat exchange effects of the first heat exchange tubes; and on the other hand, the internal battery cells are wrapped by the external battery cells, the temperature difference between the internal battery cells is not large, and thus, the overall heat exchange effect can be ensured on the premise of ensuring small temperature difference between the internal battery cells and the external battery cells by the plurality of first heat exchange parts.

In some embodiments, the second heat exchange section includes a second heat exchange part, a third heat exchange part, and a fourth heat exchange part; the second heat exchange part extends along a peripheral edge of a first side of the first heat exchange section; the third heat exchange part is connected between the second heat exchange part and the first heat exchange section and extends along a peripheral edge of a second side of the first heat exchange section; a first end of the third heat exchange part is connected to the second heat exchange part by an included angle; a second end of the third heat exchange part is connected to the first heat exchange section by an included angle; the fourth heat exchange part is in communication with the second heat exchange part and is connected to the second heat exchange part by an included angle; and the fourth heat exchange part extends along a peripheral edge of a third side of the first heat exchange section.

In the above technical solution, the second heat exchange part, the third heat exchange part, and the fourth heat exchange part are respectively arranged on three sides of the first heat exchange section, so that the second heat exchange section can encircle the first heat exchange section, the arrangement compactness of the first heat exchange tubes can be improved, the structure miniaturization of the first heat exchange tubes is realized, and the volume energy density of the battery is improved; and moreover, the structures of the first heat exchange tubes can be simplified, and the processing and production of the first heat exchange assembly are facilitated.

In some embodiments, the first heat exchange section includes the plurality of first heat exchange parts which are sequentially bent and connected in the first direction; the second heat exchange part is located on one side of the plurality of first heat exchange parts in the first direction, the third heat exchange part is located on one side of the plurality of first heat exchange parts in the second direction, and the first direction and the second direction are arranged by an included angle; the first end of the third heat exchange part is connected to one end of the second heat exchange part in the second direction, and the second end of the third heat exchange part is connected to one, which is farthest from the second heat exchange part, of the plurality of first heat exchange parts in the first direction; the fourth heat exchange part is located on the other side of the plurality of first heat exchange parts in the second direction; one end of the fourth heat exchange part is connected to one end of the second heat exchange part deviating from the third heat exchange part, and the other end of the fourth heat exchange part extends in the first direction towards a direction deviating from the second heat exchange part; or, the second heat exchange part is located on one side of the plurality of first heat exchange parts in the second direction, the third heat exchange part is located on one side of the plurality of first heat exchange parts in the first direction, and the first direction and the second direction are arranged by an included angle; and the first end of the third heat exchange part is connected to one end of the second heat exchange part in the first direction, and the second end of the third heat exchange part is connected to one, which is closest to the third heat exchange part, of the plurality of first heat exchange parts in the first direction; the fourth heat exchange part is located on the other side of the plurality of first heat exchange parts in the first direction; and one end of the fourth heat exchange part is connected to one end of the second heat exchange part deviating from the third heat exchange part, and the other end of the fourth heat exchange part extends in the second direction towards the direction deviating from the second heat exchange part.

In the above embodiment, the plurality of first heat exchange parts are sequentially connected in the first direction in the bent way, the second heat exchange part is arranged on one side of the plurality of first heat exchange parts in the first direction/the second direction, the third heat exchange part is arranged on one side of the plurality of first heat exchange parts in the second direction/the first direction, the fourth heat exchange part is arranged on the other side of the plurality of first heat exchange parts in the second direction/the second direction, therefore, a position relationship among the second heat exchange part, the third heat exchange part, and the fourth heat exchange part to the first heat exchange parts is limited, a layout of the first heat exchange tube is further limited, the structures of the first heat exchange tubes are simplified, and the convenience for processing and manufacturing is ensured.

In some embodiments, the second heat exchange section also includes a fifth heat exchange part; and the fifth heat exchange part extends along a peripheral edge of a fourth side of the first heat exchange section, and seals at least part of an opening of the U-shaped area formed by the second heat exchange part, the third heat exchange part, and the fourth heat exchange part.

In the above embodiment, by arranging the fifth heat exchange part, the second heat exchange section can perform heat exchange on the peripheral edges of the four sides of an assembly that is formed by all the battery cells, thus, the peripheral edges of the four sides of the assembly that is formed by all the battery cells can be subjected to heat exchange by the second heat exchange section of one first heat exchange tube, the heat exchange effect of the peripheral edges of the four sides of the battery is improved, and the temperature uniformity of the battery is improved.

In some embodiments, the first heat exchange section is connected to a downstream of the second heat exchange section along a fluid flowing direction; or, the first heat exchange tubes are configured as that when heating the battery cells, the first heat exchange section is connected to the downstream of the second heat exchange section along the fluid flowing direction, and when cooling the battery cells, the first heat exchange section is connected to an upstream of the second heat exchange section along the fluid flowing direction.

In the above technical solution, the first heat exchange section is connected to the downstream of the second heat exchange section in the fluid flowing direction, so that the first heat exchange flow channel can preferentially perform heat exchange on the periphery of an outer side of the battery, thus reducing the temperature difference of the battery in different environments, and prolonging the service life of the battery to a certain extent. The first heat exchange tubes are configured as that when heating the battery cells, the first heat exchange section is connected to the downstream of the second heat exchange section in the fluid flowing direction, and when cooling the battery cells, the first heat exchange section is connected to the upstream of the second heat exchange section in the fluid flowing direction, thereby further improving the heat exchange effect on the battery, and improving the temperature uniformity of the plurality of battery cells.

In some embodiments, at least one heat exchange tube is constructed to be a second heat exchange tube; the second heat exchange tubes and the first heat exchange tubes are arranged on the same side of the battery cell; communication sections of the second heat exchange tubes are arranged in the U-shaped areas of the first heat exchange tubes in a bent way; and the communication sections of the second heat exchange tubes and the communication sections of the first heat exchange tubes have the same or different bending structures.

In the above technical solution, by arranging the second heat exchange tubes, the diversity of the heat exchange flow channels of the heat exchange assembly can be increased, so that the arrangement of the heat exchange tubes is more flexible, the heat exchange effect of the heat exchange assembly can be further improved, and the temperature uniformity of the battery is improved.

In some embodiments, the communication sections of the second heat exchange tubes include U-shaped areas having the same structure as the communication sections of the first heat exchange tubes, and at least part of the communication sections of the first heat exchange tubes are arranged in the U-shaped areas of the second heat exchange tubes.

In the above technical solution, at least parts of the first heat exchange sections of the first heat exchange tubes are arranged in the U-shaped areas of the second heat exchange tubes, thus the first heat exchange tubes and the second heat exchange tubes can be arranged in a mutually winding way, the winding mode of the plurality of heat exchange tubes can be arranged according to the heat exchange demands of each part of the battery assembly, furthermore, the heat exchange effect of the heat exchange assembly is further improved, and the temperature uniformity of the battery is improved.

In some embodiments, the communication section of each second heat exchange tube includes a third heat exchange section and a fourth heat exchange section which are connected in a bent way, the third heat exchange section and the fourth heat exchange section are respectively bent to form U-shaped areas, the third heat exchange section is arranged in the U-shaped area of the fourth heat exchange section, and at least one part of the first heat exchange section of each first heat exchange tube is arranged in the U-shaped area of the third heat exchange section.

In the above technical solution, at least part of the first heat exchange sections of the first heat exchange tubes are arranged in the U-shaped areas of the third heat exchange sections, at least part of the first heat exchange sections of the first heat exchange tubes are also arranged in the U-shaped areas of the fourth heat exchange sections, thus the winding arrangement of the first heat exchange tubes and the second heat exchange tubes is conveniently simplified on the premise that the first heat exchange tube and the second heat exchange tube are arranged in the mutually winding way, moreover, the heat exchange effect is further improved, and the temperature uniformity of the battery is improved.
in some embodiments, the communication section of each second heat exchange tube also includes a fifth heat exchange section; the fifth heat exchange section includes a plurality of fifth heat exchange parts and second bending parts; the plurality of fifth heat exchange parts are arranged at intervals along a third direction; each fifth heat exchange part extends along a fourth direction; each second bending part is in an arc shape and is connected between two adjacent fifth heat exchange parts in a bent way, so that the plurality of fifth heat exchange parts are sequentially connected; the fourth direction and the third direction are arranged by an included angle; the fifth heat exchange sections are arranged between the third heat exchange sections and the fourth heat exchange sections, and/or, the fifth heat exchange sections are arranged between the third heat exchange sections and the corresponding end portions.

In the above technical solution, by arranging the fifth heat exchange sections, the heat exchange area of the second heat exchange tubes is further increased, thus the heat exchange effect of the second heat exchange tubes is improved, and moreover, the temperature control to the internal battery cell is facilitated; and the arrangement of the fifth heat exchange sections does not affect the mutual winding between the first heat exchange tubes and the second heat exchange tubes.

In some embodiments, at least one heat exchange tube is constructed to be a third heat exchange tube, and a communication section of the third heat exchange tube is arranged in the U-shaped area of each second heat exchange tube in a bent way.

In the above technical solution, the communication sections of the third heat exchange tubes are arranged in the U-shaped areas of the second heat exchange tubes in a bent way, so that good temperature control to the internal battery cells is further achieved, the temperature distribution in the whole battery is improved, and the temperature uniformity of the battery is improved.

In a second aspect, the embodiment of the present application provides the battery, which includes a box and battery cells that is arranged in the box; the battery further includes at least one of a first heat exchange assembly, a second heat exchange assembly, and a third heat exchange assembly; at least one of the first heat exchange assembly, the second heat exchange assembly, and the third heat exchange assembly is configured to exchange heat with the battery cells and is the abovementioned heat exchange assembly; the first heat exchange assembly is arranged in the box and is located between the battery cells and the box; the second heat exchange assembly is arranged outside the box; and the third heat exchange assembly is arranged between two adjacent battery cells.

In the above technical solution, at least one of the first heat exchange assembly, the second heat exchange assembly, and the third heat exchange assembly is arranged as the heat exchange assembly and is configured to exchange heat with the battery cell; and the heat exchange assembly is convenient to assemble and seal, so that the assembling efficiency of the battery is improved.

In some embodiments, the battery includes a first heat exchange assembly and a fixed beam; the fixed beam is arranged in the box and divides an internal space of the box into a first chamber and a second chamber; a part of the first heat exchange assembly and the battery cells are arranged in the first chamber; at least one avoiding channel is formed between the fixed beam and the box; and all the end portions at converging positions penetrate through the corresponding avoiding channel so as to extend to the second chamber from the first chamber.

In the above technical solution, at least one avoiding channel is formed between the fixed beam and the box, and all the end portions at the converging positions penetrate through the corresponding avoiding channels so as to extend to the second chamber from the first chamber, thus the assembling of all the end portions at the converging positions and the fixed beam is facilitated, all the end portions at the converging positions can extend to the second chamber without bending around the fixed beam, which simplifies the structures of all the end portions at the converging positions; moreover, by arranging the avoiding channels, connectors of the end portions can be located in the second chamber, namely, the connectors of the end portions and the battery cells are located in different chambers, thus the box is convenient to provide a proper arrangement space for communication between the connectors of the end portions and other components, and the communication between the end portions and other components is facilitated; and moreover, the connectors of the end portions can be separated from the battery cells in position by the fixed beam, which reduces the influence of heat exchange medium leakage at the connector positions of the end portions on the battery cells, and improving use reliability of the battery cells.

In some embodiments, the fixed beam is provided with a first concave part, and/or, a wall of the box is provided with a second concave part, and the first concave part and/or the second concave part form the avoiding channels.

In the above technical solution, the first concave part and/or the second concave part are/is arranged to form the avoiding channels, so that the avoiding channels are convenient to mold; meanwhile, the avoiding channels have a suitable cross section area for accommodating all the end portions corresponding to the converging positions according to requirements, so that the cross section area of the avoiding channels can be properly reduced on the premise that all the end portions at the converging positions are smoothly arranged in a penetrating manner; and the molding difficulty of the avoiding channels is easy to reduce, and/or, the weakening on the fixed beam is easy to reduce.

In some embodiments, parts, located on two opposite sides of the fixed beam, of all the end portions at the converging positions are connected in an obtuse angle manner.

In the above technical solution, the parts, located on the two opposite sides of the fixed beam, of all the end portions at the converging positions are connected in the obtuse angle manner, so that one end of all the end portions at the converging positions is aligned to the corresponding avoiding channel in the assembling process of the first heat exchange assembly, at the moment, the first heat exchange assembly is roughly obliquely arranged; an inclined angle of the first heat exchange assembly gradually reduces along with the penetrating of all the end portions at the converging positions until all the end portions at the converging positions are arranged in the penetrating manner; and at the moment, the first heat exchange assembly is mostly fitted with a corresponding wall of the box, so that the penetrating of all the end portions at the converging positions is convenient to realize, and the mounting convenience of the first heat exchange assembly is easy to improve.

In some embodiments, the first heat exchange assembly further includes at least one current collector; the current collectors are located in the second chamber and correspond to the converging positions one by one; and the current collectors are in communication with the connectors of the plurality of end portions corresponding to the converging positions, or, the current collectors divide the connectors of the plurality of end portions corresponding to the converging positions into a plurality of independent channels.

In the above technical solution, the current collectors are arranged; the plurality of end portions at the same converging position share one current collector, thus the stability and the reliability of the whole structure of the heat exchange assembly are improved on the premise that the medium in each heat exchange tube normally circulates; moreover, the current collectors are arranged in the second chamber, and do not occupy the spaces of the avoiding channels or the first chamber, so that the energy density of the battery is not easily influenced by the arrangement of the current collectors, and the arrangement of the fixed beam and/or the box is not easily influenced.

In some embodiments, the avoiding channels are configured to allow the corresponding current collectors to pass through.

In the above technical solution, the avoiding channels are configured to allow the corresponding current collectors to pass through, the heat exchange tubes can be fixedly connected to the current collectors, and after the fixed beam and the box are assembled, the structure for connecting the heat exchange tubes with the current collectors is assembled to the box, so that an enough operation space is provided when connecting the heat exchange tubes with the current collectors, and the operation of connecting the heat exchange tubes with the current collectors is facilitated.

In some embodiments, the fixed beam is constructed to be an expansion beam and is provided with a first matching surface that is abutted against the battery cells; the battery further includes a bearing member, the bearing member is arranged in the avoiding channels and is provided with a second matching surface that is abutted against the battery cells, and the first matching surface is flush with a second matching surface; the bearing member is provided with a notch for avoiding the end portions corresponding to the converging position; and the notch penetrates through the periphery of the bearing member.

In the above technical solution, the bearing member is arranged in the avoiding channels, and the second matching surface is flush with the first matching surface, thus the bearing member and the fixed beam can bear an expansion force of the battery cells together, the risk of lithium precipitation that is easily caused by excessive deformation difference of the battery cells at the avoiding channel positions and other positions is reduced, moreover, the risk of shell breakage and electrolyte leakage caused by non-uniform stress of the battery cells is also reduced, thereby improving the use reliability of the battery.

In some embodiments, a stop part that is in abutting fit the bearing member is formed on at least one of the fixed beam and the box so as to limit movement of the bearing member from the first chamber to the second chamber.

In the above technical solution, the stop part is formed on at least one of the fixed beam and the box so as to limit the movement of the bearing member from the first chamber to the second chamber, so that reliable limitation to the bearing member in a width direction of the fixed beam is achieved, and the bearing member has a certain bearing capability to bear the expansion force of the battery cells.

In some embodiments, the stop part is formed at the avoiding channel position on the side of the fixed beam facing the first chamber, and/or, a stop step that protrudes towards the fixed beam is formed on a wall, provided with the first heat exchange assembly, of the box and; and the stop step forms the stop part.

In the above technical solution, the stop part is formed at the avoiding channel position on the side of the fixed beam facing the first chamber, and/or, the stop step forming the stop part is formed on the wall of the box, so that limitation to the bearing member is achieved, the limitation reliability of the bearing member is improved, and the bearing capability of the bearing member is improved.

In some embodiments, on a cross section of the fixed beam, the stop part on the fixed beam is formed into an arc-shaped structure, and a cross section of the fixed beam is vertical to a length direction of the fixed beam.

In the above technical solution, the stop part on the fixed beam is formed into the arc-shaped structure, so that on the premise that the stop part can achieve reliable limitation to the bearing member, the part of the bearing member matched with the stop part can be avoided to a certain extent, the bearing member is greatly prevented from easily protruding out of the first matching surface towards the first chamber due to matching with the stop part, and the second matching surface and the first matching surface can be arranged in a flush manner.

In some embodiments, the bearing member includes a plate body part and a matching part, a surface of the side of the plate body part in the thickness direction forms the second matching surface, and the notch penetrates the two sides of the plate body part in the thickness direction; and the matching part is formed on an outer edge of the plate body part and is in abutting fit with the fixed beam, so that movement of the bearing member from the first chamber to the second chamber is limited.

In the above technical solution, the bearing member includes the plate body part and the matching part, the plate body part can provide a large-area flat second matching surface, thus the shielding capacity of the bearing member to the avoiding channels is improved, and the bearing member is simple in structure and convenient to achieve.

In some embodiments, the matching part is provided with a first surface and a second surface, the first surface is an arc-shaped surface that is sunken towards the second surface and is matched with the fixed beam, and the second surface is connected to the first surface and is arranged in a flush manner with the second matching surface.

In the above technical solution, the first surface of the matching part is in abutting fit with the fixed beam, and the second surface is arranged in a flush manner with the second matching surface, thus limiting matching of the bearing member and the fixed beam is achieved; and moreover, the matching part cannot protrude out of the second matching surface towards the first chamber, and the matching between the second matching surface and the battery cell cannot be influenced.

In some embodiments, at least one clamping hole is formed in the expansion beam; the bearing member further includes at least one clamping hook part; the clamping hook part is formed at an outer edge of the plate body part and is located on the side of the plate body part deviating from the second matching surface; and the clamping hook part is clamped in the corresponding clamping hole.

In the above technical solution, the clamping hole is formed, and the clamping hook part is clamped in the corresponding clamping hole to limit the bearing member to move from the second chamber to the first chamber, thus the installation reliability of the bearing member can be further improved, the problem that the bearing member is prone to being separated from the avoiding channels in the direction from of the second chamber to the first chamber in the battery assembling process is solved, and the battery assembling efficiency can be further improved.

In some embodiments, the bearing member further includes at least one support part; the support part is arranged on the side of the plate body part deviating from the second matching surface and avoids the first heat exchange assembly; and the support part is in butting fit with the box in a butting mode.

In the above embodiment, the support part is arranged, thus the structural strength and the bearing capacity of the bearing member can be further improved; moreover, because the support part abuts against the box, the limiting reliability to the bearing member in the width direction of the expansion beam can be further improved, and the bearing capacity of the bearing member can be improved.

In some embodiments, the bearing member is arranged between the first heat exchange assembly and the fixed beam, and a heat conductivity coefficient of the bearing member is less than that of the fixed beam; and/or, the bearing member and the first heat exchange assembly are arranged at an interval.

In the above technical solution, the heat conductivity coefficient of the bearing member is less than that of the fixed beam, and/or, the bearing member and the first heat exchange assembly are arranged at the interval, thus thermal resistance between the first heat exchange assembly and the fixed beam can be increased, a heat exchange amount of the first heat exchange assembly to the bearing member and the expansion beam can be reduced, a proportion of heat or cold transferred to the battery cells by the first heat exchange assembly can be increased, and the heat management performance can be improved.

In some embodiments, a strength of a material of the bearing member is at least 0.8 time of the strength of the material of the fixed beam.

In the above technical solution, the strength of the material of the bearing member is at least 0.8 time of the strength of the material of the fixed beam, so that the bearing member has a good bearing capability and can reliably and stably bear the expansion force of the battery cells.

In some embodiments, the first heat exchange assembly is arranged on a bottom wall of the box; the end of the second matching surface facing the first heat exchange assembly is flush with the ends of the battery cells facing the first heat exchange assembly, or, the end of the second matching surface facing the first heat exchange assembly is adjacent to the first heat exchange assembly relative to the ends of the battery cells facing the first heat exchange assembly.

In the above technical solution, the end of the second matching surface facing the first heat exchange assembly is flush with the ends of the battery cells facing the first heat exchange assembly, or, the end of the second matching surface facing the first heat exchange assembly is arranged adjacent to the first heat exchange assembly relative to the ends of the battery cells facing the first heat exchange assembly, so that the whole surfaces of the battery cells facing the expansion beam can be supported, the stress uniformity of the battery cells is improved when the battery cells are expanded and deformed, and the problems of lithium precipitation, liquid leakage and the like caused by non-uniform stress are reduced, and furthermore, the use reliability of the battery is improved.

In some embodiments, the battery includes the first heat exchange assembly and the fixed beam; the fixed beam is constructed to be the first expansion beam and is arranged in the box; the first heat exchange assembly and the fixed beam are arranged at an interval, so that heat insulation between the first heat exchange assembly and the fixed beam is realized.

In the above technical solution, the first heat exchange assembly and the fixed beam are arranged at the interval, so that the heat insulation between the first heat exchange assembly and the fixed beam is realized, the heat exchange amount between the first heat exchange assembly and the fixed beam is reduced, the amount of heat or cold transferred to the fixed beam by the first heat exchange assembly is reduced, the proportion of the heat or cold transferred to the battery cells by the first heat exchange assembly is increased, and the heat management performance of the battery is improved.

In some embodiments, the fixed beam divides the internal space of the box into the first chamber and the second chamber, a part of the first heat exchange assembly and the battery cell are arranged in the first chamber, at least one avoiding channel is formed between the fixed beam and the box, all the end portions of the converging position penetrate through the corresponding avoiding channels to extend from the first chamber to the second chamber; and the wall surface of the fixed beam corresponding to the avoiding channels and the first heat exchange assembly are arranged at an interval.

In the above technical solution, at least one avoiding channel is formed between the fixed beam and the box, and all the end portions at the converging positions penetrate through the corresponding avoiding channels so as to extend to the second chamber from the first chamber, thus the assembling of all the end portions at the converging positions and the fixed beam is facilitated, all the end portions at the converging positions can extend to the second chamber without bending around the fixed beam, which simplifies the structures of all the end portions at the converging positions; moreover, by arranging the avoiding channels, connectors of the end portions can be located in the second chamber, namely, the connectors of the end portions and the battery cells are located in different chambers, thus the box is convenient to provide a proper arrangement space for communication between the connectors of the end portions and other components, and the communication between the end portions and other components is facilitated; and moreover, the connectors of the end portions can be separated from the battery cells in position by the fixed beam, which reduces the influence of heat exchange medium leakage at the connector positions of the end portions on the battery cells, and improving use reliability of the battery cells.

In some embodiments, the second concave part is formed in the wall of the box, and the second concave part forms at least part of the avoiding channels; the part, penetrating through the avoiding channels, of the first heat exchange assembly is arranged in the second concave part; and the expansion beam is attached to the part, except the second concave part, of the wall of the box; or, the expansion beam and the part, except the second concave part, of the wall of the box are arranged at an interval.

In the above technical solution, the fixed beam is arranged to be attached to the part, except the second concave part, of the wall of the box; for the fixed beam and the wall of the box, the fixed beam and the wall of the box are spaced at a penetrating position of the first heat exchange assembly, namely the fixed beam and the second concave part are spaced, so that the heat insulation between the fixed beam and the first heat exchange assembly is realized while the first heat exchange assembly is avoided; the fixed beam and the wall of the box are attached at the position without the first heat exchange assembly penetrated, namely the fixed beam and the wall of the box are not attached, thus the matching area of the fixed beam and the box is increased, and the mounting reliability of the fixed beam is improved; the fixed beam and the part, except the second concave part, of the wall of the box are arranged at an interval, so that the interval between the whole fixed beam and the first heat exchange assembly is further increased, the heat resistance between the whole fixed beam and the first heat exchange assembly is improved, the amount of heat or cold transferred to the fixed beam by the first heat exchange assembly is reduced, and the energy utilization rate of the first heat exchange assembly is improved.

In some embodiments, the battery further includes a heat insulation member which includes a first heat insulation part; and the first heat insulation part is arranged between the wall surface of the fixed beam corresponding to the avoiding channels and the first heat exchange assembly.

In the above technical solution, the first heat insulation part is located between the wall surface of the fixed beam corresponding to the avoiding channels and the first heat exchange assembly, thus the first heat insulation part corresponds to the second concave part, and the heat resistance between the fixed beam and the first heat exchange assembly is further increased by the heat insulation member.

In some embodiments, the heat insulation member further includes a second heat insulation part which is arranged between the part, except the second concave part, of the wall of the box and the fixed beam.

In the above solution, the second heat insulation part is arranged between the part, except the second concave part, of the wall of the box and the fixed beam, the heat insulation member is conveniently clamped between the box and the fixed beam, the heat insulation member can be reliably mounted by means of the fixation of the fixed beam and the box, thus the heat insulation member conveniently provides a relatively flat matching surface for connecting the box with the fixed beam, meanwhile, the depth of the second concave part is reduced, and the molding convenience of the second concave part is improved.

In some embodiments, a first fixing member is further arranged on the fixed beam, and at least part of the first fixing member is located in the fixed beam; and the battery further includes a second fixing member, and the second fixing member penetrates through the box, the second heat insulation part, and the fixed beam and is connected to the first fixing member.

In the above technical solution, at least part of the first fixing member is located in the fixed beam, and the second fixing member penetrates through the box, the second heat insulation part, and the fixed beam and is connected to the first fixing member, so that the fixation of the box, the heat insulation member, and the fixed beam is realized by a simple fixing mode, and meanwhile, the heat insulation member can be reliably mounted; and moreover, the second fixing member can be mounted towards the fixed beam along the heat insulation member, so that an enough operation space is provided in the assembling process of the second fixing member, and the assembling convenience is improved. In addition, the second fixing member penetrates through the second heat insulation part, thus the second fixing member and the heat exchange tube are spaced, and the arrangement of the second fixing member does not influence the heat exchange tubes.

In some embodiments, the box includes a first box body; the first box body is an integrated punch forming member and includes a bottom wall and an enclosure, the enclosure is arranged around the bottom wall, and the first heat exchange assembly is arranged between at least one of the bottom wall and the enclosure and the battery cell.

In the above technical solution, the first box body including the bottom wall and the enclosure is arranged to be the integrated punch forming part, thus, the first box body is convenient to mold, the cost of the first box body is favorably reduced, and the first box body has high structural strength; and meanwhile, the sealing between the bottom wall and the enclosure is achieved by the structure of the first box body, the sealing performance of the bottom of the first box body is improved, so that a plurality of connecting members (such as bolts) for achieving sealing of the bottom of the first box body in the box can be saved, the connection process for the bottom wall and the enclosure is saved, and the assembling efficiency of the box is favorably improved.

In a third aspect, the embodiment of the present application provides the electrical apparatus which includes the above battery.

In the above technical solution, the above battery is used, which has good assembling efficiency, and is conducive to improving the production efficiency of the electrical apparatus.

### BRIEF DESCRIPTION OF THE DRAWINGS

These and other aspects and advantages of embodiments of the present application will become apparent and more readily appreciated from the following descriptions made with reference to the drawings. Where:
FIG. 1 is a schematic structural view of a vehicle according to some embodiments of the present application;
FIG. 2 is a structural explosion diagram of a battery provided by some embodiments of the present application;
FIG. 3 is a schematic diagram of a heat exchange assembly provided by some embodiments of the present application;
FIG. 4 is a schematic diagram of coordination between a heat exchange assembly and a plurality of battery cells shown in FIG. 3;
FIG. 5 is a schematic diagram of a heat exchange assembly provided by other embodiments of the present application;
FIG. 6 is a schematic diagram of a heat exchange assembly provided by another embodiments of the present application;
FIG. 7 is a schematic diagram of a heat exchange assembly provided by yet another embodiments of the present application;
FIG. 8 is a local schematic diagram of a battery provided by some embodiments of the present application;
FIG. 9 is a schematic diagram of a third heat exchange assembly and a battery cell provided by some embodiments of the present application;
FIG. 10 is a local schematic diagram of a battery provided by some embodiments of the present application;
FIG. 11 is a schematic diagram of an assembling process of a first heat exchange assembly at a sectional position along an A-A line in FIG. 10;
FIG. 12 is a partial enlarged view of an assembling process of a first heat exchange assembly in FIG. 11;
FIG. 13 is a sectional view along a B-B line in FIG. 10;
FIG. 14 is a sectional view of a C-C line in FIG. 10;
FIG. 15 is a sectional view of a D-D line in FIG. 10;
FIG. 16 is a partial sectional view of a box provided by some embodiments of the present application;
FIG. 17 is a local schematic diagram of a battery provided by some embodiments of the present application;
FIG. 18 is a front view of a bearing member shown in FIG. 17;
FIG. 19 is a top view of a bearing member shown in FIG. 18;
FIG. 20 is a cross-sectional view along an E-E line in FIG. 18;
FIG. 21 is a side view of a bearing member shown in FIG. 18;
FIG. 22 is a local schematic diagram of a battery provided by some embodiments of the present application;
FIG. 23 is an exploded view of a battery shown in FIG. 22;
FIG. 24 is a cross-sectional view of a battery shown in FIG. 22;
FIG. 25 is an enlarged view of a part F as circled in FIG. 24;
FIG. 26 is a local schematic diagram of a battery provided by some embodiments of the present application;
FIG. 27 is a cross-sectional view along a G-G line in FIG. 26;
FIG. 28 is an enlarged view of a part H as circled in FIG. 27; and
FIG. 29 is another schematic diagram of a battery shown in FIG. 26.

### Reference numerals:

1000, electrical apparatus; 300, controller; 400, motor; 200, battery; 200a, avoiding channel; 200b, first side; 200c, second side; 200d, clamping hole; 100, battery cell; 101, box; 101a, first chamber; 101b, second chamber; 101c, second concave part; 101d, third concave part; 1011, first box body; 1011a, bottom wall; 1011b, enclosure; 1011c, stop step; 1011d, first mounting hole; 1012, second box body; 102, first heat exchange assembly; 103, second heat exchange assembly; 104, third heat exchange assembly; 105, fixed beam; B1, first expansion beam; B2, second expansion beam; B3, third expansion beam; 1050a, third mounting hole; 105a, first concave part; 105b, first matching surface; 106, bearing member; 106a, second matching surface; 106b, notch; 106c, stop part; 1061, plate body part; 1062, matching part; 1062a, first surface; 1062b, second surface; 1063, clamping hook part; 1064, support part; 107, heat insulation member; 1071, first heat insulation part; 1072, second heat insulation part; 1072a, second mounting hole; 1081, first fixing member; 1082, second fixing member; 1083, gasket; 113, bottom protection plate, 110, heat exchange assembly; L, center line; R, converging position; R1, first converging position; R2, second converging position; 1, heat exchange tube; 1a, first heat exchange tube; 1b, second heat exchange tube; 1c, third heat exchange tube; 11, end portion; 11a, first end portion; 11b, second end portion; 12, communication section; 120, U-shaped area; 121, first heat exchange section; 1211, first heat exchange part; 1212, first bending part; 122, second heat exchange section; 1221, second heat exchange part; 1222, third heat exchange part; 1223, fourth heat exchange part; 1224, fifth heat exchange part; 123, third heat exchange section; 1231, seventh heat exchange part; 1232, eighth heat exchange part; 1233, ninth heat exchange part; 124, fourth heat exchange section; 1241, tenth heat exchange part; 1242, eleventh heat exchange part; 1243, twelfth heat exchange part; 125, fifth heat exchange section; 1251, sixth heat exchange part; 1252, second bending part; 126, sixth heat exchange part; 127, seventh heat exchange part; 1271, thirteenth heat exchange part; 1272, third bending part; 128, eighth heat exchange section; and 2, current collector.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearances of the phrase in various places in the specification neither necessarily refer to a same embodiment, nor are independent or alternative embodiments mutually exclusive with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. Battery cells are generally divided into three kinds according to packaging manners: cylindrical battery cells, square battery cells, and pouch cells. The embodiments of the present application do not limit this.

A battery mentioned in the embodiments of the present application refers to a single physical module including a plurality of battery cells to provide a higher voltage and capacity. For example, the battery mentioned in the present application may be a battery module, a battery pack, or the like. The battery module generally includes a plurality of battery cells. The battery generally includes a box for packaging a plurality of battery cells or a plurality of battery modules, and the box can prevent liquid or other foreign matters from influencing charging or discharging of the battery cells; and certainly, the battery also can not include the box.

By way of example, each battery cell generally includes a shell, a cell assembly, and an electrolyte solution; the shell is configured to accommodate the battery cell assembly and the electrolyte solution; and at least one positive electrode post terminal and at least one negative electrode post terminal are arranged on the shell. The battery cell assembly includes one or more electrode assemblies, and each electrode assembly is formed by stacking or winding a positive electrode plate, a negative electrode plate, and a separator.

The positive electrode plate usually includes a positive electrode current collector and a positive electrode active material layer. The positive electrode active material layer is coated on the positive electrode current collector directly or indirectly. The positive electrode current collector not coated with the positive electrode active material layer protrudes out of the positive electrode current collector coated with the positive electrode active material layer, and the positive electrode current collector not coated with the positive electrode active material layer serves as a positive tab. A plurality of positive tabs are stacked together and are electrically connected to the positive electrode terminal post. For example, the plurality of stacked positive tabs can be directly welded to the positive electrode terminal post to form an electrical connection. Alternatively, the cell assembly may further include a positive electrode adapter plate. The plurality of stacked positive tabs are welded to one end of the positive electrode adapter plate, and the other end of the positive electrode adapter plate is welded to the positive electrode terminal post, to form an electrical connection between the positive tabs and the positive electrode terminal post.

The negative electrode plate includes a negative electrode current collector and a negative electrode active material layer. The negative electrode active material layer is coated on the surface of the negative electrode current collector. The negative electrode current collector not coated with the negative electrode active material layer protrudes out of the negative electrode current collector coated with the negative electrode active material layer, and the negative electrode current collector not coated with the negative electrode active material layer serves as a negative tab. A plurality of negative tabs are stacked together and are electrically connected to the negative electrode terminal post. For example, the plurality of stacked negative tabs can be directly welded to the negative electrode terminal post to form an electrical connection. Alternatively, the cell assembly may further include a negative electrode adapter plate. The plurality of stacked negative tabs are welded to one end of the negative electrode adapter plate, and the other end of the negative electrode adapter plate is welded to the negative electrode terminal post, to form an electrical connection between the negative tabs and the negative electrode terminal post. A material of the separator is not limited, and may be polypropylene, polyethylene, or the like.

In recent years, new energy vehicles have made significant advancements. In the field of electric vehicles, batteries, as the sources of power for electric vehicles, play an irreplaceable important role. The battery, as a core part of a new energy automobile, has relatively high requirements on both energy density and assembling efficiency.

In related technologies, the battery utilizes a heat exchange assembly to implement temperature control on the battery cells, but the heat exchange assembly is relatively troublesome to align with other components in the assembling process, influencing the assembling efficiency.

In view of above, in order to improve the assembling efficiency, the heat exchange assembly is provided; the heat exchange assembly is configured to exchange heat with the battery cells and includes a plurality of heat exchange tubes; each heat exchange tube has two end portions; when one of the two end portions is used for liquid intake, the other one is used for liquid output; at least one side of the periphery of the heat exchange assembly locally forms a converging position; and at least one end portion of each heat exchange tube extends to the converging position.

In the above technical solution, the at least one side of the periphery of the heat exchange assembly locally forms the converging position, and the at least one end portion of each heat exchange tube extends to the converging position, so that the converging positions correspond to a plurality of end portions; the plurality of end portions corresponding to the converging positions are arranged in a relatively centralized manner, thereby quickly and simultaneously aligning the plurality of end portions corresponding to the converging positions with other components (such as a current collector, a fixed beam, and an expansion beam described in the following) in an assembling process of the heat exchange assembly, facilitating to improve the assembling convenience and assembling efficiency of the heat exchange assembly while realizing good assembling precision of each end portion. In addition, if it is needed to seal the whole heat exchange assembly, the plurality of end portions can be directly sealed at the converging position, which simplifies the sealing to the heat exchange assembly; and when the other components are provided with avoiding structures for avoiding the converging positions, the above arrangement is also beneficial to reducing the number of the avoiding structures, and meanwhile, if the avoiding structures will weaken the structural strength of the other components to a certain extent, such arrangement is beneficial to reducing the weakening of the avoiding structures on the other components.

An embodiment of the present application provides an electrical device that uses the disclosed battery as a power source, and the electrical device may be but not limited to a mobile phone, a tablet personal computer, a laptop computer, an electric toy, an electric tool, a battery car, an electric vehicle, a ship, a spacecraft, and the like. The electric toys can include stationary or mobile electric toys, such as game consoles, electric toy cars, electric toy ships, and electric toy planes. The spacecraft can include airplanes, rockets, space shuttles, and spacecraft, etc. The electric tools include metal-cutting electric tools, grinding electric tools, assembly electric tools, and electric tools for railways, such as electric drills, electric grinders, electric wrenches, electric screwdrivers, electric hammers, impact drills, concrete vibrators, and electric planers.

In the following embodiments, for the sake of convenience, a vehicle is used as an example of the electrical apparatus to describe and the structure of the electrical apparatus and battery in present application in detail.

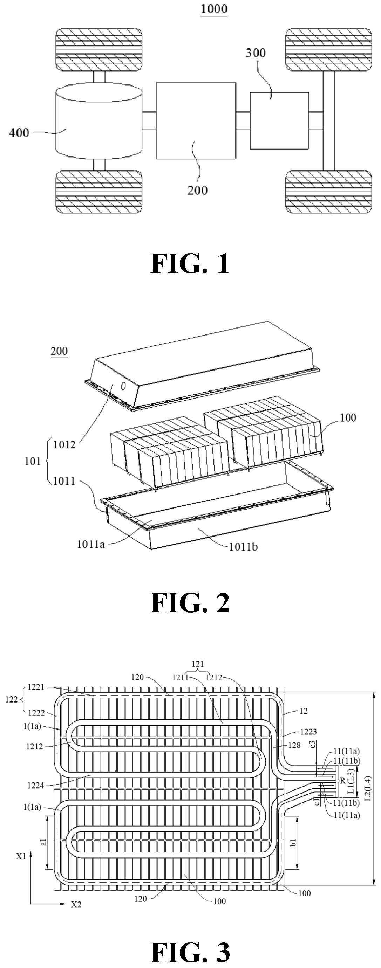

With reference to FIG. 1, FIG. 1 is a schematic structural diagram of a vehicle serving as an electrical apparatus 1000 provided by some embodiments of the present application. The vehicle may be a fuel vehicle, a gas vehicle, or a new energy vehicle, and the new energy vehicle may be a battery electric vehicle, a hybrid electric vehicle, an extended range vehicle, or the like. A battery 200 is arranged in the vehicle. The battery 200 may be arranged at a bottom or head or tail of the vehicle. The battery 200 may be configured to supply power the vehicle. For example, the battery 200 may be used as an operating power source of the vehicle. The vehicle may further include a controller 300 and a motor 400. The controller 300 is configured to control the battery 200 to supply power to the motor 400, for example, to meet a demand for working power during starting, navigation, and driving of the vehicle. In some embodiments of the present application, the battery 200 may be used not only as an operating power source of the vehicle, but also as a driving power source of the vehicle, replacing or partially replacing fuel or natural gas to provide driving power for the vehicle.

Referring to FIG. 2, FIG. 2 is an exploded structural view of a battery cell 100 used in a battery 200 according to some embodiments of the present application. The battery 200 include a box 101 and a plurality of battery cells 100. The battery cells 100 are accommodated in the box 101. The box body 101 is configured to provide an assembling space for the battery cells 100, and the box body 101 can be of various structures. In some embodiments, a box body 101 may include a first box 1011 and a second box 1012 which are mutually covered and jointly define an accommodating space used for accommodating a battery cell 100. The second box body 1012 can be of a hollow structure with one end opened; the first box body 1011 can be of a plate-shaped structure, and covers the open side of the second box body 1012, so that the first box body 1011 and the second box body 1012 jointly define the accommodating space; each of the first box body 1011 and the second box body 1012 can also be of a hollow structure with one side opened (as shown in FIG. 2); and the open side of the first box body 1011 covers the open side of the second box body 1012. Definitely, the box body 101 formed by the first box 1011 and the second box 1012 can be in various shapes, such as a cylinder or a cuboid.

In the battery 200, the plurality of battery cells 100 can be connected in series or in parallel or in series-parallel, and the series-parallel connection refers to that the plurality of battery cells 100 are connected in series and in parallel. The plurality of battery cells 100 can be directly connected in series or in parallel or in series-parallel, and then the whole body formed by the plurality of battery cells 100 is accommodated in the box body 101; or, the battery 200 can also be that the plurality of battery cells 100 are connected in series or in parallel or in series-parallel to obtain a battery module form, and then a plurality of battery modules are connected in series or in parallel or in series-parallel to form the whole body that is accommodated in the box body 101. The battery 200 can also include other structures, for example, the battery 200 can also include a busbar for realizing electric welding among the plurality of battery cells 100.

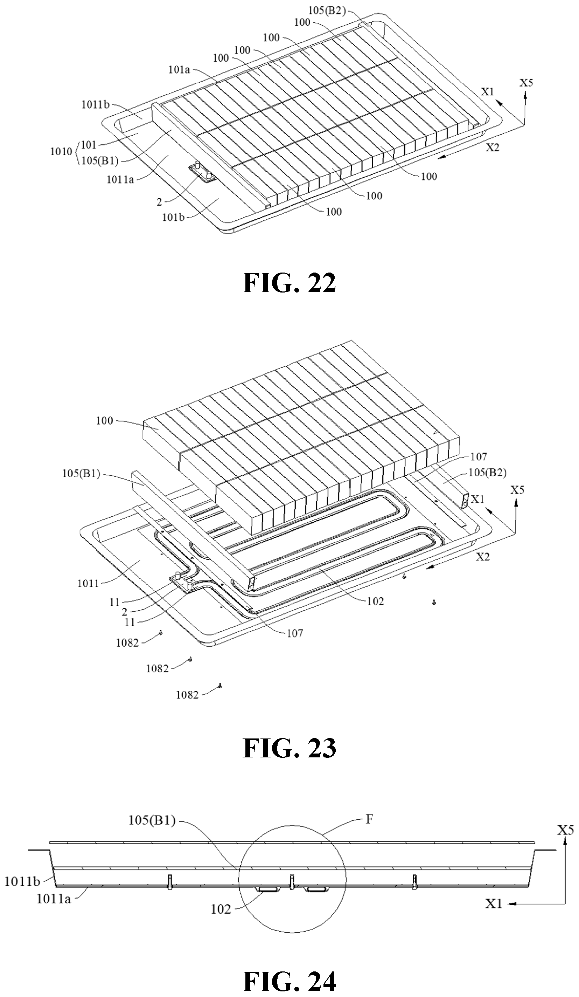

With reference to FIG. 3 and FIG. 22, any two of a first direction X1, a second direction X2, and a fifth direction X5 intersect, and further, any two of the first direction X1, the second direction X2, and the fifth direction X5 are vertical to each other.

With reference to FIG. 3 to FIG. 7, in the embodiments of the present application, the heat exchange assembly 110 is configured to exchange heat with battery cells 100 to regulate the temperature of the battery cells 100, which facilitates heat management to the battery cells 100; and the heat exchange assembly 110 includes a plurality of heat exchange tubes 1, each heat exchange tube 1 has two end portions 11, and when one of the two end portions 11 is used for liquid intake, the other one is used for liquid output.

The heat exchange assembly 110 can be configured to only cool the battery cells 100, or, the heat exchange assembly 110 is configured to only heat the battery cells 100, or, the heat exchange assembly 10 is constructed to be capable of cooling and heating the battery cells 100.

For example, two end portions 11 of each heat exchange tube 1 are a first end portion 11a and a second end portion 11b respectively, the first end portion 11a is used for liquid intake, and the second end portion 11b is used for liquid output, or, the second end portion 11b is used for liquid intake, and the first end portion 11a is used for liquid output. It is to be understood that in the embodiment of the present application, the heat exchange assembly 110 is constructed as that one of the two end portions 11 of at least one heat exchange tube 1 is always used for liquid intake, and the other one is always used for liquid output; and/or, each end portion 11 of the at least one heat exchange tube 1 can be switched between liquid intake and liquid output.

As shown in FIG. 3, at least one side of the periphery of the heat exchange assembly 110 locally forms a converging position R, the local part is defined as that the size occupied by the converging position R on the corresponding side of the heat exchange assembly 110 is smaller than the size of the corresponding side of the heat exchange assembly 110, for example, the size L1 occupied by the converging position R on the corresponding side of the heat exchange assembly 110 along the direction X1 is smaller than the size L3 occupied on the heat exchange assembly 110 along the direction X1 in FIG. 3. Moreover, at least one end portion 11 of each heat exchange tube 1 extends to the converging position R; for single converging position R, it can correspond to at least two end portions 11 in the heat exchange assembly 110, and the at least two end portions 11 are converged. All the end portions 11 corresponding to the converging positions R can belong to the same heat exchange tube 1, or all the end portions 11 corresponding to the converging positions R can belong to different heat exchange tubes 1, or two of all the end portions 11 corresponding to the converging position R belong to the same heat exchange tube 1, and there are also two end portions 11 belonging to different heat exchange tubes 1.

It is to be understood that all the end portions 11 corresponding to the converging positions R are used for liquid intake, or all the end portions 11 corresponding to the converging position R are used for liquid output, or part of all the end portions 11 corresponding to the converging position R are used for liquid intake, and the rest are used for liquid output. For example, the converging positions R correspond to two end portions 11 of at least one heat exchange tube 1 in the heat exchange assembly 110, and/or, the converging positions R can correspond to one end portion 11 of at least two heat exchange tubes 1 in the heat exchange assembly 110.

For the heat exchange assembly 110, one or a plurality of converging positions R can be provided. When the plurality of converging positions R are provided, the plurality of converging positions R can be located on the same side of the periphery of the heat exchange assembly 110, or located on different sides of the periphery of the heat exchange assembly 110. For a single heat exchange tube 1, one of two end portions 11 extends to the corresponding converging position R, and the other extends to other positions except the converging position R. Or the two end portions 11 extend to the converging positions R respectively, and at the moment, the two end portions 11 of the heat exchange tube 1 can extend to the same converging position R or different converging positions R.

It is to be understood that the periphery of the heat exchange assembly 110 can include a plurality of sides; at least one side of the plurality of sides locally forms the converging position R; and the size occupied by the converging positions R on the corresponding side of the heat exchange assembly 110 is smaller than the size of the corresponding side of the heat exchange assembly 110. That is, the heat exchange assembly 110 can be provided with peripheral edges of the plurality of sides, the converging positions R are formed on a local area of the peripheral edge of at least one side, namely, the number of the peripheral edges of the sides corresponding to all the converging positions R of the heat exchange assembly 110 is smaller than or equal to the number of the peripheral edges of all the sides of the heat exchange assembly 110. One or more converging positions R can be correspondingly formed on at least one side of the heat exchange assembly 110.

For example, as shown in FIG. 3, the periphery of the heat exchange assembly 110 includes four sides; by taking the four sides of the heat exchange assembly 110 respectively being a front side, a rear side, a left side, and a right side as an example, the front side is a downstream in the direction X2, the rear side is an upstream in the direction X2, the left side is the upstream in the direction X1, and the right side is the downstream in the direction X1. The rear side of the heat exchange assembly 110 locally forms the converging position R, and the size of the converging position R in a left-right direction is smaller than the size of the front side of the heat exchange assembly 110 in the left-right direction; definitely, in other examples, at least one of the front side, the left side, and the right side of the heat exchange assembly 110 locally forms the converging position R. In addition, in other examples, the periphery of the heat exchange assembly 110 can also include three sides.

In the above technical solution, the at least one side of the periphery of the heat exchange assembly 110 locally forms the converging position R, and the at least one end portion 11 of each heat exchange tube 1 extends to the converging position R, so that the converging positions R correspond to a plurality of end portions 11; the plurality of end portions 11 corresponding to the converging positions R are arranged in a relatively centralized manner, thereby quickly and simultaneously aligning the plurality of end portions 11 corresponding to the converging positions R with other components (such as a current collector 2, a fixed beam 150, and an expansion beam B1 described in the following) in an assembling process of the heat exchange assembly 110, facilitating to improve the assembling convenience and assembling efficiency of the heat exchange assembly 110 while realizing good assembling precision of each end portion 11. In addition, if it is needed to seal the whole heat exchange assembly 110, the plurality of end portions 11 can be directly sealed at the converging positions R, which simplifies the sealing to the heat exchange assembly 110; and when the other components are provided with avoiding structures for avoiding the converging positions R, the above arrangement is also beneficial to reducing the number of the avoiding structures, and meanwhile, if the avoiding structures will weaken the structural strength of the other components to a certain extent, such arrangement is beneficial to reducing the weakening of the avoiding structures on the other components.

With reference to FIG. 3, and FIG. 5 to FIG. 7, in some embodiments, a size L1 of the converging positions R on the corresponding side of the heat exchange assembly 110 is smaller than or equal to 1/3 of the size L2 of the corresponding side of the heat exchange assembly 110. For example, L1/L2 can be 1/3, 2/7, 1/4, 2/9, 1/5, or 1/6 and the like. It is to be understood that the plurality of converging positions R are provided, the size L1 of the plurality of converging positions R on the corresponding side of the heat exchange assembly 110 can be equal or unequal.

By way of example, taking the converging position R located on the rear side of the heat exchange assembly 110 as an example, the size L3 of the converging position R in the left-right direction is smaller than or equal to 1/3 of the size L4 of the rear side of the heat exchange assembly 110 in the left-right direction; and taking the converging position R located on the left side of the heat exchange assembly 110 as an example, and the size L5 of the converging position R in a front-back direction is smaller than or equal to 1/3 of the size L6 of the left side of the heat exchange assembly 110 in the front-back direction.

In the above technical solution, the size of the converging position R on the corresponding side of the heat exchange assembly 110 is set to be smaller than or equal to 1/3 of the size of the corresponding side of the heat exchange assembly 110, which facilitates the centralized arrangement of the plurality of end portions 11 corresponding to the converging positions R, helps further save the space occupied by the converging positions R, and makes it easier to assemble and seal the heat exchange assembly 110 at the converging positions R; moreover, the end portions 11 corresponding to the converging positions R are used for liquid intake and/or liquid output, so a temperature of media in the end portions 11 is relatively high or low, and the temperature of a corresponding area will intensively increase or decrease due to the arranged converging positions R; and the size occupied by the converging positions R on the corresponding side of the heat exchange assembly 110 is relatively small, thus the influence range of the temperature of the media in the end portions 11 corresponding to the converging positions R is correspondingly small, which facilitates to reduce the concentration of the temperature of the areas corresponding to the converging positions R, and makes it convenient to improve a temperature uniformity of the batteries 200 to a certain extent.

By way of example, the size L1 of the converging positions R on the corresponding side of the heat exchange assembly 110 is smaller than or equal to 1/5 of the size L2 of the corresponding side of the heat exchange assembly 110. For example, L1/L2 can be 2/11, 2/13 or 1/7 and the like. Therefore, the heat exchange assembly 110 is convenient to assemble and seal again.

With reference to FIG. 3 to FIG. 7, in some embodiments, all the converging positions R of the heat exchange assembly 110 are arranged on one side of periphery of the heat exchange assembly 110, and at the moment, one or a plurality of converging positions R of the heat exchange assembly 110 can be arranged.

For example, as shown in FIG. 3, taking the periphery of the heat exchange assembly 110 including four sides and the four sides of the heat exchange assembly 110 respectively being the front side, the rear side, the left side, and the right side as an example, all the converging positions R of the heat exchange assembly 110 are located on the front side of the heat exchange assembly 110, thus the alignment direction of the heat exchange assembly 110 and other components is simplified during the mounting process of the heat exchange assembly 110; the alignment of the front side of the heat exchange assembly 110 to other components can be emphatically taken into account, the alignment requirement of other sides of the heat exchange assembly 110 is reduced, and the assembling convenience and the assembling efficiency of the heat exchange assembly 110 are further improved.

In the above technical solution, all the converging positions R of the heat exchange assembly 110 are located on one side of the periphery of the heat exchange assembly 110, thus all the converging positions R of the heat exchange assembly 110 are arranged in a relatively centralized manner, which facilitates to align the heat exchange assembly 110 with other components in the assembling process of the heat exchange assembly 110, is conducive to quickly and simultaneously assembling all the converging positions R, and further improves the assembling efficiency of the heat exchange assembly 11.

Definitely, in other embodiments of the present application, the heat exchange assembly 110 is provided with a plurality of converging positions R, at least two of the plurality of converging positions R are respectively located on different sides of the periphery of the heat exchange assembly 110, for example, taking the periphery of the heat exchange assembly 110 including four sides and the four sides of the heat exchange assembly 110 respectively being the front side, the rear side, the left side, and the right side as an example, at least two of the four sides are provided with the converging positions R.

With reference to FIG. 3 to FIG. 7, in some embodiments, the plurality of heat exchange tubes 1 are arranged at intervals or arranged in a mutually winding manner.

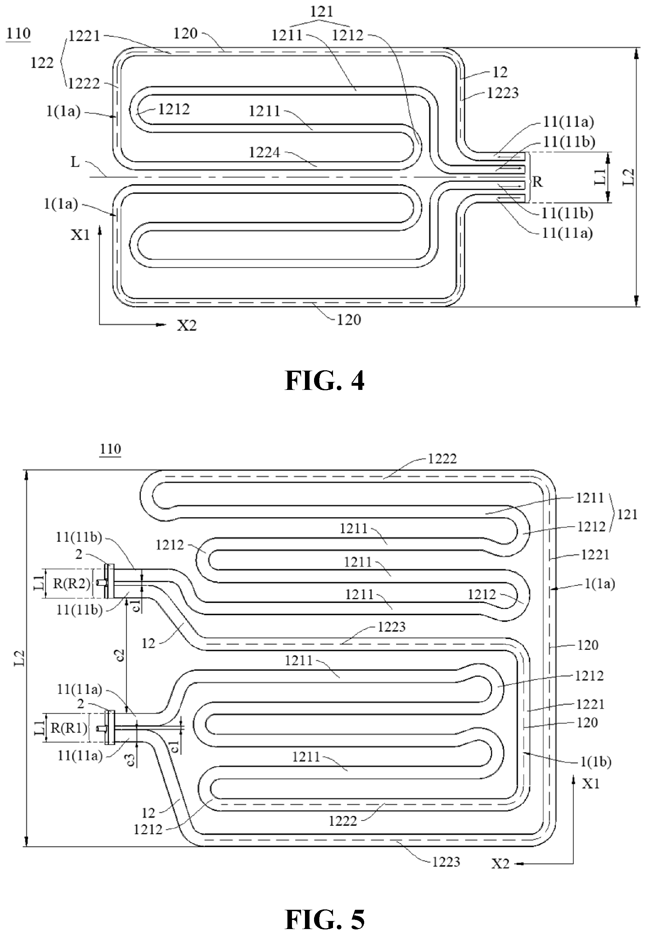

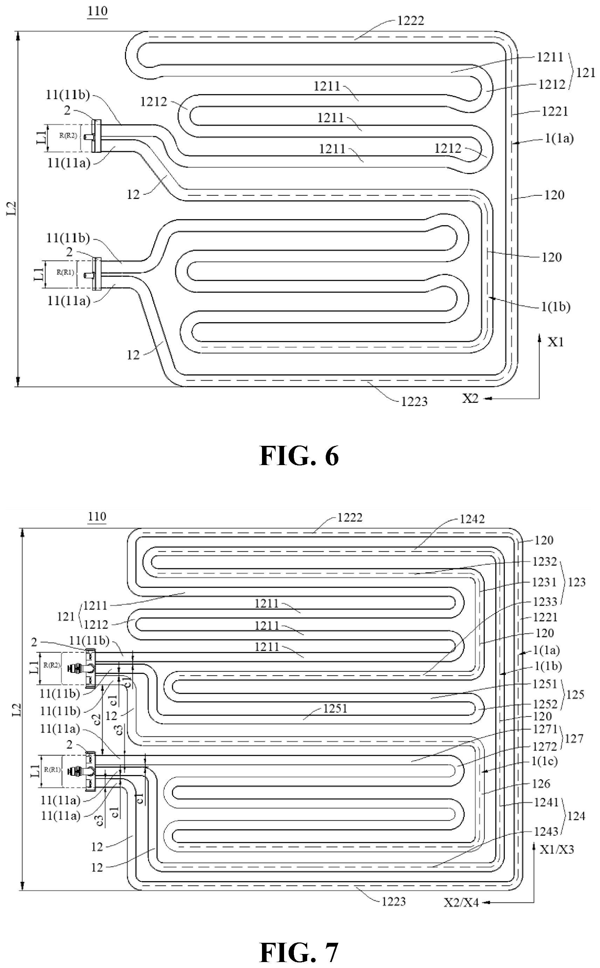

For example, when the plurality of heat exchange tubes 1 are arranged at intervals, the plurality of heat exchange tubes 1 can be arranged at intervals along a first predetermined direction (as shown in FIG. 3 and FIG. 4), or the plurality of heat exchange tubes 1 can be arranged at intervals along the first predetermined direction and a second predetermined direction (for example, the plurality of heat exchange tubes 1 are roughly arranged in a multi-row and multi-rank manner), the second predetermined direction intersects with the first predetermined direction, but not limited thereto; and the first predetermined direction can be the first direction described in the following. When the plurality of heat exchange tubes 1 are arranged in the mutually winding manner, at least part of at least one of the plurality of heat exchange tubes 1 extends around the circumferential direction of at least part of at least one of the rest heat exchange tubes 1 (as shown in FIG. 5 and FIG. 7).

In the above technical solution, the plurality of heat exchange tubes 1 are arranged at intervals or are arranged in the mutually winding manner, so that the plurality of heat exchange tubes 1 can fully utilize an arrangement space, each battery cell 100 can correspond to an appropriate portion of the corresponding heat exchange tube 1 when the heat exchange assembly 110 is applied to the battery 200, making it meet the heat exchange demand of each battery cell 100 very well.

Definitely, in other embodiments of the present application, the heat exchange assembly 110 is provided with the plurality of converging positions R, and when at least two of the plurality of converging positions R are respectively located on different sides of the periphery of the heat exchange assembly 110, the plurality of heat exchange tubes 1 also can be arranged at intervals or in the mutually winding manner.

With reference to FIG. 3, FIG. 5, and FIG. 7, in some embodiments, a space c1 between any two adjacent end portions 11 at the converging positions R is smaller than the maximum radial size c3 of outer contours of cross sections of the end portions 11. The cross sections of the end portions 11 are vertical to central axes of the end portions 11; the central axes of the end portions 11 extend in the flowing direction of fluid in the end portions 11; the outer contours of the cross sections of the end portions 11 can be understood to correspond to the peripheral walls of the end portions 11; and on the cross sections of the end portions 11, the maximum size of the outer contours of the cross sections of the end portions 11 in the direction (namely the radial direction) passing through the central axes of the end portions 11 is c3.

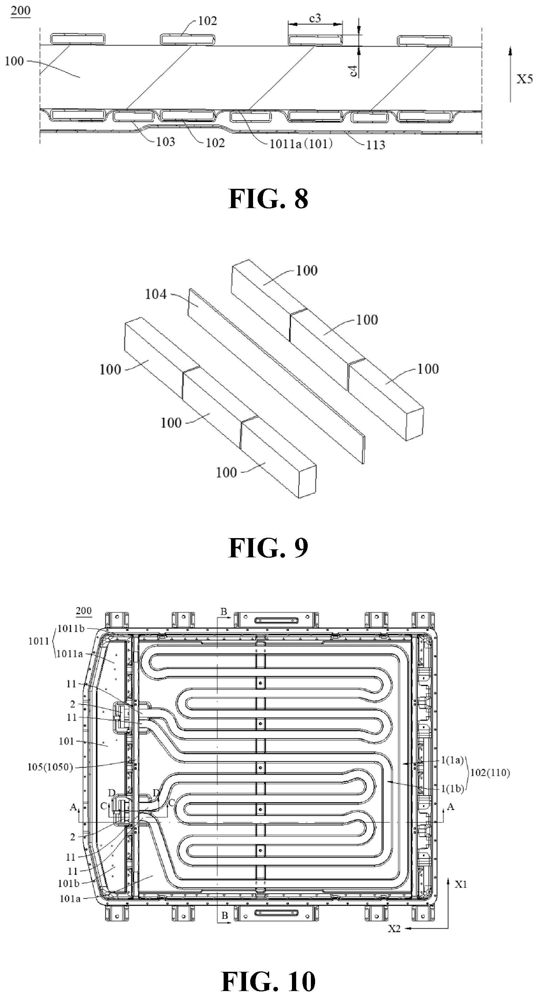

By way of example, as shown in FIG. 7 and FIG. 8, the heat exchange tubes 1 are constructed to be flat tubes or harmonica-shaped tubes; the width of each end portion 11 is the maximum radial size c3 of the outer contour of the cross section of each end portion 11; and the thickness c4 of each end portion 11 is smaller than c3. Definitely, in other examples, the heat exchange tubes 1 are circular tubes, and the outer diameters of each end portions 11 are the maximum radial size c3 of the outer contours of the cross sections of the end portions 11.

One converging position R is provided, two end portions 11 of each heat exchange tube 1 extend to the same converging position R, and at the moment, the two end portions 11 of all the heat exchange tubes 1 extend to the converging positions R; and therefore, if the number of the converging positions R is small, it is conducive to improving the assembling efficiency and the sealing convenience of the heat exchange assembly 110. Or, the plurality of converging positions R are provided, the two end portions 11 of the heat exchange tubes 1 extend to the same converging position R, that is, for a single heat exchange tube 1, the two end portions 11 correspond to the same converging position R; for different heat exchange tubes 1, different heat exchange tubes 1 can correspond to the same converging position R, and/or, different heat exchange tubes 1 correspond to different converging positions R, at the moment, the plurality of converging positions R can be located on one side of the periphery of the heat exchange assembly 110, or at least two of the plurality of converging positions R are located on different sides of the periphery of the heat exchange assembly 110 correspondingly; for example, taking two heat exchange tubes 1 and two converging positions R as example, the two end portions 11 of one heat exchange tube 1 extend to one converging position R, and the two end portions 11 of the other heat exchange tube 1 extend to the other converging position R; and for another example, taking three heat exchange tubes 1 and two converging positions R as an example, the two end portions 11 of one heat exchange tube 1 extend to one converging position R, and all the end portions 11 of the other two heat exchange tubes 1 extend to the other converging position R.

In other embodiments, the space c1 between any two adjacent end portions 11 of the converging positions R can be larger than or equal to the maximum radial size c3 of the outer contours of the cross sections of the end portions 11.

With reference to FIG. 5 to FIG. 7, in some embodiments, the plurality of converging positions R are provided, two end portions 11 of each heat exchange tube 1 extend to different converging positions R, and at the moment, the plurality of converging positions R can be located on one side of the periphery of the heat exchange assembly 110, or at least two of the plurality of converging positions R are located on different sides of the periphery of the heat exchange assembly 110.

In the above technical solution, the two end portions 11 of the heat exchange tubes 1 extend to the same converging position R, or, the two end portions 11 of the heat exchange tubes 1 extend to different converging positions R, the number of the heat exchange tubes 1 and the number of the converging positions R are relatively flexible, so that the flexible design of the heat exchange assembly 100 is facilitated.

It is to be understood that when the plurality of converging positions R are provided, and two end portions 11 of the heat exchange tubes 1 extend to the same converging position R, the number of the heat exchange tubes 1 and the number of the converging positions R can be equal or unequal; and similarly, when the two end portions 11 of each heat exchange tube 1 extend to different converging positions R, the number of the heat exchange tubes 1 and the number of the converging positions R can be equal or unequal.

With reference to FIG. 3 to FIG. 7, in some embodiments, for a single converging position R, the converging position R is located between two corresponding ends of the heat exchange assembly 110.

By way of example, taking the converging position R located on the front side of the heat exchange assembly 110 as an example, the converging position R is located between a left end and a right end of the heat exchange assembly 110, namely, in the left-right direction, the converging position R does not exceed a left end edge and a right end edge of the heat exchange assembly 110, or by taking the rear-front direction as a projection direction, an orthographic projection of the converging position R does not exceed the left side edge and the right side edge of the orthographic projection of the heat exchange assembly 110. Definitely, for the converging position R located on the left side of the heat exchange assembly 110, the converging position R is located between the front end and the rear end of the heat exchange assembly 110.

In other embodiments, for a single converging position R, at least part of the converging position R exceeds the corresponding end of the heat exchange assembly 110.

By way of example, taking the converging position R located on the front side of the heat exchange assembly 110 as an example, at least part of the converging position R exceeds the left end or the right end of the heat exchange assembly 110; and by taking the rear-front direction as the projection direction, at least part of the orthographic projection of the converging position R is located on the left side of the left side edge of the orthographic projection of the heat exchange assembly 110, or at least part of the orthographic projection of the converging position R is located on the right side of the right side edge of the orthographic projection of the heat exchange assembly 110. Definitely, for the converging position R located on the left side of the heat exchange assembly 110, at least part of the converging position R exceeds the front end or the rear end of the heat exchange assembly 110.

In the above technical solution, the converging position R is located between two corresponding ends of the heat exchange assembly 110, or at least part of the converging position R exceeds the corresponding end of the heat exchange assembly 110, the converging position R can be flexibly arranged on the corresponding side of the heat exchange assembly 110, the converging position R can be matched with the arrangement mode of the plurality of heat exchange tubes 1, and thus the arrangement convenience of the heat exchange tubes 1 can be improved.

With reference to FIG. 3 and FIG. 4, in some embodiments, one converging position R is provided, the converging position R is arranged opposite to the middle of the corresponding side of the heat exchange assembly 110, and at the moment, two end portions 11 of all the heat exchange tubes 1 are converged towards the middle of the corresponding side of the heat exchange assembly 110. In other embodiments, one converging position R is provided, the converging position R is arranged opposite to one end of the corresponding side of the heat exchange assembly 110, and at the moment, two end portions 11 of all the heat exchange tubes 1 are converged towards one end of the corresponding side of the heat exchange assembly 110, so that the converging position R deviates from the middle of the heat exchange assembly 110.

By way of example, taking the converging position R located on the front side of the heat exchange assembly 110 as an example, the converging position R and the middle of the heat exchange assembly 110 in the left-right direction are arranged in a front-back opposite mode, or, the converging position R and the left end or the right end of the heat exchange assembly 110 are arranged in an opposite mode.

In the above technical solution, the converging position R is arranged opposite to the middle of the corresponding side of the heat exchange assembly 110, or opposite to the end portion of the corresponding side of the heat exchange assembly 110, so that the converging positions R at the proper positions are reasonably selected according to the arrangement mode of the heat exchange tubes 1 while all the end portions 11 of the heat exchange assembly 110 are converged, and all the end portions 11 can smoothly extend to the converging positions R.

With reference to FIG. 3, in some embodiments, the plurality of heat exchange tubes 1 are arranged at intervals in the first direction X1, and two heat exchange tubes 1 at two ends are symmetrically arranged about a center line L of the heat exchange assembly 110 vertical to the first direction. By way of example, the center line L can extend in the second direction, but not limited thereto, for example, the center line L can also extend in the fifth direction X5.

In the above technical solution, the plurality of heat exchange tubes 1 are arranged at intervals, so that the arrangement mode of the plurality of heat exchange tubes 1 is simplified; the two heat exchange tubes 1 at two ends are symmetrically arranged about the center line L, thus the two heat exchange tubes 1 at two ends can achieve basically same temperature regulation capability under other same conditions; and when the heat exchange assembly 110 is applied to the battery 200, the heat exchange assembly 110 can conveniently implement basically same temperature control on the battery cells 100 at the outer side, thus the temperature difference of a plurality of battery cells 100 can be reduced and the reliability of the battery 200 can be improved.

With reference to FIG. 3 and FIG. 4, two end portions 11 of each heat exchange tube 1 are respectively a first end portion 11a and a second end portion 11b, one of the first end portion 11a and the second end portion 11b is used for liquid intake and the other one is used for liquid output; all the second end portions 11b of the two adjacent heat exchange tubes 1 that are arranged at an interval along the first direction X1 are located between the two first end portions 11a of the two adjacent heat exchange tubes 1; and all the first end portions 11a and all the second end portions 11b of the two adjacent heat exchange tubes 1 extend to the same converging position R.

Therefore, for two adjacent heat exchange tubes 1 that are arranged at an interval in the first direction, all the end portions 11a correspond to the same converging position R, and all the second end portions 11b of the heat exchange tubes 1 are located between two first end portions 11a. When the first end portions 11a are used for liquid intake, media at upstream of the heat exchange tubes 1 are used for exchanging heat with the peripheral battery cells 100, media at downstream of the heat exchange tubes 1 are used for exchanging heat with the internal battery cells 100, it is particularly suitable for a situation that the heat exchange tubes 1 are used for heating the battery cells 100; the peripheral battery cells 100 are adjacent to a use environment and are low in temperature, the heat exchange tubes 1 utilize the media with high temperature to preferentially heat the peripheral battery cells 100, then the media exchange heat with the peripheral battery cells 100 and then exchange heat with the internal battery cells 100, thus improving the temperature uniformity of the battery 200; at the moment, in the embodiment of the present application, all the second end portions 11b of the two adjacent heat exchange tubes 1 are arranged between the two first end portions 11a, all the first end portions 11a and all the second end portions 11b extend to the same converging position, which facilitates the connection of a liquid supply flow path and a liquid output flow path to the two adjacent heat exchange tubes 1, reducing the length of the liquid supply flow path and the length of the liquid output flow path, and reducing the flow resistance is reduced. Definitely, the first end portions 11a can further be used for liquid output, which will not be listed here.

In the above technical solution, all the second end portions 11b of the two adjacent heat exchange tubes 1 that are arranged at an interval in the first direction are located between the two first end portions 11a of the two adjacent heat exchange tubes 1, all the first end portions 11a and all the second end portions 11a of the two adjacent heat exchange tubes 1 extend to the same converging position R, which facilitates the connection of the two adjacent heat exchange tubes 1 to the liquid supply flow path and the liquid output flow path, as well as reducing the length of the liquid supply flow path and the length of the liquid output flow path.

With reference to FIG. 5 and FIG. 7, in some embodiments, the plurality of converging positions R are provided, and the plurality of converging positions R are arranged at intervals; and the space c1 between two adjacent end portions 11 of the converging positions R is smaller than the distance c2 between the two adjacent converging positions R. The two adjacent end portions 11 of the converging positions R can belong to the same heat exchange tube 1 or different heat exchange tubes 1.

In the above technical solution, the space between the two adjacent end portions 11 of the converging positions R is smaller than the space between the two adjacent converging positions R, so that the space between the two adjacent converging positions R is relatively large. When other components are provided with avoiding structures for avoiding the converging positions R, the two adjacent converging positions R can respectively correspond to different avoiding structures, so that the space occupied by the avoiding structures is reduced, and the arrangement of the avoiding structures is facilitated; and moreover, if the avoiding structures may weaken the structural strength of other components to a certain extent, the weakening effect of the avoiding structures on other components can be further reduced.

With reference to FIG. 5 to FIG. 7, in some embodiments, two end portions 11 of each heat exchange tube 1 are a first end portion 11a and a second end portion 11b respectively, the first end portion 11a is used for liquid intake, and the second end portion 11b is used for liquid output; the plurality of converging positions R include a first converging position R1 and a second converging position R2. The first end portion 11a of each heat exchange tube 1 extends to the first converging position R1; the second end portion 11b of each heat exchange tube 1 extends to the second converging position R2; at the moment, the first converging position R1 corresponds to liquid intake ends of all the heat exchange tubes 1; the second converging position R2 corresponds to liquid output ends of all the heat exchange tubes 1; or, the first end portion 11a of at least one heat exchange tube 1 and the second end portion 11b of at least one heat exchange tube 1 extend to the first converging position R1, and the second end portion 11b of at least one heat exchange tube 1 and the first end portion 11a of at least one heat exchange tube 1 extend to the second converging position R2; at the moment, the first converging position R1 corresponds to the liquid intake end of at least one heat exchange tube 1 and the liquid output end of at least one heat exchange tube 1; and the second converging position R2 also corresponds to the liquid output end of at least one heat exchange tube 1 and the liquid intake end of at least one heat exchange tube 1.

In the above technical solution, all the first end portions 11a extend to the first converging position R1 and all the second end portions 11b extend to the second converging position R2, so that all the liquid intake ends and all the liquid output ends are separately arranged, which is conducive to connecting all the heat exchange tubes 1 of the heat exchange assembly 110 into a medium circulating system, thereby realizing parallel arrangement of the plurality of heat exchange tubes 1; and the first converging position R1 and the second converging position R2 correspond to at least one first end portion 11a and at least one second end portion 11b, so that different heat exchange requirements of the single battery cells 100 can be flexibly met.

With reference to FIG. 3 to FIG. 7, in some embodiments, the heat exchange assembly 110 further includes at least one current collector 2; the current collectors 2 correspond the converging positions R one by one, and a plurality of end portions 11 located at the same converging position R share one current collector 2. The current collectors 2 are in communication with the connectors of the plurality of end portions 11 corresponding to the converging position R, or, the current collectors 2 divide the connectors of the plurality of end portions 11 corresponding to the converging position R into a plurality of independent flow channels.

For example, when the plurality of end portions 11 of the converging position R are used for liquid intake, or liquid output, the current collectors 2 are in communication with the connectors of the plurality of end portions 11 of the converging position R, thus the media in the current collectors 2 are distributed to the plurality of end portions 11, or, the media flowing out of the plurality of end portions 11 are gathered in the current collector 2; when at least one of the plurality of end portions 11 at the converging positions R is used for liquid intake, and the at least one of the rest is used for liquid output, the current collectors 2 divide the connectors of the plurality of end portions 11 at the converging positions R into the plurality of independent flow channels, at least one flow channel is configured to provide the media for the end portions 11, and at least one of rest is configured to collect the media flowing out of the end portions 11.

By taking two end portions 11 of the heat exchange tube 1 being the first end portion 11a used for liquid intake and the second end portion 11b used for liquid output as an example, one converging position R and one current collector 2 are provided, all the first end portion 11a and all the second end portion 11b extend to the converging position R, the current collectors 2 can divide the connectors of the plurality of end portions 11 into the liquid intake flow channel and the liquid output flow channel, all the first end portion 11a are in communication with the liquid intake flow channel, and all the second end portion 11b are in communication with the liquid output flow channel; or, two converging positions R and two current collectors 2 are provided, all the first end portions 11a extend to the first converging position R1, the current collector 2 corresponding to the first converging position R1 is in communication with the connectors of all the first end portions 11a, all the second end portions 11b extend to the second converging position R2, and the current collectors 2 corresponding to the second converging position R2 are in communication with the connectors of all the second end portions 11b.

In the above technical solution, the current collectors 2 are arranged, and the plurality of end portions 11 located at the same converging position R share one current collector 2, thus improving the stability and the reliability of the whole structure of the heat exchange assembly 110 on the premise that the medium in each heat exchange tube 1 normally circulates.

Definitely, in other embodiments of the present application, the heat exchange assembly 110 can also not include the current collectors 2.

With reference to FIG. 3 to FIG. 7, FIG. 11, and FIG. 12, in some embodiments, each heat exchange tube 1 is also provided with a communication section 12 that is connected between two end portions 11, the central axes of at least the communication sections 12 of all the heat exchange tubes 1 are located on the same plane, all the heat exchange tubes 1 are arranged in a coplanar manner, and each heat exchange tube 1 is not bent in a direction vertical to the plane. By way of example, as shown in the figures, the central axes of the communication sections 12 of all the heat exchange tubes 1 are located on the same horizontal plane, and the central axes of the end portions 11 of each heat exchange tube 1 are not located on the horizontal plane and intersect (for example, the parts, located on two opposite sides of the fixed beam 105, of all the end portions 11 at the converging position R are connected by an obtuse angle); or, the central axes of all the heat exchange tubes 1 are located on the same horizontal plane.

In the above technical solution, the central axes of at least the communication sections 12 of all the heat exchange tubes 1 are located on the same plane, so that the assembling consistency of the heat exchange tubes 1 is improved, basically the same heat resistance between each heat exchange tube 1 and the corresponding battery cell 100 is realized, and the heat exchange balance is improved.

In the embodiments of the present application, the end portions 11 can extend for a certain distance along a straight line, and at least one of the two end portions 11 of each heat exchange tube 1 is connected to the corresponding communication section 12 in a bent way.

With reference to FIG. 8, in some embodiments, the heat exchange tubes 1 are flat pipes or harmonica-shaped pipes, at the moment, on the cross sections of the heat exchange tubes 1, the thickness of the heat exchange tubes 1 is smaller than the width, and the cross section of the heat exchange tubes 1 is vertical to the central axes of the heat exchange tubes 1.

In the above technical solution, the heat exchange tubes 1 are arranged to be the flat tubes or the harmonica-shaped tubes, so that the space occupied by the heat exchange tubes is saved, moreover, the heat exchange between the sides of the heat exchange tubes 1 in the thickness direction and the battery cells 100 is facilitated, and the batteries 200 is balanced in volume energy density and heat management. For example, the heat exchange tubes 1 can be extruded and molded, and a thickness of each heat exchange tube 1 can be as small as about 0.7 mm; in related technologies, a structure of a water cooling plate is adopted, the water cooling plate generally includes two plate bodies which are stacked, the two plate bodies are welded and fixed and define a flow channel, and the thickness of the water cooling plate is generally large and can be more than 2.4 mm; therefore, by means of above arrangement in the present application, the cost of the heat exchange assembly 110 can be reduced, moreover, the space occupied by the heat exchange assembly 110 is saved, and the battery 200 can realize the improvement of the energy density when the heat exchange assembly 110 is arranged in the box 101.

In the embodiment of the present application, the harmonica-shaped tubes can be understood as that at least one separation structure is additionally arranged in the flat tubes to separate the internal space of the flat tubes into a plurality of flow channels, and two ends of each flow channel are respectively in communication with a liquid intake end and a liquid output end of the corresponding heat exchange tube 1. The plurality of flow channels can be arranged at intervals along the width direction of the flat tubes; or, the plurality of flow channels can be arranged in a multi-row and multi-rank way along the width direction and the thickness direction of the flat tubes.

With reference to FIG. 3 to FIG. 7, in some embodiments, each heat exchange tube 1 is also provided with a communication section 12 connected between two end portions 11; at least one heat exchange tube 1 is constructed to be a first heat exchange tube 1a; the communication sections 12 of the first heat exchange tubes 1a include first heat exchange sections 121 and second heat exchange sections 122; and the second heat exchange sections 122 are bent to form U-shaped areas 120, the first heat exchange sections 121 are bent and arranged in the U-shaped areas 120, and the first heat exchange sections 121 are connected to the second heat exchange sections 122 in a bent way.

For example, the battery 200 can include a plurality of battery cells 100, and the first heat exchange tubes 1a are configured to exchange heat with the plurality of battery cells 100 of the battery 200, so that the temperature of the battery 200 can be limited within a reliable operation temperature, and reliable operation of the battery 200 is achieved.

That "the second heat exchange sections 122 are bent to form U-shaped areas 120, the first heat exchange sections 121 are bent and arranged in the U-shaped areas 120" refers to that the second heat exchange sections 122 are arranged at the circumferential periphery of the first heat exchange sections 121 and can be arranged on at least three sides of the first heat exchange sections 121 in the circumferential direction, and the second heat exchange sections 122 can be arranged closer to the peripheral edge in position of the battery 200 than the first heat exchange sections 121. The parts shown by dotted lines in FIG. 3 to FIG. 7 to be understood as the U-shaped areas 120 corresponding to the heat exchange sections.

The second heat exchange sections 122 are bent to form the U-shaped areas 120, namely, the second heat exchange sections 122 at least in part extend along a U-shaped line in a direction from one end of each second heat exchange section 122 to the other end, so as to form the U-shaped areas 120.

The first heat exchange sections 121 are bent in the U-shaped areas 120, namely, the first heat exchange sections 121 are arranged in a space encircled by the second heat exchange sections 122, and the first heat exchange sections 121 extend along a non-straight line on the inner sides of the second heat exchange sections 122 and have at least one bending position.

It is to be noted that in the embodiment, only the first heat exchange sections 121 are limited to be bent and arranged in the U-shaped areas 120 of the second heat exchange sections 122, and the bending forms of the first heat exchange sections 121 are not limited, namely, the specific bending forms of the first heat exchange sections 121 can be designed according to the heat exchange demand of the battery 200. For example, the first heat exchange sections 121 can extend along the length direction (namely, the first direction X1 shown in FIG. 3) of the battery cells 100, are bent towards the width direction (namely, the second direction X2 shown in FIG. 3) of the battery cells 100 after extending to a certain length, and then continue to extend along the length direction of the battery cells 200 and are bent along the width direction, or the first heat exchange sections 121 can extend along the width direction of the battery cells 100, are bent towards the length direction of the battery cells 100 after extending to a certain length, and then continue to extend along the width direction of the battery cells 100 and are bent along the length direction.

The first heat exchange sections 121 and the second heat exchange sections 122 are connected in a bent way, namely, one end of each first heat exchange sections 121 is connected to one end of the corresponding second heat exchange sections 122, and the connection position of the first heat exchange sections 121 and the second heat exchange sections 122 is of a bent nonlinear structure, for example, the connection position of the first heat exchange sections 121 and the second heat exchange sections 122 can be bent into an arc section.

By way of example, the ends of the first heat exchange sections 121 deviating from the second heat exchange sections 122 can be connected to one end portion 11, and the ends of the second heat exchange sections 122 deviating from the first heat exchange sections 121 are connected to the other end portion 11, therefore, when the first heat exchange tubes 1a perform heat exchange, heat exchange media can flow from the first heat exchange sections 121 to the second heat exchange sections 122, and can also flow from the second heat exchange sections 122 to the first heat exchange sections 121.

It is to be understood that the temperature of the heat exchange media gradually changes while flowing in the first heat exchange tubes 1a, thus the heat exchange effect gradually degrades. For example, when the first heat exchange tubes 1a are configured to perform cooling and heat dissipation on the battery cells 100, the heat in the battery cells 100 is gradually transferred to the heat exchange media, so that the temperature of the heat exchange media gradually increase while flowing along the first heat exchange tubes 1a, the temperature difference to the battery cells 100 is gradually reduced, and the heat exchange efficiency is gradually reduced; and when the first heat exchange tubes 1a are configured to heat to increase the temperature of the battery cells 100, the heat in the heat exchange media is gradually transferred to the battery cells 100, so that the temperature of the heat exchange media gradually decreases while flowing along the first heat exchange tubes 1a, the temperature difference to the battery cells 100 is gradually reduced, and the heat exchange efficiency is gradually reduced.

In the embodiment, when the first heat exchange tubes 1a are configured to perform heat dissipation and cooling on the plurality of battery cells 100, the heat exchange media can also flow to the second heat exchange sections 122 from the first heat exchange sections 121, and can also flow to the first heat exchange sections 121 from the second heat exchange sections 122. When the heat exchange media also flow to the second heat exchange sections 122 from the first heat exchange sections 121, the battery cell 100 in the middle (namely the internal battery cell 100 on the peripheral inner side) can be cooled, and then the battery cells 100 at the peripheral edge position are cooled; the heat dissipation condition of the battery cells 100 at the peripheral edge position is better than that of the battery cell 100 at the inner part, so the heat exchange media with relatively low temperature at the first heat exchange sections 121 can better meet the heat dissipation requirement of the battery cell 100 in the middle; and moreover, the battery cells 100 at the peripheral edge position can directly and naturally dissipate heat to the external environment; and when the temperature of the heat exchange media of the second heat exchange sections 122 is slightly high, the heat dissipation requirement of the battery cells 100 at the peripheral edge position can still be met, so that the cooling effects of the battery cells 100 at the peripheral edge position and the battery cell 100 in the middle are roughly consistent, the temperature of the battery cells 100 at the peripheral edge position is relatively consistent to the temperature of the battery cell 100 in the middle after cooling and heat dissipation, and the temperature distribution in the battery 200 is more uniform.

When the first heat exchange tubes 1a heat to increase the temperature of the plurality of battery cells 100, the heat exchange media can also flow from the first heat exchange sections 121 to the second heat exchange sections 122, and can also flow from the second heat exchange sections 122 to the first heat exchange sections 121. By way of example, when the heat exchange media flow from the second heat exchange sections 122 to the first heat exchange sections 121, the peripheral battery cells 100 can be heated, and then the heat exchange media cool the battery cell 100 in the middle; since the peripheral battery cells 100 dissipate more heat to the external environment, the temperature of the battery cells 100 at the periphery of the battery 200 is easier to decrease; the heat exchange media heat the battery cells 100 at the periphery of the battery 200 first, and the heat exchange media with higher temperature can make up the heat lost by the battery cells 100 due to heat dissipation to the external environment while increasing the temperature of the peripheral battery cells 100, thereby meeting the heating needs; the contact area between the battery cell 100 in the middle and the external environment is small, so the heat loss is small; and the heat exchange media with lower temperature flowing in the first heat exchange sections 121 can well meet the heating needs in cooperation with the heat generated by the battery cells 100, so that the heating effects of the peripheral battery cells 100 and the battery cell 100 in the middle of the battery assembly are basically consistent, the temperature of the peripheral battery cells 100 is consistent with the temperature of the battery cell 100 in the middle, and the temperature distribution in the battery 200 is more uniform.

In the above embodiment, the second heat exchange sections 122 are bent to form the U-shaped areas 120, and the first heat exchange sections 121 are arranged in the U-shaped areas 120 in a bent way; when the first heat exchange tubes 1a exchange heat with the plurality of battery cells 100, the U-shaped areas 120 formed by the second heat exchange sections 122 at the periphery can be opposite to the peripheral battery cells 100, the first heat exchange sections 121 in the U-shaped areas 120 are opposite to the internal battery cell 100, so that the first heat exchange tubes 1a can be make up an internal and external temperature difference caused by heat exchange between the peripheral battery cells 100 and the environment, the heat exchange effects of the peripheral battery cells 100 and the internal battery cell 100 tend to be consistent, the temperature uniformity of the battery 200 is improved, and the service life of the battery 200 can be prolonged to a certain extent.

For example, the second heat exchange sections 122 can be arranged on the outermost sides of the first heat exchange tubes 1a in the circumferential direction, namely, the second heat exchange sections 122 form the flow channels at the outermost periphery of the first heat exchange tubes 1a, thus, the second heat exchange sections 122 can be configured to exchange heat with the battery cells 100 on the peripheral edges, the temperature difference between the peripheral battery cells 100 and the internal battery cell 100 caused by heat exchange to the environment is improved, and the temperature uniformity of the battery cells 100 at the circumferential periphery of the battery 200 is improved.

By way of example, the first heat exchange sections 121 and the second heat exchange sections 122 are bent in the same plane, the first heat exchange tubes 1a can be configured to exchange heat with the plurality of battery cells 100 in the same plane, thus, the structures of the first heat exchange tubes 1a can be simplified, the production difficulty of the first heat exchange tubes 1a is reduced, moreover, the space occupied by the first heat exchange tubes 1a also can be reduced, and the volume energy density of the battery 200 is improved.

By way of example, as shown in FIG. 4, the plurality of heat exchange tubes 1 are arranged at intervals along the first direction, and two heat exchange tubes 1 located at two ends in the first direction X1 are the first heat exchange tubes 1a; and the two first heat exchange tubes 1a are symmetrically arranged about the center line L of the heat exchange assembly 110 extending along the second direction X2. It is to be understood that the second heat exchange sections 122 of the first heat exchange tubes 1a are arranged at the peripheral edge positions, so that the uniformity of internal and external temperatures of the battery assembly can be improved; and therefore, the two heat exchange tubes 1 located at the two ends in the first direction are formed to be the first heat exchange tubes 1a, so that the temperature uniformity of the battery cells 100 at the two ends of the battery assembly in the first direction can be improved, and the temperature uniformity of the whole battery assembly is realized. Therefore, by the two symmetrically arranged first heat exchange tubes 1, liquid can be charged from two sides at the same time, the liquid intake flow is increased, the length of a single heat exchange flow channel is shortened, the pressure drop in the single heat exchange flow channel is reduced, and the heat exchange efficiency can be improved.

Further, the medium flowing directions of the two heat exchange tubes 1 located at the two ends in the first direction and inlets and outlets at the two ends are symmetrically arranged, so that the two first heat exchange tubes 1a can synchronously exchange heat with the two ends of the battery assembly in the first direction, and the temperature uniformity effect is improved.

Definitely, in other embodiments, the plurality of heat exchange tubes 1 can be asymmetric about the center line of the heat exchange assembly 110 in the second direction. Due to the asymmetric arrangement, the whole heat exchange tubes 1 have a foolproof function, the mounting operation of the heat exchange tubes 1 can be indicated, and thus the installation efficiency is improved.

With reference to FIG. 3 to FIG. 7, in some embodiments, the first heat exchange sections 121 include a plurality of first heat exchange parts 1211 and first bending parts 1212; the plurality of first heat exchange parts 1211 are arranged at intervals along the first direction X1, each first heat exchange part 1211 extends along the first direction; and each first bending part 1212 is connected between two adjacent first heat exchange parts 1211 in a bent way, so that the plurality of first heat exchange parts 1211 can be sequentially connected; and the second direction and the first direction are arranged by an included angle.

It is to be noted that the first heat exchange parts 1211 can be diversified in shape, for example, the first heat exchange parts 1211 can be in a linear shape or a curve shape or the like. The plurality of first heat exchange parts 1211 are sequentially bent and connected, and thus the first heat exchange sections 121 can form heat exchange flow channels in an S shape or an n shape or a V shape or the like. The first bending parts 1212 can be in an arc shape or a broken line shape or the like. That "the second direction and the first direction are arranged by an included angle" refers to that the first direction and the second direction can be arranged vertically or can be arranged in a crossed and non-vertical mode, for example, the first direction X1 and the second direction X2 can be arranged at an angle of 30°, 60°, 80°, 120°, 150°, or 170°. For example, as shown in FIG. 3, the first direction is the length direction of battery cells 100, the second direction is the thickness direction of the battery cells 100, therefore, the plurality of first heat exchange parts 1211 are bent and connected to form the S-shaped heat exchange flow channel for heat exchange on the plurality of battery cells 100.

In the above embodiment, on one hand, by arranging the plurality of first heat exchange parts 1211, the heat exchange area of the first heat exchange sections 121 can be increased, then the heat exchange area of the first heat exchange tubes 1a can be increased, and thus the heat exchange effect of the first heat exchange tubes 1a can be improved; and on the other hand, because the internal battery cells 100 are wrapped by the external battery cells 100, the temperature difference between the internal battery cells 100 is not large, so that the overall heat exchange effect can be guaranteed on the premise that the small temperature difference between the internal battery cells 100 and the external battery cells 100 is guaranteed by the plurality of first heat exchange parts 1211.

It is to be understood that the first bending part 1212 is arc-shaped, and a certain included angle is formed between fluid flowing directions of two ends of the first bending part 1212, so that the first bending parts 1212 can change the flowing direction of the fluid, furthermore, two connected first heat exchange parts 1211 can be arranged in a preset area in an extending manner, thereby increasing the heat exchange area of the first heat exchange sections 121, and improving the heat exchange efficiency of the first heat exchange sections 121. Moreover, the first bending parts 1212 are arc-shaped, and the arc shape can reduce the flowing resistance of the fluid and reduce the pressure drop, so that the flowing rate of the fluid can be increased, and the heat exchange efficiency of the first heat exchange sections 121 is further improved. Moreover, the first heat exchange tubes 1a can be more compact in structure and smaller in occupied space size, and the miniaturization design of the battery 200 is facilitated.

By way of example, the first bending parts 1212 are semi-arc-shaped, which is conducive to connecting the two first heat exchange parts 1211 which are parallel to each other and are arranged at an interval, improving the design diversity of the heat exchange flow channel 10, and improving the adaptability of the first heat exchange tubes 1a to the plurality of battery cells 100; and the structure is simple, and the production is facilitated. Definitely, the bending angles of the first bending parts 1212 can be adjusted according to requirements, for example, 150° or 135°.

In addition, the number of the first bending parts 1212 can be one, two, three, or more, and the first bending parts 1212 can enable the first heat exchange tubes 1a to be arranged in a circuitous manner, so that the heat exchange area of the first heat exchange tubes 1a is increased, and the heat exchange efficiency is improved.

With reference to FIG. 3 to FIG. 7, in some embodiments, the second heat exchange sections 122 include second heat exchange parts 1221, third heat exchange parts 1222, and fourth heat exchange parts 1223; the second heat exchange parts 1221 extend along the peripheral edges of the first sides of the first heat exchange sections 121; the third heat exchange parts 1222 are connected between the second heat exchange parts 1221 and the first heat exchange sections 121 and extend along the peripheral edges of the second sides of the first heat exchange sections 121; first ends of the third heat exchange parts 1222 are connected to the second heat exchange parts 1221 by an included angle, and second ends of the third heat exchange parts 1222 are connected to the first heat exchange sections 121 by an included angle; the fourth heat exchange parts 1223 are in communication with the second heat exchange parts 1221, and the fourth heat exchange parts 1223 are connected to the second heat exchange parts 1221 by an included angle; and the fourth heat exchange parts 1223 extend along the peripheral edges of the third sides of the first heat exchange sections 121.

It is to be understood that the fourth heat exchange parts 1223 are connected to the ends of the second heat exchange parts 1221 deviating from the third heat exchange parts 1222; the fourth heat exchange parts 1223, the second heat exchange parts 1221, and the third heat exchange parts 1222 are sequentially connected to form the U-shaped areas 120; and the first heat exchange sections 121 are arranged in the U-shaped areas 120 and are connected to the ends of the third heat exchange parts 1222 deviating from the second heat exchange parts 1221.

The first ends of the third heat exchange parts 1222 are connected to the second heat exchange parts 1221 by an included angle, namely, the third heat exchange parts 1222 are connected to the second heat exchange parts 1221; the third heat exchange parts 1222 and the second heat exchange parts 1221 are not collinear and not parallel, and are arranged at an angle greater than 0° and smaller than 180°. For example, the third heat exchange parts 1222 are connected to the second heat exchange parts 1221 by the included angle of 30°, 45°, 60°, 90°, 120°, 135°, 150° and the like.

The second ends of the third heat exchange parts 1222 are connected to the first heat exchange sections 121 by an included angle, namely, the second ends of the third heat exchange parts 1222 are connected to the second heat exchange parts 1221, and the second ends of the third heat exchange parts 1222 are connected to the first heat exchange sections 121 by an angle greater than 0° and smaller than 180°. For example, the second ends of the third heat exchange parts 1222 are connected to the first heat exchange sections 121 by an included angle of 30°, 45°, 60°, 90°, 120°, 135°, 150° and the like.

The fourth heat exchange parts 1223 are in communication with the second heat exchange parts 1221 and are connected to the second heat exchange parts 1221 by an included angle, namely, the fourth heat exchange parts 1223 are connected to the second heat exchange parts 1221 and are arranged by an angle greater than 0° and less than 180°. For example, the fourth heat exchange parts 1223 are connected to the second heat exchange parts 1221 by the included angle of 30°, 45°, 60°, 90°, 120°, 135°, 150° and the like.

It is to be noted that in the embodiment, the second heat exchange sections 122 are limited to be arranged on three sides of the first heat exchange sections 121 in the circumferential direction, and the second heat exchange parts 1221, the third heat exchange parts 1222, and the fourth heat exchange parts 1223 are not limited to be arranged at specific positions relative to the first heat exchange sections 121 respectively, so that the specific positions of the second heat exchange parts 1221, the third heat exchange parts 1222, and the fourth heat exchange parts 1223 can be designed according to actual conditions, for example, if the second heat exchange parts 1221 can be arranged on the sides of the first heat exchange sections 121 in the first direction, the third heat exchange parts 1222 and the fourth heat exchange parts 1223 are arranged on two sides of the first heat exchange sections 121 in the second direction respectively; and if the second heat exchange parts 1221 are arranged on the sides of the first heat exchange sections 121 in the second direction, the third heat exchange parts 1222 and the fourth heat exchange parts 1223 are arranged on two sides of the first heat exchange sections 121 in the first direction respectively.

In the above embodiment, the second heat exchange parts 1221, the third heat exchange parts 1222, and the fourth heat exchange parts 1223 are arranged on three sides of the first heat exchange sections 121 respectively, so that the second heat exchange sections 122 can encircle the first heat exchange sections 121, the arrangement compactness of the first heat exchange tubes 1a can be improved, the structure miniaturization of the first heat exchange tubes 1a is realized, furthermore, the volume energy density of the battery 200 is improved; and moreover, the structures of the first heat exchange tubes 1a can be simplified, and the processing and production of the first heat exchange assembly 102 are facilitated.

With reference to FIG. 3 to FIG. 7, in some embodiments, the first heat exchange sections 121 include a plurality of first heat exchange parts 1211 which are sequentially connected in a bent way in the first direction. The second heat exchange parts 1221 are located on one of the plurality of first heat exchange parts 1211 in the first direction; the third heat exchange part 1222 is positioned on one side of the plurality of first heat exchange parts 1211 in the second direction; the first direction and the second direction are arranged by an included angle; the first ends of the third heat exchange parts 1222 are connected to the ends of the second heat exchange parts 1221 in the second direction, and the second ends of the third heat exchange parts 1222 are connected to one, which is farthest from the second heat exchange part 1221, of the plurality of first heat exchange parts 1211 in the first direction; the fourth heat exchange parts 1223 are positioned on the other side of the plurality of first heat exchange parts 1211 in the second direction; and one end of each fourth heat exchange part 1223 is connected to the end of corresponding second heat exchange part 1221 deviating from the third heat exchange part 1222, and the other end of each fourth heat exchange part 1223 extends in the first direction deviating from the corresponding second heat exchange part 1221.

The plurality of first heat exchange parts 1211 are sequentially connected in the bent way in the first direction, namely, the plurality of first heat exchange parts 1211 are sequentially arranged in the first direction; and in the first direction, every two adjacent and connected first heat exchange parts 1211 are connected in the bent way. The first heat exchange parts 1211 can extend along a straight line parallel to the second direction, can also extend along a straight line that forms an angle in the second direction, and can also extend along a curve and/or a broken line in the second direction.

It is to be understood that the fourth heat exchange parts 1223, the second heat exchange parts 1221, the third heat exchange parts 1222, and the first heat exchange part 1211 farthest from the second heat exchange parts 1221 are sequentially connected, and the plurality of first heat exchange parts 1211 are arranged at intervals in the first direction and are sequentially connected in a bent mode. Therefore, the heat exchange media can sequentially flow through the fourth heat exchange parts 1223, the second heat exchange parts 1221, and the third heat exchange parts 1222 and then enter the first heat exchange sections 121; and in the first heat exchange sections 121, the media firstly pass through the first heat exchange part 1211 that is farthest from the second heat exchange parts 1221 and finally flow to the first heat exchange part 1211 that is closest to the second heat exchange part 1221; or, the heat exchange media can firstly flow into the first heat exchange sections 121, and in the first heat exchange sections 121, the fluid firstly flows through the first heat exchange part 1211 that is closest to the second heat exchange parts 1221, flows out of the first heat exchange part 1211 that is farthest from the second heat exchange parts 1221, then flows to the third heat exchange parts 1222, and then sequentially flows through the second heat exchange parts 1221 and the fourth heat exchange parts 1223 by the third heat exchange parts 1222.

By taking the first heat exchange tubes 1a deviating from an origin of coordinates in the first direction in FIG. 3 as an example, the first heat exchange parts 1211 extend linearly in the second direction, the plurality of first heat exchange parts 1211 are arranged at intervals in the first direction; the second heat exchange parts 1221 are arranged on the sides, deviating from the origin of coordinates, of the plurality of first heat exchange parts 1211 in the first direction and extend linearly in the second direction, and are configured to exchange heat with the sides, deviating from the origin of coordinates, of the plurality of battery cells 100 in the first direction; the third heat exchange parts 1222 are arranged on the sides, close to the origin of coordinates, of the plurality of first heat exchange parts 1211 in the second direction and extend linearly in the first direction, and are configured to exchange heat with the sides, close to the origin of coordinates, of the plurality of battery cells 100 in the second direction; and the fourth heat exchange parts 1223 are arranged on the sides, deviating from the origin of coordinates, of the plurality of first heat exchange parts 1211 in the second direction and extend linearly in the first direction, and can be configured to exchange heat with the sides, deviating from the origin of coordinates, of the plurality of battery cells 100 in the second direction.

In the above embodiment, the plurality of first heat exchange parts 1211 are sequentially bent and connected in the first direction, the second heat exchange parts 1221 are located on the sides of the plurality of first heat exchange parts 1211 in the first direction, the third heat exchange parts 1222 are located on one of the plurality of first heat exchange parts 1211 in the second direction, and the fourth heat exchange parts 1223 are located on the other side of the plurality of first heat exchange parts 1211 in the second direction, therefore, the position relationship of the second heat exchange parts 1221, the third heat exchange parts 1222, the fourth heat exchange parts 1223, and the first heat exchange parts 1211 is limited, the layout of the first heat exchange tubes 1a is further limited, the structures of the first heat exchange tubes 1a are simplified, and machining and manufacturing are facilitated.

By way of example, the third heat exchange parts 1222 and the fourth heat exchange parts 1223 extend in the first direction, and the first heat exchange parts 1211 and the second heat exchange parts 1221 extend in the second direction, thus the first heat exchange tubes 1a can be arranged in a circuitous manner, the production difficulty of the first heat exchange tubes 1a can be reduced, and the production cost of the first heat exchange assembly 102 is reduced. Further, the third heat exchange parts 1222 and the fourth heat exchange parts 1223 can linearly extend in the first direction, and the first heat exchange parts 1211 and the second heat exchange parts 1221 can linearly extend in the second direction. The linear structure is simple, production is convenient, arrangement is convenient, and therefore, the production complexity and the production cost of the first heat exchange flow channel 10 can be further reduced.

For example, as shown in FIG. 3, the third heat exchange parts 1222 and the fourth heat exchange parts 1223 are arranged in an extending manner along the first direction; in the first direction, the length b1 of the fourth heat exchange parts 1223 is smaller than or equal to the length a1 of the third heat exchange parts 1222. When the length b1 of the fourth heat exchange parts 1223 is equal to the length a1 of the third heat exchange parts 1222, the fourth heat exchange parts 1223, the second heat exchange parts 1221, and the third heat exchange parts 1222 are connected in sequence to form a standard U-shaped flow channel; two ends of the U-shaped areas 120 have similar size, so that the temperature difference of the battery cells 100 at two ends in the second direction is easy to control and the temperature uniformity is improved; and when the length b1 of the fourth heat exchange parts 1223 is smaller than the length a1 of the third heat exchange parts 1222, other flow channel sections of the first heat exchange tubes 1a, other heat exchange flow channels or other parts can be avoided, and furthermore, the layout of the first heat exchange tubes 1a is easy to realize and the structure is compact.

With reference to FIG. 3, in some embodiments, the fourth heat exchange parts 1223 extend along the first direction and extend to the position close to one, which is farthest away from the second heat exchange part 1221, of the plurality of first heat exchange parts 1211. For example, the fourth heat exchange parts 1223 extend along the first direction; one end of each fourth heat exchange part 1223 is connected to the corresponding second heat exchange part 1221 and the other end of each fourth heat exchange part 1223 extends to a position close to one, which is farthest away from the corresponding second heat exchange part 1221, in the plurality of first heat exchange parts 1211, namely, the other end of each fourth heat exchange part 1223 extends to be flush with the first heat exchange part 1211 which is farthest away from the corresponding second heat exchange part 1221, or, the other end of each fourth heat exchange part 1223 extends to be close to the first heat exchange part 1211 which is farthest away from the corresponding second heat exchange part 1221, or, the other end of each fourth heat exchange part 1223 extends to exceed the first heat exchange part 1211 which is farthest away from the corresponding second heat exchange part 1221.

Therefore, the length of the fourth heat exchange parts 1223 can be increased so as to increase the heat exchange area of the fourth heat exchange parts 1223, thus the heat exchange effect of the first heat exchange assembly 102 is further improved and the layout of the first heat exchange tubes 1a is also easy to realize.

With reference to FIG. 5, in some embodiments, the first heat exchange sections 121 can include a plurality of first heat exchange parts 1211 which are sequentially connected in a bent way in the first direction; the second heat exchange parts 1221 are located on the sides of the plurality of first heat exchange parts 1211 along the second direction, the third heat exchange parts 1222 are located on one of the plurality of first heat exchange parts 1211 along the first direction, and the first direction and the second direction are arranged by an included angle; the first ends of the third heat exchange parts 1222 are connected to the ends of the second heat exchange parts 1221 along the first direction, the second ends of the third heat exchange parts 1222 are connected to the one, which is closest to the third heat exchange part 1222, of the plurality of first heat exchange parts 1211 along the first direction, and the fourth heat exchange part 1223 is located on the other side of the plurality of first heat exchange parts 1211 along the first direction; and one end of each fourth heat exchange part 1223 is connected to one end of the corresponding second heat exchange part 1221 deviating from the third heat exchange part 1222, and the other end of each fourth heat exchange part 1223 extends towards a direction deviating from the second heat exchange part 1221 along the second direction.

The plurality of first heat exchange parts 1211 are sequentially connected in the bent way in the first direction, namely, the plurality of first heat exchange parts 1211 are sequentially arranged in the first direction; and in the first direction, every two adjacent and connected first heat exchange parts 1211 are connected in the bent way. The first heat exchange parts 1211 can extend along a straight line parallel to the second direction, can also extend along a straight line that forms an angle in the second direction, and can also extend along a curve and/or a broken line in the second direction.

It is to be understood that the fourth heat exchange parts 1223, the second heat exchange parts 1221, the third heat exchange parts 1222, and the first heat exchange part 1211 that is closest to the third heat exchange parts 1222 are sequentially connected, and the plurality of first heat exchange parts 1211 are arranged at intervals in the first direction and are sequentially connected in a bent way. Therefore, the heat exchange media can sequentially flow through the fourth heat exchange parts 1223, the second heat exchange parts 1221, and the third heat exchange parts 1222, and then enter the first heat exchange sections 121; and in the first heat exchange sections 121, the fluid firstly flows through the first heat exchange part 1211 that is closest to the third heat exchange parts 1222 and finally flows to the first heat exchange part 1211 that is farthest away from the third heat exchange part 1222; or, the heat exchange media can firstly flow into the first heat exchange sections 121; in the first heat exchange sections 121, the media firstly flow through the first heat exchange part 1211 that is farthest away from the third heat exchange part 1222, flow out of the first heat exchange part 1211 that is closest to the third heat exchange part 1222, then flow to the third heat exchange parts 1222 and finally sequentially flow through the second heat exchange parts 1221 and the fourth heat exchange parts 1223 by the third heat exchange parts 1222.

In the above embodiment, the second heat exchange parts 1221 are arranged on one side of the plurality of first heat exchange parts 1211 in the second direction, the third heat exchange parts 1222 are arranged on one side of the plurality of first heat exchange parts 1211 in the first direction, the fourth heat exchange parts 1223 are arranged on the other side of the plurality of first heat exchange parts 1211 in the first direction, and thus the layout of another first heat exchange tubes 1a is limited, the diversity of the first heat exchange tubes 1a can be increased, the heat exchange requirements of different batteries 200 are met, the structures of the first heat exchange tubes 1a are simplified, and machining and manufacturing are facilitated.

By way of example, as shown in FIG. 5, the first heat exchange parts 1211, the third heat exchange parts 1222, and the fourth heat exchange parts 1223 extend in the second direction, and the second heat exchange parts 1221 extend in the first direction. Further, the first heat exchange parts 1211, the third heat exchange parts 1222, and the fourth heat exchange parts 1223 extend linearly in the second direction, and the second heat exchange parts 1221 extend linearly in the first direction. The linear structure is simple, production is convenient, arrangement is convenient, and therefore, the production complexity and the production cost of the first heat exchange flow channel 10 can be further reduced.

By way of example, the second heat exchange parts 1221 and the third heat exchange parts 1222 are in transition connection through an arc-shaped bending part, and the third heat exchange parts 1222 and the first heat exchange parts 1211 are in transition connection by an arc-shaped bending part, so that the flowing direction of the heat exchange media is changed, and the second heat exchange sections 122 extend in a preset area and exchange heat with the battery cells 100. Moreover, the arc-shaped bending parts can reduce the flowing resistance of the fluid and reduce the pressure drop, and therefore the flowing rate of the heat exchange media can be increased, and the heat exchange efficiency is further improved. By way of example, the arc-shaped bending part between the second heat exchange parts 1221 and the third heat exchange parts 1222 and the arc-shaped bending part between the third heat exchange parts 1222 and the first heat exchange parts 1211 are each in a quarter-arc shape, and therefore after the fluid passes through the arc-shaped bending parts, the flowing direction of the fluid is changed to be vertical to the original flowing direction from the original flowing direction; and moreover, the flowing resistance of the fluid can be reduced through the arc shape, the fluid can flow smoothly in the arc-shaped bending parts, and a situation that the heat exchange efficiency is reduced due to slow medium flowing is effectively prevented.

With reference to FIG. 3 and FIG. 4, in some embodiments, the second heat exchange sections 122 further include fifth heat exchange parts 1224; the fifth heat exchange parts 1224 extend along the peripheral edges of the fourth sides of the first heat exchange sections 121, and seal at least part of an opening of the U-shaped area 120 formed by the second heat exchange parts 121, the third heat exchange parts 122, and the fourth heat exchange parts 125; and one first heat exchange part 1211 can extend along the peripheral edges of the fourth sides of the first heat exchange sections 121.

It is to be understood that the fifth heat exchange parts 1224 can seal part of the opening of the U-shaped area 120 and can also completely seal the opening of the U-shaped area 120, so that the second heat exchange sections 122 can basically cover the peripheral edge position of the battery 200 and exchange heat with the peripheral edge of the battery assembly, the second heat exchange sections 122 can exchange heat with all the or most of the peripheral edges of the battery assembly; and therefore, the structures of the first heat exchange tubes 1a can be arranged according to an actual arrangement mode or heat exchange requirements of the plurality of battery cells 100, thus the heat exchange structure is optimized, and the heat exchange efficiency is improved.

In the above embodiment, by arranging the fifth heat exchange parts 1224, the second heat exchange sections 122 can exchange heat with the peripheral edges of the four sides of the assembly formed by all the battery cells 100, and the peripheral edges of the four sides of the assembly formed by the plurality of battery cells 100 can be subjected to heat exchange by the second heat exchange section 12 of one first heat exchange tube 1a, thereby improving the heat exchange effect of the peripheral edges of the four sides of the battery 200 and improving the temperature uniformity of the battery 200.

By way of example, the fifth heat exchange parts 1224 and the first heat exchange parts 1221 are oppositely arranged, the fifth heat exchange parts 1224 extend in the second direction and are connected between the second ends of the third heat exchange parts 1222 and the first heat exchange sections 111; the fifth heat exchange parts 1224 and the third heat exchange parts 1222 are connected by an included angle; and the fifth heat exchange parts 1224 and the first heat exchange sections 111 are connected by an included angle.

It is to be noted that in the embodiment of the present application, that "the fifth heat exchange parts 1224 and the third heat exchange parts 1222 are connected by an included angle" and that "the fifth heat exchange parts 1224 and the first heat exchange sections 111 are connected by an included angle" refer to that the two corresponding parts are connected and are arranged at an angle greater than 0° and smaller than 180°; and obviously, the second heat exchange parts 1222 and the second heat exchange parts 1221 are arranged at an angle greater than 0° and smaller than 180°, and the fourth heat exchange parts 1223 and the second heat exchange parts 1221 are arranged at an angle greater than 0° and smaller than 180°.

In some embodiments, the first heat exchange sections 121 are connected to the downstream of the second heat exchange sections 122 in the medium flowing direction, that is, the heat exchange media flow through the second heat exchange sections 122 and then flow into the first heat exchange sections 121, in which, the second heat exchange sections 122 are arranged around the first heat exchange sections 121 in the circumferential direction; when the first heat exchange tubes 1a exchange heat with the battery cells 100, because the peripheral temperature of the assembly (hereinafter referred to as the battery assembly) formed by all the battery cells 100 is high in heat dissipation speed, especially under the low-temperature heating condition, the high-temperature heat exchange media start to exchange heat from the second heat exchange sections 122, the first heat exchange tubes 1a can preferentially exchange heat on the outer side of the battery assembly in the circumferential direction, then the internal and external temperature difference of the battery assembly can be improved, and the service life of the battery 200 is prolonged to a certain extent.

In some embodiments, the heat exchange assembly 110 is configured as that when heating the battery cells 100, the first connecting sections 121 are connected to the downstream of the second heat exchange sections 122 in the medium flowing direction; and when cooling the battery cells 100, the first heat exchange sections 121 are connected to the upstream of the second heat exchange sections 122 in the medium flowing direction.

For example, when heating the battery assembly of the battery 200, the temperature of the heat exchange media flowing in the heat exchange assembly 110 is higher than the operation temperature of the battery 200, the heat exchange assembly 110 heats the battery assembly, the high-temperature heat exchange media flow into the second heat exchange sections 122 and then flow to the first heat exchange sections 121, and the temperature of the heat exchange media flowing in the second heat exchange sections 122 is higher than the temperature of the heat exchange media flowing in the first heat exchange sections 121.

The high-temperature media firstly enter the second heat exchange sections 122 at the periphery of the first heat exchange tubes 1a, and the second heat exchange sections 122 can heat the battery cells 100 at the periphery of the battery assembly; and after the heat exchange media enter the first heat exchange sections 121, the battery cell 100 in the middle of the battery assembly can be cooled. The battery cells 100 at the periphery of the battery assembly radiate more heat to an external environment, so the temperature of the battery cells 100 at the periphery of the battery assembly greatly decreases; the heat exchange media firstly heat the battery cells 100 at the periphery of the battery assembly, and the heat exchange media with a relatively high temperature can be make up the heat lost by the battery cells 100 due to the heat radiation to the external environment while raising the temperature of the battery cells 100 at the periphery, so that the heating requirements are met; the contact area between the battery cell 100 in the middle of the battery assembly and the external environment is small, so the heat loss is small; the heat exchange media with relatively low temperature flowing in the first heat exchange sections 121 can be matched with the heat generated by the battery cells 100 to meet the heating requirements very well, so that the heating effects of the battery cells 100 at the periphery of the battery assembly and the battery cell 100 in the middle of the battery assembly are basically consistent, and furthermore, the temperature of the battery cells 100 at the periphery of the battery assembly is consistent with the temperature of the battery cell 100 in the middle of the battery assembly after heating to increase the temperature, and thus the temperature distribution in the battery 200 is more uniform.

When cooling the battery assembly of the battery 200, the temperature of the heat exchange media flowing in the heat exchange assembly 110 is lower than the operation temperature of the battery 200 and the heat exchange assembly 110 is configured to cool the battery 200; and the heat exchange media flow to the second heat exchange sections 122 from the first heat exchange sections 121, and the temperature of the heat exchange media flowing in the first heat exchange sections 121 is lower than the temperature of the heat exchange media in the second heat exchange sections 122.

When cooling to decrease the temperature of the battery 200, the heat exchange media flow from the first heat exchange sections 121 to the second heat exchange sections 122, namely, the heat exchange media flow from the middle part of the battery assembly to the edge position of the battery assembly and exchange heat. The heat dissipation condition of the battery cells 100 at the peripheral edge position of the battery 200 is better than that of the internal battery cell 100, so that the heat exchange media with relatively low temperature of the first heat exchange sections 121 can better meet the heat dissipation requirement of the battery cell 100 in the middle of the battery assembly; moreover, the battery cells 100 at the peripheral edge position of the battery assembly can directly and naturally dissipate heat to the external environment, so the heat dissipation requirement of the peripheral battery cells 100 can still be met even if the temperature of the heat exchange media of the second heat exchange sections 122 is slightly high, and furthermore, the cooling effects of the battery cells 100 at the peripheral edge position of the battery assembly and the battery cell 100 in the middle of the battery assembly are roughly consistent; and the temperature of the battery cells 100 at the peripheral edge position of the battery assembly is consistent with the battery cell 100 in the middle of the battery assembly after cooling and heat dissipation, therefore, the internal and external temperature difference of the battery assembly is reduced, and the temperature distribution in the battery 200 is more uniform.

With reference to FIG. 5 to FIG. 7, in some embodiments, at least one heat exchange tube 1 is constructed to be the second heat exchange tube 1b; the second heat exchange tubes 1b and the first heat exchange tubes 1a are arranged at the same side of the battery cells 100; the communication sections 12 of the second heat exchange tubs 1b are bent and arranged in the U-shaped areas 120 of the first heat exchange tubes 1a; and the communication sections 12 of the second heat exchange tubes 1b and the communication sections 12 of the first heat exchange tubes 1a have the same or different bending structures.

For example, when the bending structures of the communication sections 12 of the second heat exchange tubes 1b are the same as those of the communication sections 12 of the first heat exchange tubes 1a, the communication sections 12 of the second heat exchange tubes 1b can include the U-shaped areas 120 which are the same as the communication sections 12 of the first heat exchange tubes 1a in structure; the communication sections 12 of the second heat exchange tubes 1b also include a plurality of first heat exchange parts, second heat exchange parts, third heat exchange parts, and fourth heat exchange parts; the fourth heat exchange parts, the second heat exchange parts, and the third heat exchange parts of the second heat exchange tubes 1b are sequentially bent and connected to form a U-shaped structure; the plurality of first heat exchange parts of the second heat exchange tubes 1b are arranged in the U-shaped areas 120 of the second heat exchange tubes 1b; the plurality of first heat exchange parts are arranged at intervals and are sequentially bent and connected; and the first heat exchange parts, the second heat exchange parts, the third heat exchange parts, and the fourth heat exchange parts of the second heat exchange tubes 1b are arranged in the U-shaped areas 120 of the first heat exchange tubes 1a.

Definitely, in other examples, the bending structures of the communication sections 12 of the second heat exchange tubes 1b can be different from those of the communication sections 12 of the first heat exchange tubes 1a.

In the above technical solution, by arranging the second heat exchange tubes 1b, the diversity of the heat exchange flow channel 10 of the heat exchange assembly 110 can be increased, the arrangement of the heat exchange tubes 1 is more flexible, the heat exchange effect of the heat exchange assembly 110 is further improved, and the temperature uniformity of the battery 200 is improved.

By way of example, for the second heat exchange tubes 1b, the plurality of first heat exchange parts 1211 are sequentially connected in a bent mode in the first direction, the second heat exchange parts 1221 are located on the sides of the plurality of first heat exchange parts 1211 along the second direction, the third heat exchange parts 1222 are located on one side of the plurality of first heat exchange parts 1211 along the first direction, and the first direction and the second direction are arranged by an included angle; the first ends of the third heat exchange parts 1222 are connected to the ends of the second heat exchange parts 1221 along the first direction, the second ends of the third heat exchange parts 1222 are connected to one, which is closest to the third heat exchange parts 1222, of the plurality of first heat exchange parts 1211 along the first direction, and the fourth heat exchange parts 1223 are located on the other side of the plurality of first heat exchange parts 1211 along the first direction; and one end of each fourth heat exchange part 1223 is connected to the end of the corresponding second heat exchange part 1221 away from the corresponding third heat exchange part 1222, and the other end of each fourth heat exchange part 1223 extends towards a direction away from the corresponding second heat exchange part 1221 along the second direction.

Definitely, in other examples, for the second heat exchange tubes 1b, the plurality of first heat exchange parts 1211 are sequentially connected in a bent mode in the first direction, the second heat exchange part 1221 is located on the sides of the plurality of first heat exchange parts 1211 along the first direction, the third heat exchange parts 1222 are located on one side of the plurality of first heat exchange parts 1211 along the second direction, and the first direction and the second direction are arranged by an included angle; the first ends of the third heat exchange parts 1222 are connected to the ends of the second heat exchange part 1221 along the second direction, the second ends of the third heat exchange parts 1222 are connected to one, which is farthest from the second heat exchange part 1221, of the plurality of first heat exchange parts 1211 along the first direction, and the fourth heat exchange parts 1223 are located on the other side of the plurality of first heat exchange parts 1211 along the second direction; and one end of each fourth heat exchange part 1223 is connected to the end of the corresponding second heat exchange part 1221 away from the corresponding third heat exchange part 1222, and the other end of each fourth heat exchange part 1223 extends towards a direction away from the corresponding second heat exchange part 1221 along the first direction.

With reference to FIG. 7, in some embodiments, the communication sections 12 of the second heat exchange tubes 1b include the U-shaped areas 120 which have the same structure as the communication sections 12 of the first heat exchange tubes 1a; at least part of the first heat exchange sections 121 of the communication sections 12 of the first heat exchange tubes 1a are arranged in the U-shaped areas 120 of the second heat exchange tubes 1b, part of the first heat exchange sections 121 of the communication sections 12 of the first heat exchange tubes 1a are arranged in the U-shaped areas 120 of the second heat exchange tubes 1b, or, the first heat exchange tubes 121 of the communication sections 12 of the first heat exchange tubes 1a are completely arranged in the U-shaped areas 120 of the second heat exchange tubes 1b.

In the above technical solution, at least part of the first heat exchange sections 121 of the first heat exchange tubes 1a are arranged in the U-shaped areas 120 of the second heat exchange tubes 1b so that the first heat exchange tubes 1a and the second heat exchange tubes 1a are arranged in the mutually winding manner, therefore, a winding manner of the plurality of heat exchange tubes 1 can be arranged according to heat exchange requirements of all the parts of the battery assembly, the heat exchange effect of the heat exchange assembly 110 is further increased and the temperature uniformity of the battery 200 is improved.

With reference to FIG. 7, in some embodiments, the communication sections 12 of the second heat exchange tubes 1b include third heat exchange sections 123 and fourth heat exchange sections 124 which are connected in a bent way; the third heat exchange sections 123 and the fourth heat exchange sections 124 are bent to form the U-shaped areas 120 respectively; the third heat exchange sections 123 are arranged in the U-shaped areas 120 of the fourth heat exchange sections 124; and at least part of the first heat exchange sections 121 of the first heat exchange tubes 1a are arranged in the U-shaped areas 120 of the third heat exchange sections 123.

In the embodiment of the present application, the U-shaped areas 120 of the third heat exchange sections 123 and the U-shaped areas 120 of the fourth heat exchange sections 124 can have the same or different opening direction. By way of example, the U-shaped areas 120 of the third heat exchange sections 123 and the U-shaped areas 120 of the fourth heat exchange sections 124 have the same opening direction, three heat exchange parts of the third heat exchange sections 123 and three heat exchange parts of the fourth heat exchange sections 124 can be arranged in parallel respectively, so that the arrangement of the second heat exchange tubes 1b is simplified, and moreover, the avoidance is provided for at least part of the first heat exchange sections 121 of the first heat exchange tubes 1a to extend into the U-shaped areas 120 of the third heat exchange sections 123.

In the above technical solution, at least part of the first heat exchange sections 121 of the first heat exchange tubes 1a are arranged in the U-shaped areas 120 of the third heat exchange sections 123, the at least part of the first heat exchange sections 121 of the first heat exchange tubes 1a are also arranged in the U-shaped areas 120 of the fourth heat exchange sections 124, thus the winding arrangement of the first heat exchange tubes 1a and the second heat exchange tubes 1b is conveniently simplified on the premise that the first heat exchange tubes 1a and the second heat exchange tubes 1b are mutually wound, meanwhile, the heat exchange effect is further improved, and the temperature uniformity of the battery 200 is improved.

By way of example, as shown in FIG. 7, the third heat exchange sections 123 include seventh heat exchange parts 1231, eighth heat exchange parts 1232, and ninth heat exchange parts 1233; the eighth heat exchange parts 1232 and the ninth heat exchange parts 1233 are respectively connected to two ends of the length of the seventh heat exchange parts 1231 in a bent way; the fourth heat exchange sections 124 include tenth heat exchange parts 1241, eleventh heat exchange parts 1242, and twelfth heat exchange parts 1243; and the eleventh heat exchange parts 1242 and the twelfth heat exchange parts 1243 are respectively connected to two ends of the length of the tenth heat exchange parts 1241 in a bent way.

For example, the seventh heat exchange parts 1231 and the tenth heat exchange parts 1241 extend in parallel; and the eighth heat exchange parts 1232, the ninth heat exchange parts 1233, the eleventh heat exchange parts 1242, and the twelfth heat exchange parts 1243 extend in parallel; and in other examples, the seventh heat exchange parts 1231 and the tenth heat exchange parts 1241 also can be arranged by an included angle.

With reference to FIG. 7, in some embodiments, the communication sections 12 of the second heat exchange tubes 1b also include fifth heat exchange sections 125; the fifth heat exchange sections 125 include a plurality of sixth heat exchange parts 1251 and second bending parts 1252; the plurality of sixth heat exchange parts 1251 are arranged at intervals along the third direction X3, and each sixth heat exchange part 1251 extends along the fourth direction X4; the second bending parts 1252 are connected between two adjacent sixth heat exchange parts 1251 in a bent way, so that the plurality of sixth heat exchange parts 1251 are sequentially connected, and the third direction and the fourth direction are arranged by an included angle.

The fifth heat exchange sections 125 are arranged between the third heat exchange sections 123 and the fourth heat exchange sections 124; and/or, the fifth heat exchange sections 125 are arranged between the third heat exchange sections 123 and corresponding ports 11 (namely the ports 11 corresponding to the ends of the third heat exchange sections 123 deviating from the fourth heat exchange sections 124). Therefore, the fifth heat exchange sections 125 are arranged at at least one of two ends of the third heat exchange sections 123 in the length direction; and the fifth heat exchange sections 125 can be arranged in the U-shaped areas 120 of the fourth heat exchange sections 124 and are located outside the U-shaped areas 120 of the third heat exchange sections 123.

By way of example, the second bending parts 1252 are arc-shaped and a certain included angle is formed between fluid flowing directions of two ends of the second bending parts 1252, so that the second bending parts 1252 can change the flowing direction of fluid, and two connected sixth heat exchange parts 1251 can be arranged in a pre-set area in an extending manner, and furthermore, the heat exchange area of the fifth heat exchange sections 125 can be increased, and the heat exchange efficiency of the fifth heat exchange sections 125 is improved. Moreover, the second bending parts 1252 are arc-shaped and the arc shape can reduce the flowing resistance of the fluid and reduce pressure drop, so that the flowing speed of the fluid can be improved, and the heat exchange efficiency of the fifth heat exchange sections 125 is further improved. Furthermore, the second heat exchange tubes 1b have a more compact structure and occupy a smaller space, so that the miniaturization design of the battery 200 is convenient to realize.

By way of example, the second bending parts 1252 are semi-arc-shaped so that the two sixth heat exchange parts 1251 which are parallel to each other and are arranged at an interval are convenient to connect, the design diversity of the heat exchange flow channel 10 is easy to increase, the adaptability of the second heat exchange tubes 1b to the plurality of battery cells 100 is improved, the structure is simple and the production is convenient to realize. Definitely, the bending angle of the second bending parts 1252 can be adjusted according to requirements, for example, the bending angle can be 150°, or 135°.

In addition, the number of the second bending parts 1252 can be one, two, three or more; and the second bending parts 1252 enable the second heat exchange tube 1b to be arranged in a circuitous manner, so that the heat exchange area of the second heat exchange tubes 1b is convenient to increase and the heat exchange efficiency is improved.

In the above technical solution, by arranging the fifth heat exchange sections 125, the heat exchange area of the second heat exchange tubes 1b is further increased, the heat exchange effect of the second heat exchange tubes 1b is improved, and moreover, the temperature control to the internal battery cells 100 is facilitated; and moreover, the arrangement of the fifth heat exchange sections 125 cannot affect the mutual winding between the first heat exchange tubes 1a and the second heat exchange tubes 1b.

For example, the third direction X3 is the same as the first direction X1, and the fourth direction X4 is the same as the second direction X2.

With reference to FIG. 7, in some embodiments, at least one heat exchange tube 1 is constructed to be the third heat exchange tube 1c; the communication sections 12 of the third heat exchange tubes 1c are arranged in the U-shaped areas 120 of the second heat exchange tubes 1b in a bent way, and the communication sections 12 of the third heat exchange tubes 1c are nonlinear.

In the above technical solution, the communication sections 12 of the third heat exchange tubes 1c are arranged in the U-shaped areas 120 of the second heat exchange tubes 1b in a bent way, so that the good temperature control to the internal battery cells 100 is further achieved, the temperature distribution of the whole battery 200 is improved, and the temperature uniformity of the battery 200 is improved.

For example, the second heat exchange tubes 1b include the third heat exchange sections 123 and the fourth heat exchange sections 124 which are connected in a bent way, the communication sections 12 of the third heat exchange tubes 1c are bent and arranged in thee U-shaped areas 120 of the fourth heat exchange sections 124 and are located outside the U-shaped areas 120 of the third heat exchange sections 123; or, the communication sections 12 of the third heat exchange tubes 1c are bent and arranged in the U-shaped areas 120 of the third heat exchange sections 123.

In the embodiment of the present application, the bending arrangement of the part of the third heat exchange tubes 1c arranged in the U-shaped areas 120 of the second heat exchange tubes 1b is not specifically limited, for example, the third heat exchange tubes 1c are approximately S-shaped, but not limited thereto. As shown in FIG. 7, the communication sections 12 of the third heat exchange tubes 1c include the sixth heat exchange sections 126 and the seventh heat exchange sections 127; the sixth heat exchange sections 126 are bent to form the U-shaped areas 120, the seventh heat exchange sections 127 are arranged in the U-shaped areas 120 of the sixth heat exchange sections 126 in a bent way, and the seventh heat exchange sections 127 are connected to the sixth heat exchange sections 126 in a bent way.

By way of example, the seventh heat exchange sections 127 include a plurality of thirteenth heat exchange parts 1271 and third bending parts 1272; the plurality of thirteenth heat exchange parts 1271 are arranged at intervals along the first direction, and each thirteenth heat exchange part 1271 extends along the second direction; and the third bending parts 1272 are arc-shaped and are connected between two adjacent thirteenth heat exchange parts 1271 in a bent way, so that the plurality of thirteenth heat exchange parts 1271 are sequentially connected; definitely, the plurality of thirteenth heat exchange parts 1271 can also be arranged at intervals along the second direction, and each thirteenth heat exchange part 1271 extends along the first direction, but not limited thereto.

In the embodiment of the present application, no matter the number of the heat exchange tubes 1 in the heat exchange assembly 110, when the number of the heat exchange tubes 1 constructed to be the first heat exchange tube 1a is one, namely, when the number of the first heat exchange tube 1a is one, the U-shaped area of the first heat exchange tube 1a is located in the outermost circumferential direction of the heat exchange assembly 110.

In a second aspect, the embodiment of the present application provides a battery 200 which includes a box 101 and battery cells 100, and the battery cells 100 are arranged in the box 101. The battery 200 further includes at least one of a first heat exchange assembly 102, a second heat exchange assembly 103, and a third heat exchange assembly 104; at least one of the first heat exchange assembly 102, the second heat exchange assembly 103, and the third heat exchange assembly 104 is configured to exchange heat with the battery cells 100, and at least one of the first heat exchange assembly 102, the second heat exchange assembly 103 and the third heat exchange assembly 104 is the heat exchange assembly 110; the first heat exchange assembly 102 is arranged in the box 101, and the first heat exchange assembly 102 is located between the battery cells 100 and the box 101; the second heat exchange assembly 103 is arranged outside the box 101; and the third heat exchange assembly 104 is arranged between the two adjacent battery cells 100.

In the above technical solution, at least one of the first heat exchange assembly 102, the second heat exchange assembly 103, and the third heat exchange assembly 104 is the heat exchange assembly 110 and is configured to exchange heat with the battery cells 100; and the heat exchange assembly 110 is convenient to assemble and seal, so that the assembling efficiency of the battery 200 is easy to improve.

For example, the battery 200 includes the first heat exchange assembly 102 which is the abovementioned heat exchange assembly 110; heat exchange tubes 1 are arranged in the box 101 and are located between the battery cells 100 and the box 101, so that good heat transfer between the heat exchange tubes 1 and the battery cells 100 is convenient to realize; and moreover, the heat exchange tubes 1 is convenient to seal. At the moment, the first heat exchange assembly 102 can be arranged on any side of the battery cells 100; for example, the first heat exchange assembly 102 is arranged on at least one of the upper side, the lower side, the left side, the right side, the front side, and the rear side of the battery cells 100; that is, for the box 101, the first heat exchange assembly 102 is arranged on at least one of a top wall, a bottom wall 1011a, a left wall, a right wall, a front wall, and a rear wall of the box 101.

The mode of fixing the first heat exchange assembly 102 to the box 101 includes, but is not limited to, that the first heat exchange assembly 102 and the box 101 are bonded and fixed, for example, the first heat exchange assembly 102 is bonded to the box 101 by a double-sided adhesive tape or a structural adhesive.

For another example, the battery 200 includes a second heat exchange assembly 103; the second heat exchange assembly 103 can be attached to the outer wall of the box 101, so as to exchange heat with the battery cells 100 by the box 101; the second heat exchange assembly 103 is the abovementioned heat exchange assembly 110; the heat exchange tubes 1 are arranged outside the box 101, so that the heat exchange tubes 1 and the battery cells 100 are separated by the box 101, it is not needed to perform insulation between the heat exchange tube 1 and the battery cells 100, thus the insulation design of the second heat exchange assembly 103 can be simplified, the arrangement of the battery 200 is simplified, and the processing difficulty and the production cost are reduced; and moreover, the second heat exchange assembly 103 does not occupy the space in the box 101, so that the capacity of the battery 200 will not be reduced due to the second heat exchange assembly 103.

In the embodiment of the present application, when the battery 200 includes the second heat exchange assembly 103, the arrangement position of the second heat exchange assembly 103 is not specifically limited; for example, the second heat exchange assembly 103 can be arranged on a lower side of the bottom wall 1011a of the box 101, thus the second heat exchange assembly 103 can exchange heat with the battery cells 100 in a relatively range, and the temperature regulation effect and the temperature regulation efficiency of the battery cells 100 are improved; and at the moment, a bottom protection plate 113 can be arranged below the second heat exchange assembly 103, so that the second heat exchange assembly 103 can be protected more reliably, the risk that the second heat exchange assembly 103 is collided and damaged is reduced, and the working reliability of the second heat exchange assembly 103 is improved.

For yet another example, when the battery 200 includes a third heat exchange assembly 104 which can exchange heat with an adjacent battery cells 100, and the third heat exchange assembly 104 can exchange heat with at least two battery cells 100.

With reference to FIG. 10 to FIG. 12, in some embodiments, the battery 200 includes the first heat exchange assembly 102 and a fixed beam 105; the fixed beam 105 is arranged in the box 101 and divides the internal space of the box 101 into a first chamber 101a and a second chamber 101b; a part of the first heat exchange assembly 102 and the battery cells 100 are arranged in the first chamber 101a; and the part of a first heat exchange part 1211 located in the first chamber 101a is configured to exchange heat with the battery cells 100; at least one avoiding channel 200a is formed between the fixed beam 105 and the box 101, part of wall surface of the avoiding channel 200a is defined by part of surface of the fixed beam 105, and part of wall surface of the avoiding channel 200a is defined by part of surface of the box 101. All the end portions 11 of the converging position R penetrate through the corresponding avoiding channels 200a, so that the end portions 11 extend to the second chamber 101b from the first chamber 101a.

In the above technical scheme, at least one avoiding channel 200a is formed between the fixed beam 105 and the box 101, and all the end portions 11 of the converging position R penetrate through the corresponding avoiding channels 200a so as to extend from the first chamber 101a to the second chamber 101b, which facilitates to assemble all the end portions 11 of the converging position R and the fixed beam 105, facilitates all the end portions 11 of the converging position R to extend to the second chamber 101b without bending around the fixed beam 105, and is conducive to simplifying the structures of all the end portions 11 of the converging position R; moreover, by arranging the avoiding channels 200a, connectors of the end portions 11 can be located in the second chamber 101b, namely the connectors of the end portions 11 and the battery cells 100 are respectively located in different chambers, so that the box 101 provides a proper arrangement space for the communication between the connectors of the end portions 11 and other components, and the communication arrangement between the end portions 11 and other components is facilitated; moreover, the fixed beam 105 can separate the connector positions of the end portions 11 from the battery cells 100, thus reducing the influence of heat exchange medium leakage at the connector positions of the end portions 11 on the battery cells 100, and improving the use reliability of the battery cells 100.

For example, the avoiding channels 200a are in one-to-one correspondence with the converging positions R, so that the cross section area of the avoiding channels 200a can be reduced on the premise of realizing smooth assembling of the converging positions R; if the fixed beam 105 defines the avoiding channels 200a, the weakening on the structural strength of the fixed beam 105 is reduced.

Abutting fit, as shown in FIG. 10, the fixed beam 105 extends in the first direction, the first chamber 101a and the second chamber 101b are sequentially arranged in the second direction, and all the end portions 11 of the converging positions R penetrate through the corresponding avoiding channels 200a in the second direction, so that each end portion 11 of the converging positions R extends out of two ends of the avoiding channels 200a in the second direction; each heat exchange tube 1 is further provided with a communication section 12 connected between the two end portions 11, and the communication sections 12 of all the heat exchange tubes 1 are located in the first chamber 101a.

Further, when the heat exchange tubes 1 are flat tubes or harmonica-shaped tubes, the plurality of end portions 11 of the converging positions R can be arranged at intervals along the width direction of the end portions 11, so that the height of the avoiding channels 200a in the thickness direction of the heat exchange tubes 1 is easy to reduce, the molding difficulty of the avoiding channels 200a is reduced, and/or, the weakening on a corresponding structure is reduced.

In some embodiments, the first chamber 101a can also be provided with other components, besides the battery cells 100. For example, the fixed beam 105 is constructed to be a first expansion beam B1, a second expansion beam B2 can also be arranged in the first chamber 101a, and all the battery cells 100 are clamped between the first expansion beam B1 and the second expansion beam B2; for another example, the fixed beam 105 is constructed to be the first expansion beam B1, the second expansion beam B2 and a third expansion beam B3 can also be arranged in the first chamber 101a, the third expansion beam B3 is located between the first expansion beam B1 and the second expansion beam B2, the battery cells 100 are arranged between the first expansion beam B1 and the third expansion beam B3, and the battery cells 100 are also arranged between the second expansion beam B2 and the third expansion beam B3.

It is to be noted that the fixed beam 105 can be constructed to be the expansion beam or other beam structures except the expansion beam in the box 101, such as a separation beam.

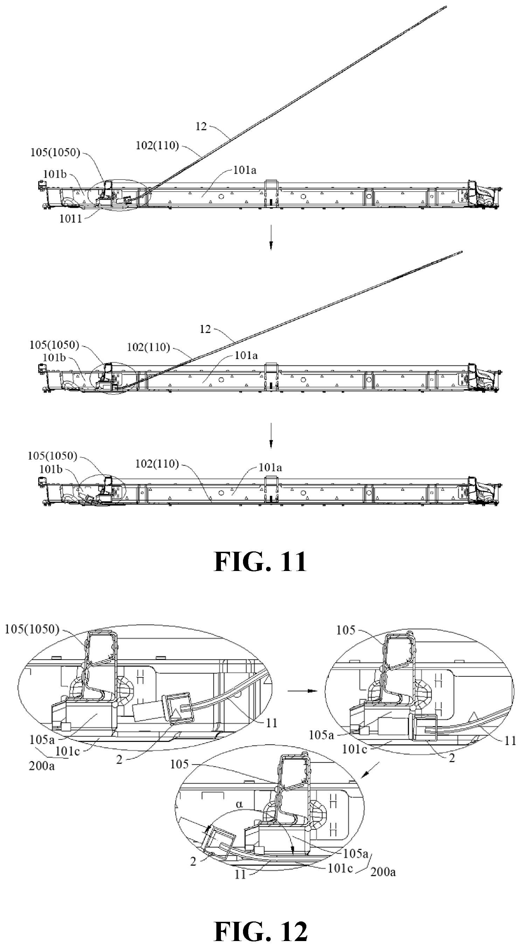

With reference to FIG. 12, in some embodiments, the fixed beam 105 is provided with a first concave part 105a, and/or, a wall of the box 101 is provided with a second concave part 101c, and the first concave part 105a and/or the second concave part 101c are/is constructed to be the avoiding channel 200a. For example, the fixed beam 105 is provided with the first concave part 105a, and the wall of the box 101 is not provided with the second concave part 101c, only the first concave part 105a is constructed to be the avoiding channel 200a; or, the fixed beam 105 is not provided with the first concave part 105a, and the wall of the box 101 is provided with the second concave part 101c, only the second concave part 101c is constructed to be the avoiding channel 200a; or, the fixed beam 105 is provided with the first concave part 105a, and the wall of the box 101 is provided with the second concave part 101c, the first concave part 105a and the second concave part 101c are matched to construct the avoiding channel 200a.

In the above solution, the wall of the box 101 is to be understood as the wall of the box 101 corresponding to the first heat exchange assembly 102. For example, the first heat exchange assembly 102 is arranged between the bottom wall 1011a of the box 101 and the battery cells 100, the avoiding channel 200a is formed between the bottom wall 1011a of the box 101 and the fixed beam 105, and all the end portions 11 of the converging positions R of the first heat exchange assembly 102 are arranged in the corresponding avoiding channel 200a in a penetrating manner; for yet another example, the first heat exchange assembly 102 is arranged between the top wall of the box 101 and the battery cells 100, the avoiding channel 200a is formed between the top wall of the box 101 and the fixed beam 105, and all the end portions 11 of the converging position R of the first heat exchange assembly 102 are arranged in the corresponding avoiding channel 200a in a penetrating manner; and for still yet another example, the first heat exchange assembly 102 is arranged between the side wall of the box 101 and the battery cells 100, the avoiding channel 200a is formed between the side wall of the box 101 and the fixed beam 105, and all the end portions 11 of the converging position R of the first heat exchange assembly 102 are arranged in the corresponding avoiding channel 200a in a penetrating manner.

Therefore, the first heat exchange assembly 102 and the corresponding avoiding channel 200a can be located at the same side of the battery cells 100, thus facilitating penetrating and assembling of the first heat exchange assembly 102.

In the above technical solution, the first concave part 105a and/or the second concave part 101c are/is constructed to be the avoiding channel 200a, so that the avoiding channel 200a is convenient to form; and meanwhile, the avoiding channel 200a has a proper cross section area capable of accommodating all the end portions 11 at the corresponding converging positions R according to the requirements, so that the cross section area of the avoiding channel 200a can be properly reduced on the premise of realizing smooth penetration of all the end portions 11 at the converging positions R, and the forming difficulty of the avoiding channel 200a can be reduced, and/or, the weakening on the fixed beam 105 is reduced.

With reference to FIG. 11 and FIG. 12, in some embodiments, the parts, located at two opposite sides of the fixed beam 105, of all the end portions at the converging positions R are connected by an obtuse angle, namely, an included angle α between the parts, located at the two opposite sides of the fixed beam 105, of all the end portions 11 at the converging position R is an obtuse angle.

In the above technical solution, the parts, located on two opposite sides of the fixed beam 105, of all the end portions 11 at the converging positions R are connected by the obtuse angle, so that one end of each of all the end portions 11 at the converging positions R is firstly aligned to the avoiding channel 200a in the assembling process of the first heat exchange assembly 102, and at the moment, the first heat exchange assembly 102 is roughly obliquely arranged; an inclined angle of the first heat exchange assembly 102 gradually reduces along the penetration of all the end portions 11 at the converging positions R until all the end portions 11 at the converging position R are completely penetrated; at the moment, most of the first heat exchange assembly 102 is fitted with the corresponding wall of the box 101, so that the penetration of all the end portions 11 at the converging positions R is convenient to realize, and the mounting convenience of the first heat exchange assembly 102 is easy to improve.

Therefore, the above solution is particularly suitable for assembling the first heat exchange assembly 102 on the box 101 after the fixed beam 105 and the box 101 are assembled; for example, after the fixed beam 105 and the box 101 are welded, the fixed beam 105 and the box 101 are subjected to electrophoresis together; after the electrophoresis is finished, the first heat exchange assembly 102 is mounted. Definitely, in other embodiments of the present application, the first heat exchange assembly 102 can be assembled on the box 101 and then the fixed beam 105 and the box 101 are assembled.

Definitely, in other embodiments, the included angle α can also be a straight angle.

With reference to FIG. 10, in some embodiments, the first heat exchange assembly 102 further includes at least one current collector 2; the current collectors 2 are located in the second chamber 101b and correspond to the converging positions R one by one. The current collector 2 is in communication with connectors of the plurality of end portions 11 corresponding to the converging position R, or, the current collector 2 divides the connectors of the plurality of end portions 11 corresponding to the converging position R into a plurality of independent flow channels.

In the above technical solution, the current collector 2 is arranged, and the plurality of end portions 11 located at the same converging position R share the same current collector 2, and thus the overall structural stability and reliability of the heat exchange assembly 110 are improved on the premise that the medium in each heat exchange tube 1 normally circulates; and moreover, the current collector 2 is arranged in the second chamber 101b and does not occupy the space of the avoiding channel 200a or the first chamber 101a, so that the arrangement of the current collector 2 does not easily influence the energy density of the battery 200 and does not easily influence the arrangement of the fixed beam 105 and/or the box 101.

With reference to FIG. 11 and FIG. 12, in some embodiments, the avoiding channel 200a is configured to allow the corresponding current collector 2 to pass through; for example, after the fixed beam 105 and the box 101 are assembled, the avoiding channel 200a is formed between the fixed beam 105 and the box 101, and when assembling the first heat exchange assembly 102, the current collector 2 can move to the side, of the fixed beam 105 corresponding to the second chamber 101b from the side of the fixed beam 105 corresponding to the first chamber 101a by the avoiding channel 200a.

It is to be understood that in the above solution, the heat exchange tubes 1 and the current collector 2 can be fixedly connected, and after the fixed beam 105 and the box 101 are assembled, the structure for connecting the heat exchange tubes 1 with the current collector 2 is assembled to the box 101; obviously, by means of such mounting, the box 101 and the fixed beam 105 are not easy to limit the operation space when connecting the heat exchange tubes 1 with the current collector 2 (such as welding the heat exchange tubes 1 with the current collector 2), which is conducive to improving the connection convenience of the heat exchange tubes 1 and the current collector 2.

In the above technical solution, the avoiding channel 200a is configured to allow the corresponding current collector 2 to pass through, so that enough operation space is provided when connecting the heat exchange tubes 1 with the current collector 2, and the operation of connecting the heat exchange tubes 1 with the current collector 2 is facilitated.

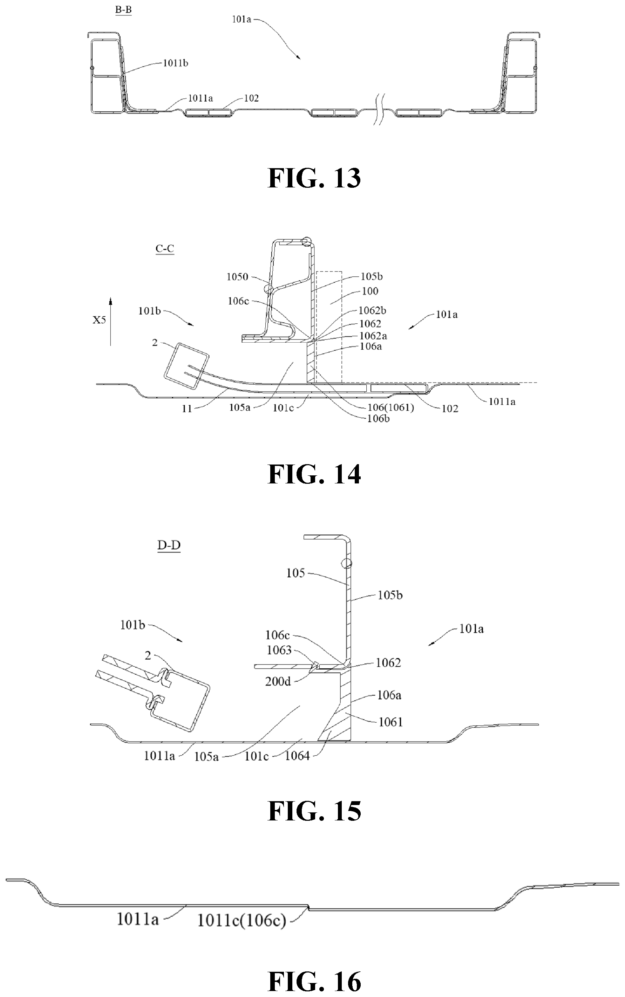

With reference to FIG. 14 to FIG. 21, in some embodiments, the fixed beam 105 is constructed to be a first expansion beam B1, and the fixed beam 105 is provided with a first matching surface 105b that is abutted against the battery cells 100; the battery 200 further includes a bearing member 106; the bearing member 106 is arranged in the avoiding channel 200a and is provided with a second matching surface 106a that is abutted against the battery cells 100; the first matching surface 105b is flush with the second matching surface 106a, for example, the first matching surface 105b and the second matching surface 106a can be located on the same plane; the bearing member 106 is provided with a notch 106b for avoiding the end portions 11 at the corresponding converging positions R, the notch 106b penetrates through the peripheral side of the bearing member 106 and can avoid the corresponding end portions 11, and therefore the bearing member 106 can be smoothly installed after the first heat exchange assembly 102 is mounted.

It is to be understood that the first matching surface 105b can make direct contact with the battery cells 100, or, the first matching surface 105b abuts against the battery cells 100 indirectly; similarly, the second matching surface 106a can make direct contact with the battery cells 100, or, the second matching surface 106a abuts against the battery cells 100 indirectly. At least one notch 106b is formed in the bearing member 106 and configured to avoid one or more end portions 11.

In the above technical solution, the bearing member 106 is arranged at the avoiding channel 200a, and the second matching surface 106a is flush with the first matching surface 105b, the bearing member 106 and the fixed beam 105 can bear the expansion force of the battery cells 100 together, thus the risk that a lithium precipitation is prone to being caused due to excessively large deformation difference between the position of the avoiding channel 200a and other positions of the battery cells 100 is reduced, moreover, the risk that a shell of the battery cells 100 is broken and electrolyte leaks due to non-uniform stress is reduced, and therefore the use reliability of the battery 200 is improved.

For example, the notch 106b can be located in the side of the bearing member 106 deviating from the fixed beam 105 and corresponding to the wall surface of the avoiding channel 200a, and the side of the notch 106b deviating from the fixed beam 105 is open; for example, the first heat exchange assembly 102 is arranged on the bottom wall 1011a of the box 101, the fixed beam 105 is arranged on the upper side of the bottom wall 101 1a, the lower side of the notch 106b is open, and at the moment, the bearing member 106 can separate the first heat exchange assembly 102 from the fixed beam 105, so that thermal resistance between the first heat exchange assembly 102 and the fixed beam 105 is increased, and the heat or cold transferred to the fixed beam 105 by the first heat exchange assembly 102 is reduced.

With reference to FIG. 14 and FIG. 15, in some embodiments, a stop part 106c is formed on at least one of the fixed beam 105 and the box 101, and the stop part 106c is in abutting fit with the bearing member 106 to limit the movement of the bearing member 106 in the direction from the first chamber 101a to the second chamber 101b. Similarly, it is to be understood that the stop part 106c is in direct contact fit with the bearing member 106, or the stop part 106c is in indirect abutting fit with the bearing member 106.

In the above technical solution, the stop part 106c is formed on at least one of the fixed beam 105 and the box 101 to limit the movement of the bearing member 106 in the direction from the first chamber 101a to the second chamber 101b, so that the reliable limitation to the bearing member 106 in the width direction (such as the second direction X2 in FIG. 3) of the fixed beam 105 is realized, meanwhile, the stop part 106c can resist the expansion force applied by the battery cells 100 to the bearing member 106, the bearing capacity of the bearing member 106 is favorably improved, the bearing member 106 stably bears the expansion force of the battery cells 100, and the probability that the bearing member 106 moves towards the second chamber 101b by the battery cells 100 is reduced; and if at least one of the fixed beam 105 and the box 101 is also fixedly connected to the bearing member 106 in other modes, such as at least one of the fixed beam 105 and the box 101 is bonded with the bearing member 106; and the above solution is favorable for reducing the acting force borne by at least one of the fixed beam 105 and the box 101 in other connection modes with the bearing member 106, and the arrangement reliability and stability of the bearing member 106 are favorably improved.

With reference to FIG. 13 to FIG. 16, in some embodiments, the stop part 106c is formed at the position of the avoiding passage 200a on the side of the fixed beam 105 facing the first chamber 101a, i.e., the end of the part of the fixed beam 105 corresponding to the avoiding passage 200a and facing the first chamber 101a forms the stop part 106c; and/or, a stop step 1011c protruding towards the fixed beam 105 is formed on the wall of the box 101 provided with the first heat exchange assembly 102, and the stop step 1011c forms the stop part 106c.

Abutting fit, as shown in FIG. 13, the fixed beam 105 is provided with a first concave part 105a, and the stop part 106c is formed at the end of the first concave part 105a facing the first chamber 101a; and/or, as shown in FIG. 15, the wall of the box 101 is provided with a second concave part 101c, and the stop step 1011c is formed on the bottom wall of the second concave part 101c.

In the above technical solution, the stop part 106c is formed at the position of an avoiding space 200a on the side of a fixed beam 105 facing the first chamber 101a, so that the stop part 106c is conveniently defined by the structure of the fixed beam 105 to achieve limitation to the bearing member 106, additional independent arrangement is not needed, and the structure of the fixed beam 105 is favorably simplified; moreover, the stop part 106c is arranged at the side of the fixed beam 105 facing the first chamber 101a, which is conveniently matched with the mounting mode of the bearing member 106 "matched with the avoiding space 200a along the direction from the first chamber 101a to the second chamber 101b", the stop part 106c cannot interfere with assembling of the bearing member 106, and the assembling convenience is favorably improved; the stop step 1011c protruding towards the fixed beam 105 is formed on the wall of the box 101, the stop step 1011c forms the stop part 106c, so that the stop part 106c is conveniently defined by the structure of the box 101 to achieve limitation to the bearing member 106, additional independent arrangement is not needed, the structure of the box 101 is favorably simplified, and moreover, the sealing performance of the structure of the box 101 cannot be affected by the stop step 1011c.

Abutting fit, the first concave part 105a of the fixed beam 105 is constructed to be at least part of the avoiding space 200a, the stop part 106c is formed at the end of the first concave part 105a facing the first chamber 101a, thus the matching area of the fixed beam 105 and the bearing member 106 is favorably expanded, and the arrangement reliability and the bearing capability of the bearing member 106 are further improved; and/or, the second concave part 101c is formed on the wall of the box 101 provided with a first heat exchange assembly 102, and the stop step 1011c is formed on the groove wall of the second concave part 101c.

With reference to FIG. 13, in some embodiments, on a cross section of the fixed beam 105, the stop part 106c on the fixed beam 105 is formed into an arc-shaped structure, and a cross section of the fixed beam 105 is vertical to a length direction of the fixed beam 105 (such as the first direction X1 in FIG. 3).

In the above technical solution, the stop part 106c arranged on the fixed beam 105 on the cross section of the fixed beam 105 forms the arc-shaped structure, so that the stop part 106c can limit the movement of the bearing member 106 and the part of the bearing member 106 matched with the stop part 106c can be avoided to a certain extent; moreover, the stop part 106c is located on the side of the fixed beam 105 facing the first chamber 101a, the situation that the bearing member 106 is easily protruded out of the first matching surface 105b towards the first chamber 101a due to matching with the stop part 106c is reduced, and the second matching surface 106a is flush with the first matching surface 105b. In addition, when the part of the fixed beam 105 corresponding to the stop part 106c is an integrally molded bent plate, the stop part 106c can be located at a bent position of the plate, so that the stop part 106c can be directly molded in a bent plate molding process, and furthermore, machining procedures of the fixed beam 105 are saved, the machining difficulty is reduced and the production efficiency is improved.

With reference to FIG. 13, FIG. 14, and FIG. 18t to FIG. 21, in some embodiments, the bearing member 106 includes a plate body part 1061 and a matching part 1062; the second matching surface 106a is formed on the surface of one side of the plate body part 1061 in the thickness direction; the second matching surface 106a is located on the side of the plate body part 1061 facing the first chamber 101; the notch 106b penetrates through two sides of the plate body part 1061 in the thickness direction; the matching part 1062 is formed at the outer edge of the plate body part 1061 and is in abutting fit with the fixed beam 105 to limit the movement of the bearing member 106 along the direction from the first chamber 101a to the second chamber 101b, for example, the matching part 1062 is in abutting fit with the stop part 106c on the fixed beam 105.

In the above technical solution, the bearing member 106 includes the plate body part 1061 and the matching part 1062, the plate body part 1061 is convenient to provide a relatively large-area and relatively flat second matching surface 106a, thus the shielding capability of the bearing member 106 on the avoiding space 200a is improved; the bearing member 106 can be limited by the matching part 1062, the bearing member 106 is reliably mounted, so that the bearing member 106 has a certain capability of bearing expansion force of the battery cells 100, and meanwhile, the bearing member 106 is simple in structure and is convenient to implement; and moreover, the matching part 1062 is in abutting fit with the fixed beam 105, if the fixed beam 105 is subjected to certain deformation by the battery cells 100 to cause that the first matching surface 105b deviates from an original position and/or an original posture, the matching part 1062 is convenient to adapt to deformation of the fixed beam 105 and the second matching surface 106a of the bearing member 106 is adaptively adjusted with the change of the first matching surface 105b, and therefore, the second matching surface 106a and the first matching surface 105b are always flush or are very small in dislocation to a certain extent.

It is to be understood that when the bearing member 106 includes the plate body part 1061 and the matching part 1062, and the stop part 106c is also formed on the box 101, the plate body part 1061 can be in abutting fit with the stop part 106c on the box 101; and definitely, when the bearing member 106 also includes a support part 1064, the stop part 106c on the box 101 can be in abutting fit with the support part 106c.

With reference to FIG. 14, in some embodiments, the matching part 1062 is provided with a first surface 1062a and a second surface 1062b, the first surface 1062a is an arc surface sunken towards the second surface 1062b, and the first surface 1062a is matched with the fixed beam 105; the second surface 1062b is connected to the first surface 1062a, and is flush with the second matching surface 106a, for example, the second surface 1062b and the second matching surface 106a are arranged on the same plane.

In the above technical solution, the first surface 1062a of the matching part 1062 is in abutting fit with the fixed beam 105, limitation fit between the bearing member 106 and the fixed beam 105 is conveniently achieved due to arc-shaped arrangement of the first surface 1062a, moreover, the second surface 1062b is conveniently prevented from protruding out of the second matching surface 106a towards the first chamber 101a, and the matching between the second matching surface 106a and the battery cells 100 cannot be affected; and definitely, the second surface 1062b also can be in abutting fit with the battery cells 100.

Abutting fit, the first surface 1062a of the matching part 1062 is in abutting fit with the stop part 106c of the fixed beam 105; and on the cross section of the fixed beam 105, the first surface 1062a and the stop part 106c both form an arc shape.

With reference to FIG. 15, in some embodiments, at least one clamping hole 200d is formed in the first expansion beam B1, the bearing member 106 also includes at least one clamping hook part 1063, the clamping hook part 1063 is formed at an outer edge of a plate body part 1061 and is located on the side of the plate body part 1061 deviating from the second matching surface 106a, the clamping hook part 1063 is clamped in the corresponding clamping hole 200d, and the clamping hook part 1063 and the matching part 1062 can be arranged on the same side of the plate body part 1061 and are both arranged at the side of the plate body part 1061 facing the fixed beam 105.

Abutting fit, the first heat exchange assembly 102 is arranged on the bottom wall 101 1a of the box 101, the fixed beam 105 is arranged on the upper side of the bottom wall 1011a of the box 101, the clamping hole 200d is formed in the part of the fixed beam 105 corresponding to the avoiding space 200a, and a part of the clamping hook part 1063 upwards extends into the clamping hole 200d.

In the above technical solution, the clamping hook part 1063 of the bearing member 106 is clamped in the clamping hole 200d in the fixed beam 105, the bearing member 106 can conveniently move in a direction from the second chamber 101b to the first chamber 101a, thus the mounting reliability of the bearing member 106 is further improved, and the problem that the bearing member 106 is easy to deviate from a passage towards the first chamber 101a along the second chamber 101b during the assembly process of the battery 200 is solved, for example, pre-limitation of the bearing member 106 can be realized, and the assembling efficiency of the battery 200 is further improved.

For example, for a single clamping hole 200d, the clamping hole 200d can correspond to one or more clamping hook parts 1063, and the number of the clamping holes 200d can be equal to or unequal to that of the clamping hook parts 1063. By way of example, a plurality of clamping hook parts 1063 are arranged at intervals in the length direction of the fixed beam 105, thus improving the pre-limiting reliability to the bearing member 106.

By way of example, the clamping hook parts 1063 are constructed to be elastic clamping hook parts 1063, each clamping hook part 1063 including a cantilever part and a hook part; the cantilever parts extend in the direction from the first chamber 101a to the second chamber 101b, one end of each cantilever part is connected to the plate body part 1061, the hook parts are arranged at the other ends of the cantilever parts, the bearing member 106 is matched with the avoiding space 200a in the direction from the first chamber 101a to the second chamber 101b in the assembling process, the clamping hook parts 1063 are extruded by the fixed beam 105 to deform, and the bearing member 106 continues to move towards the second chamber 101b till the clamping hook parts 1063 are clamped in the clamping holes 200d.

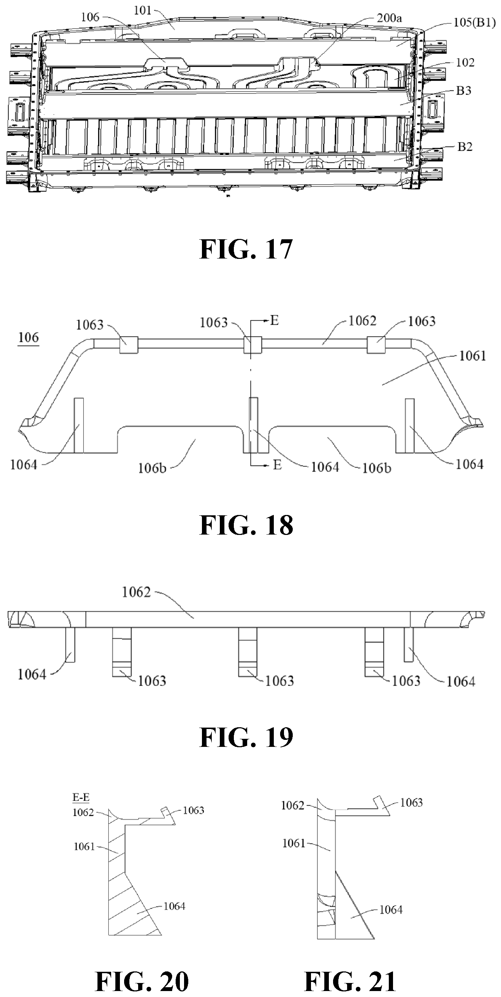

With reference to FIG. 18 to FIG. 21, in some embodiments, the bearing member 106 further includes at least one support part 1064, the support parts 1064 are arranged on the side of the plate body part 1061 away from the second matching surface 106a, the support parts 1064 are arranged to avoid the first heat exchange assembly 102, and the support parts 1064 are in abutting fit with the box 101.

The support parts 1064 are arranged to avoid the first heat exchange assembly 102, and it is to be understood that in the thickness direction of the plate body parts 1061, the orthographic projections of the support parts 1064 are out of the outer contour of the orthographic projection of the wall of the notch 106b.

In the above technical solution, the support part 1064 is arranged, so that the plate body part 1061 is conveniently reinforced, the structural strength of the bearing member 106 is improved, and the support part 1064 cannot influence the abutting fit between the plate body part 1061 and the battery cells 100; the support part 1064 is in abutting fit with the box 101, thus the acting force applied by the battery cells 100 and applied to the bearing member 106 is conveniently dispersed to the box 101 through the support part 1064, and the mounting reliability and the bearing capacity of the bearing member 106 are further improved; the bearing member 106 is matched with the fixed beam 105 and the box 101 by the matching part 1062 and the support part 1064, so that the whole plate body part 1061 can be supported and limited in a relatively balanced manner; and moreover, the support part 1064 is arranged to avoid the notch 106b, so that the arrangement of the support part 1064 cannot interfere with a connecting part 1e, and the bearing member 106 is conveniently assembled.

By way of example, the support part 1064 can be constructed as that the support part 1064 is in abutting fit with the box 101 in the direction from the first chamber 101a to the second chamber 101b, and/or, the support part 1064 is in abutting fit with the box 101 in a thickness direction of the first heat exchange assembly 102 (for example, the fifth direction X5 in FIG. 7, and the fifth direction X5 can be the height direction of the battery cells 100), namely, the direction to which the wall of the box 101 is provided with the first heat exchange assembly 102, for example, in combination with FIG. 7 and FIG. 10, the first heat exchange assembly 102 is arranged on the bottom wall 1011a of the box 101, the fixed beam 105 is arranged on the upper side of the bottom wall 1011a of the box 101, the first chamber 101a and the second chamber 101b are sequentially arranged along the first direction X1, the support part 1064 can be in abutting fit with the bottom wall 1011a of the box 101 in the second direction X2 (for example, the support part 1064 is in abutting fit with the stop step 1011c on the box 101), and/or, the support part 1064 is in abutting fit with the bottom wall 1011a of the box 101 in the fifth direction X5.

By way of example, a plurality of support parts 1064 are provided, and at least one support part 1064 is arranged at each of two sides of each notch 106b in the length direction (such as the first direction X1 in FIG. 1) of the fixed beam 105.

With reference to FIG. 15 and FIG. 20, in some embodiments, the width of the support part 1064 in the thickness direction of the plate body part 1061 increases in a direction from the matching part 1062 to the first heat exchange assembly 102, the width of the end of the wall the support part 1064 facing the box 101 and provided with the first heat exchange assembly 102 is maximum, and the width of the end of the support part 1064 facing the matching part 1062 is minimum.

By way of example, the first heat exchange assembly 102 is arranged between the bottom wall 1011a of the box 101 and the battery cells 100, the fixed beam 105 is arranged at the upper side of the bottom wall 1011a, the width of the support part 1064 in the thickness direction of the plate body part 1061 increases from top to bottom, for example, the support part 1064 is approximately formed to be a triangular plate-shaped structure.

In the above technical solution, the width of the support part 1064 in the thickness direction of the plate body increases in the direction from the matching part 1062 to the first heat exchange assembly 102, thus the abutting fit area of the support part 1064 and the box 101 is conveniently increased by a relatively small material quantity, the matching reliability of the support part 1064 and the box 101 is improved, and the cost and the bearing reliability are simultaneously considered.

By way of example, when the bearing member 106 includes the plate body part 1061, the matching part 1062, the clamping hook part 1063, and the support part 1064, the matching part 1062 and the clamping hook part 1063 are arranged on the same side of the plate body part 1061, the clamping hook part 1063 and the support part 1064 can be arranged on two opposite sides of the plate body part 1061, therefore, the bearing member 106 can be limited in the width direction of the fixed beam 105, meanwhile, the bearing member 106 also can be limited to rotate, thus improving the stability of the bearing member 106 abutting against the battery cells 100.

In some embodiments, the bearing member 106 is arranged between the first heat exchange assembly 102 and the fixed beam 105, so that the first heat exchange assembly 102 and the fixed beam 105 are separated by the bearing member 106, and at the moment, the side of the notch 106b facing the wall of the box 101 provided with the first heat exchange assembly 102 is open. The heat conductivity coefficient of the bearing member 106 is lower than that of the fixed beam 105; and/or, the bearing member 106 and the first heat exchange assembly 102 are spaced, so that heat insulation arrangement of the bearing member 106 and the first heat exchange assembly 102 is realized.

By way of example, the first heat exchange assembly 102 is arranged on the bottom wall 1011a of the box 101, the fixed beam 105 is arranged on the upper side of the bottom wall 1011a of the box 101, the bearing member 106 is arranged in the avoiding space 200a, the lower side of the notch 106b is open, the connecting part 1e is arranged in the notch 106b in a penetrating manner, and the bearing member 106 can separate the connecting part 1e from the fixed beam 105.

In the above technical solution, the bearing member 106 is arranged between the first heat exchange assembly 102 and the fixed beam 105, meanwhile, the heat conductivity coefficient of the bearing member 106 is lower than that of the fixed beam 105, and/or, the bearing member 106 and the first heat exchange assembly 102 are spaced, so that the heat resistance between the first heat exchange assembly 102 and the fixed beam 105 is increased, the heat exchange amount between the expansion beam and the first heat exchange assembly 102 is reduced, the proportion of heat or cold transferred to the battery cells 100 by the first heat exchange assembly 102 is increased to a certain extent, and the heat management performance is improved; and in addition, when the bearing member 106 and the first heat exchange assembly 102 are spaced, the risk of interference between the bearing member 106 and the first heat exchange assembly 102 can be reduced during assembling of the bearing member 106, and the mounting convenience of the bearing member 106 is improved.

In some embodiments, the strength of the material of the bearing member 106 is at least 0.8 time that of the material of the fixed beam 105. For example, the strength of the material of the bearing member 106 is 0.8 time, 0.85 time, 0.9 time, 1 time and the like of the material of the fixed beam 105.

For example, the bearing member 106 and the fixed beam 105 can be made of the same or different materials; for example, the fixed beam 105 is a metal member, and the bearing member 106 is a plastic member, but not limited thereto.

In the above technical solution, the strength of the material of the bearing member 106 is set to be at least 0.8 time of the strength of the material of the fixed beam 105, so that the bearing member 106 has good bearing capacity, and the expansion force of a battery cells 100 can be reliably and stably borne.

With reference to FIG. 14, in some embodiments, the first heat exchange assembly 102 is arranged on the bottom wall 1011a of the box 101, and the end of the second matching surface 106a facing the first heat exchange assembly 102 is flush with the ends of the battery cells 100 facing the first heat exchange assembly 102, or, the end of the second matching surface 106a facing the first heat exchange assembly 102 is arranged adjacent to the first heat exchange assembly 102 compared with the ends of the battery cells 100 facing the first heat exchange assembly 102.

Therefore, when the first heat exchange assembly 102 is arranged on the lower side of the battery cells 100, the lower end of the second matching surface 106a is flush with the lower end of the battery cells 100, or, the lower end of the second matching surface 106a is located on the lower side of the lower end of the battery cells 100.

In the above technical solution, the end of the second matching surface 106a facing the first heat exchange assembly 102 is flush with the ends of the battery cells 100 facing the first heat exchange assembly 102, or, the end of the second matching surface 106a facing the first heat exchange assembly 102 is arranged adjacent to the first heat exchange assembly 102 compared with the ends of the battery cells 100 facing the first heat exchange assembly 102, so that the whole surfaces of the battery cells 100 facing the fixed beam 105 can be supported, the stress uniformity of the battery cells 100 during expansion deformation can be improved, the problems of lithium precipitation, liquid leakage and the like caused by non-uniform stress are solved, and the use reliability of the battery 200 is improved.

With reference to FIG. 14 to FIG. 17, FIG. 24, and FIG. 25, in some embodiments, the battery 200 includes the first heat exchange assembly 102 and the fixed beam 105, wherein the fixed beam 105 is arranged in the box 101; and the first heat exchange assembly 102 and the fixed beam 105 are arranged at an interval, so that the heat insulation between the first heat exchange assembly 102 and the fixed beam 105 is realized.

Generally, when a plurality of battery cells are provided, the peripheral battery cells encircle the internal battery cells; the heat exchange area of the peripheral battery cells is usually greater than that of the internal battery cells, so that there is a certain difference in the temperature of the peripheral battery cells and the internal battery cells; in related technologies, heat exchange members for the battery cells and the expansion beam are not subjected to heat insulation, so that heat exchange can be performed between the heat exchange members and the expansion beam to a certain extent, the temperature of the expansion beam is greatly influenced by the heat exchange members, the temperature of the expansion beam is lower than that of the peripheral battery cells when the heat exchange members cool the battery cells, and the temperature of the expansion beam is higher than that of the peripheral battery cells when the heat exchange members heat the battery cells, and at the moment, the temperature difference between the peripheral battery cells and the internal battery cells is further increased.

Therefore, in the above technical, the heat insulation between the first heat exchange assembly 102 and the fixed beam 105 is implemented, so that the heat resistance between the first heat exchange assembly 102 and the fixed beam 105 is improved, the heat or cold transferred to the fixed beam 105 by the first heat exchange assembly 102 is reduced, the temperature difference between the fixed beam 105 and the abutted peripheral battery cells 100 is reduced, the consistency of the peripheral battery cells 100 and the internal battery cells 100 in a heat exchange environment is improved, the temperature difference between the peripheral battery cells 100 and the internal battery cells 100 is reduced; and the reliability of the battery 200 is improved.

In the above solution, the heat insulation between the first heat exchange assembly 102 and the fixed beam 105 is implemented, and it is to be understood that the heat resistance between the first heat exchange assembly 102 and the fixed beam 105 is greater than that between the first heat exchange assembly 102 and the battery cells 100.

It is to be understood that the first heat exchange assembly 102 and the fixed beam 105 can be always arranged at an interval in the whole life cycle of the battery 200.

With reference to FIG. 14 to FIG. 17, FIG. 24, and FIG. 25, in some embodiments, the first expansion beam B1 divides the internal space of the box 101 into a first chamber 101a and a second chamber 101b; a part of the first heat exchange assembly 102 and the battery cells 100 are arranged in the first chamber 101a; at least one avoiding channel 200a is formed between the first expansion beam B1 and the box 101; all the end portions 11 at the converging positions R are arranged in the corresponding avoiding channels 200a in a penetrating manner so as to extend to the second chamber 101b from the first chamber 101a; and the connectors of the end portions 11 are located in the second chamber 101b. The wall surface of the first expansion beam B1 corresponding to the avoiding channels 200a and the first heat exchange assembly 102 are arranged at an interval.

In the above technical solution, at least one avoiding channel 200a is formed between the first expansion beam B1 and the box 101, and all the end portions 11 at the converging positions R are arranged in the corresponding avoiding channels 200a in a penetrating way so as to extend to the second chamber 101b from the first chamber 101a, thus the assembling of all the end portions 11 at the converging position R and the first expansion beam B1 is facilitated, all the end portions 11 at the converging position R can extend to the second chamber 101b without bending around the first expansion beam B1, and the structures of all the end portions 11 at the converging positions R is favorably simplified; moreover, by arranging the avoiding channel 200a, the connectors of the end portions 11 can be arranged in the second chamber 101b, namely, the connectors of the end portions 11 and the battery cells 100 are in different chambers, thus the box 101 is convenient to provide a proper arrangement space for communication between the connectors of the end portions 11 and other components, and the communication arrangement of the end portions 11 and other components is facilitated; moreover, the connector of the end portions 11 and the battery cells 100 can be separated by the fixed beam 105, thus the influence of heat exchange medium leakage at the connector positions of the end portions 11 on the battery cells 100 is favorably reduced, and the use reliability of the battery cells 100 is favorably improved; and moreover, the wall surface of the first expansion beam B1 corresponding to the avoiding channels 200a and the first heat exchange assembly 102 are arranged at intervals, and thus the heat insulation between the first heat exchange assembly 102 and the first expansion beam B1 is achieved.

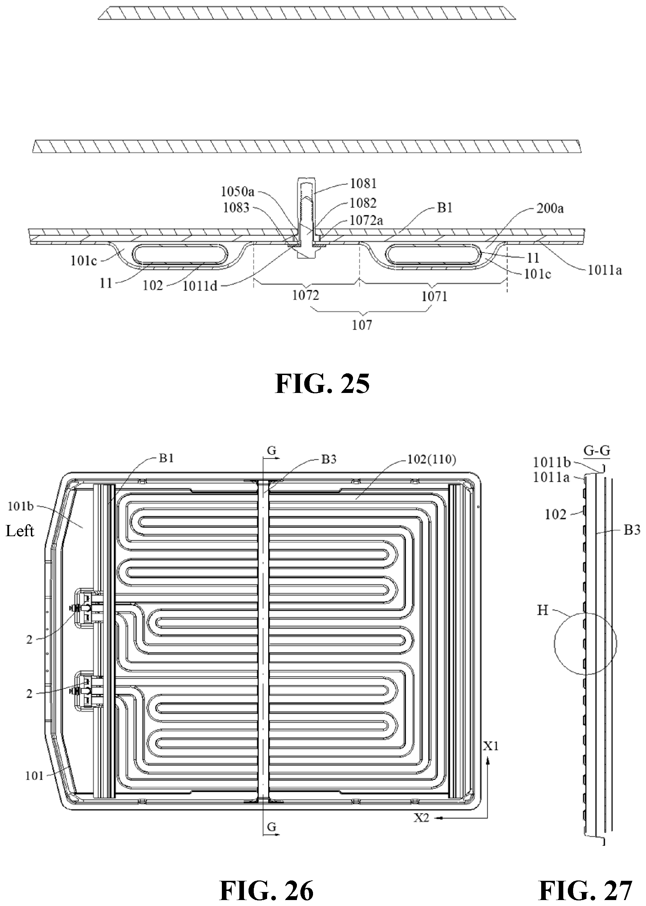

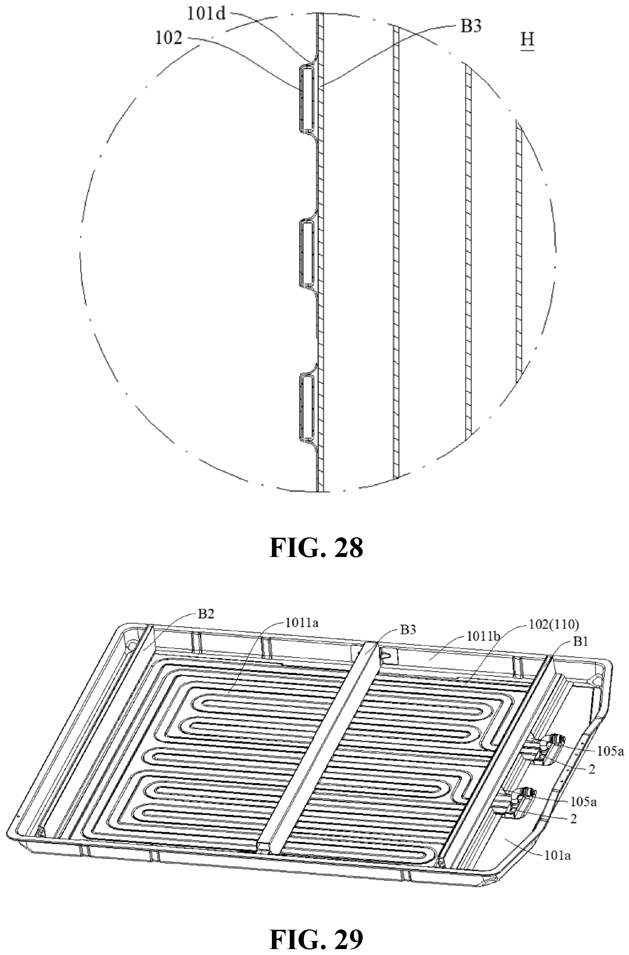

With reference to FIG. 25 and FIG. 28, in some embodiments, the second concave part 101c is formed in the wall of the box 101 and is constructed to be at least part of the avoiding channels 200a, and the part of the first heat exchange assembly 102 penetrating the avoiding channels 200a is arranged in the second concave part 101c. The fixed beam 105 is attached to the part, except the second concave part 101c, of the wall of the box 101; or, the fixed beam 105 and the part, except the second concave part 101c, of the wall of the box 101 are arranged at intervals.

In the above technical solution, the fixed beam 105 is arranged to be attached to the part, except the second concave part 101c, of the wall of the box 101; for the fixed beam 105 and the abovementioned wall of the box 101, the fixed beam 105 and the wall of the box 101 are spaced at the penetrating position of the first heat exchange assembly 102, in other words, the fixed beam 105 and the second concave part 101c are spaced, and therefore heat insulation between the fixed beam 105 and the first heat exchange assembly 102 is achieved while the first heat exchange assembly 102 is avoided; the fixed beam 105 and the wall of the box 101 are attached at the position in which the first heat exchange assembly 102 does not penetrate, namely, the fixed beam 105 and the wall of the box 101 are not attached, thus the matching area of the fixed beam 105 and the box 101 can be increased conveniently, and the mounting reliability of the fixed beam 105 can be improved; the fixed beam 105 and the part, except the second concave part 101c, of the wall of the box 101 are spaced, and therefore the interval between the whole fixed beam 105 and the first heat exchange assembly 102 can be further increased, the heat resistance between the whole fixed beam 105 and the first heat exchange assembly 102 can be improved conveniently, the heat or cold transferred to the fixed beam 105 by the first heat exchange assembly 102 can be reduced, and the energy utilization rate of the first heat exchange assembly 102 can be improved conveniently.

With reference to FIG. 23 to FIG. 25, in some embodiments, the battery 200 further includes a heat insulation member 107; the heat insulation member 107 includes a first heat insulation part 1071; and the first heat insulation part 1071 is arranged between the wall surface of the fixed beam 105 corresponding to the avoiding channel 200a and the first heat exchange assembly 102 so as to fill at least part of a gap between the wall surface of the fixed beam 105 corresponding to the avoiding channel 200a and the first heat exchange assembly 102.

In the above technical solution, the first heat insulation part 1071 is arranged between the wall surface of the fixed beam 105 corresponding to the avoiding channel 200a and the first heat exchange assembly 102, and therefore the first heat insulation part 1071 corresponds to the second concave part 101c so as to further increase the heat resistance between the fixed beam 105 and the first heat exchange assembly 102 by the heat insulation member 107.

Definitely, in other embodiments of the present application, the heat insulation member 107 is not arranged, and heat insulation can be realized between the fixed beam 105 and the first heat exchange assembly 102 through air, and/or, when the first heat exchange assembly 102 is bonded to the box 101 through a structural adhesive, the structural adhesive will overflow to the side of the first heat exchange assembly 102 facing the fixed beam 105; the structural adhesive has certain heat insulation capability, which can also increase the heat resistance between the first heat exchange assembly 102 and the fixed beam 105.

With reference to FIG. 25, in some embodiments, the heat insulation member 107 further includes second a heat insulation part 1072 which arranged between the first expansion beam B1 and the part, except second concave parts 101c, of the wall of the box 101.

It is to be understood that the second concave parts 101c can be accommodate at least one end portion 11. By way of example, a plurality of second concave parts 101c which are arranged at intervals are formed at positions of the box 101 corresponding to avoiding channels 200a; each second concave part 101a accommodates one end portion 11; and a plurality of first heat insulation members 1071 and a plurality of second heat insulation members 1072 are provided and are alternatively arranged one by one along the length direction of the first expansion beam B1.

In the above solution, the second heat insulation members 1072 are arranged between the part, except the second concave parts 101c, of the wall of the box 101 and the first expansion beam B1, so that the heat insulation member 107 is conveniently clamped between the box 101 and the first expansion beam B1, and the reliable mounting of the heat insulation member 107 is conveniently realized by fixing the first expansion beam B1 and the box 101, and furthermore, the heat insulation member 107 can conveniently provide a relatively flat matching surface for connection of the box 101 and the first expansion beam B1; and moreover, the depth of the second concave parts 101c is easy to reduce, and the molding convenience of the second concave parts 101c is improved.

With reference to FIG. 25, in some embodiments, a first fixing member 1081 is further arranged on the first expansion beam B1, and at least part of the first fixing member 1081 is located in the first expansion beam B1; and the battery 200 further includes a second fixing member 1082, and the second fixing member 1082 is arranged on the box 101, the second heat insulation part 1072, and the first expansion beam B1 in a penetrating mode and is connected to the first fixing member 1081.

In the above technical solution, at least part of the first fixing member 1081 is located in the first expansion beam B1, and the second fixing member 1082 is arranged on the box 101, the second heat insulation part 1072, and the first expansion beam B1 in a penetrating mode and is connected to the first fixing member 1081, so that the box 101, the heat insulation member 107, and the first expansion beam B1 are fixed in a simple fixing mode, and moreover, the heat insulation member 107 is reliably mounted; and meanwhile, the second fixing member 1082 can be mounted towards the first expansion beam B1 along the heat insulation member 107, so that enough operation space is provided in the assembling process of the second fixing member 1082, and the assembling convenience is improved. In addition, the second fixing member 1082 is arranged on the second heat insulation part 1072 in a penetrating mode, so that the second fixing member 1082 and the heat exchange tubes 1 are spaced, and the arrangement of the second fixing member 1082 does not influence the heat exchange tubes 1.

By way of example, the first fixing member 1081 is a rivet nut, the second fixing member 1082 is a threaded fastener (such as a bolt), a first mounting hole 1011d is formed in the box 101, a second mounting hole 1072a is formed in the second heat insulation part 1072, a third mounting hole 1050a is formed in the first expansion beam B1, a head part of the first fixing member 1081 is matched in the second mounting hole 1072a, the first fixing member 1081 is arranged in the third mounting hole 1050a in a penetrating way so as to locally extend into the first expansion beam B1, the second fixing member 1082 is arranged in the first mounting hole 1011d in a penetrating way and is in threaded matching with part of the first fixing member 1081 even in the first expansion beam B1, so that this part of the first fixing member 1081 is deformed to be riveted onto the first expansion beam B1, and meanwhile, the first fixing member 1081 and the second fixing member 1082 are in threaded connection; and it is to be understood that the hole position of the box 101 is sealed by a corresponding sealing means, including, but not limited to, arranging a gasket 1083 between the head part of the second fixing member 1082 and the box 101.

It is to be understood that the embodiment of heat insulation arrangement of the first expansion beam B1 in the present application is applicable to other expansion beams of the battery 200.

For example, the battery 200 also includes a second expansion beam B2 which is arranged in the first chamber 101a; all the battery cells 100 are clamped between the first expansion beam B1 and the second expansion beam B2; the first heat exchange assembly 102 and the second expansion beam B2 are arranged at an interval in a direction from the first chamber 101a to the second chamber 101b, thus heat insulation between the first heat exchange assembly 102 and the second expansion beam B2 can be achieved, namely, the whole first heat exchange assembly 102 is arranged at an interval on the side of the second expansion beam B2 facing the second chamber 101b; and it is to be understood that the heat insulation member 107 can be arranged between the second expansion beam B2 and the wall of the box 101 provided with the first heat exchange assembly 102, and the heat insulation member 107 also can be omitted.

For another example, the battery 200 further includes the second expansion beam B2 and a third expansion beam B3 which are arranged in the first chamber 101a; the third expansion beam B3 is located between the first expansion beam B1 and the second expansion beam B2; the battery cells 100 are arranged between the first expansion beam B1 and the third expansion beam B3; the battery cells 100 are also arranged between the second expansion beam B2 and the third expansion beam B3; a part of the first heat exchange assembly 102 is arranged at each of two opposite sides of the third expansion beam B3; the avoiding channel can be formed between the third expansion beam B3 and thee box 101, and the avoiding channel is in communication with the two opposite sides of the third expansion beam B3, for example, a third concave part 101d is formed in the box 101, and/or, a fourth concave part is formed in the third expansion beam B3; the third concave part 101d and/or the fourth concave part form the avoiding channel; the first heat exchange assembly 102 penetrates through the avoiding channel; and the part of the first heat exchange assembly 102 penetrating through the avoiding channel and the third expansion beam B3 are arranged at an interval, so that the heat insulation between the first heat exchange assembly 102 and the third expansion beam B3 is realized.

For example, the heat insulation between the first heat exchange assembly 102 and the third expansion beam B3 is the same as or different from the heat insulation between the first heat exchange assembly 102 and the fixed beam 105. By way of example, the third concave part 101d is formed in the wall of the box 101 and is constructed to be at least part of the avoiding channel; and the part of the first heat exchange assembly 102 penetrating through the avoiding channel is arranged in the third concave part 101d. The third expansion beam B3 is fitted with the part, except the third concave part 101d, of the wall of the box 101; or, the third expansion beam B3 and the part, except the third concave part 101d, of the wall of the box 101 are arranged at an interval.

With reference to FIG. 8, in some embodiments, the box 101 includes a first box body 101, the first box body 101 is an integrated punch forming member and includes a bottom wall 1011a and an enclosure 1011b, the enclosure 1011b is arranged around the bottom wall 1011a, and the first heat exchange assembly 102 is arranged between at least one of the bottom wall 1011a and the enclosure 1011b and the battery cells 100.

It is to be understood that the enclosure 1011b can include a plurality of side walls which are sequentially connected end to end, the enclosure 1011b and the bottom wall 1011a can be matched to form an accommodating space, and the accommodating space can form at least part of the internal space of the box 101; and when the first heat exchange assembly 102 is arranged between the enclosure 1011b and the battery cells 100, the first heat exchange assembly 102 can be arranged between at least one of the plurality of side walls and the battery cells 100.

In the related technologies, the bottom wall 1011a and the enclosure 1011b of the box 101 are split members (such as a profile box 101), are connected by a plurality of connecting members to realize sealing between the bottom wall 1011a and the enclosure 1011b, and the number of the connecting members is large and even can reach more than 100, so that the box 101 is tedious to assemble and low in assembling efficiency.

In the above technical solution, the first box body 101 including the bottom wall 1011a and the enclosure 1011b is arranged to be the integrated punch forming member, so that the forming of the first box body 101 is facilitated, the cost of the first box body 101 is reduced, and the first box body 101 has good structural strength; and meanwhile, the sealing between the bottom wall 1011a and the enclosure 1011b is realized by the structure of the first box body 101, so that the sealing performance of the bottom of the first box body 101 is improved, the plurality of connecting members (such as bolts) for realizing sealing of the bottom of the first box body 101 in the box 101 can be saved, the connecting process of the bottom wall 1011a and the enclosure 1011b is saved, and the assembling efficiency of the box 101 is improved.

In a third aspect, the embodiment of the present application provides an electrical apparatus 1000 which includes the above battery 200, and the battery 200 is configured to provide electric energy.

In the above technical solution, the electrical apparatus 1000 adopts the battery 200, and the battery 200 has good assembly efficiency, so that the production efficiency of the electrical apparatus 1000 is improved.

The battery 200 in the embodiment of the present application with reference to the accompanying drawings again.

### Embodiment 1

With reference to FIG. 3, FIG. 8, FIG. 22, and FIG. 23, the battery 200 includes a box 101 and a plurality of battery cells 100, and all the battery cells 100 are arranged in the box 101; the battery 200 further includes a first heat exchange assembly 102, and the first heat exchange assembly 102 is arranged in the box 101 and is located between the box 101 and the battery cells 100 to exchange heat with all the battery cells 100. The box 101 includes a first box body 101 and a second box body 102, the first box body 101 is a sheet metal integrated punch forming member and includes a bottom wall 1011a and an enclosure 1011b, the enclosure 101 1b is arranged around the bottom wall 101 1a, and the first heat exchange assembly 102 is located between the bottom wall 1011a and the battery cells 100.

The battery 200 further includes a first expansion beam B1 and a second expansion beam B2 which are arranged in the box 101; the first expansion beam B1 divides the internal space of the box 101 into a first chamber 101a and a second chamber 101b, the second expansion beam B2 is arranged in the first chamber 101a, all the battery cells 100 are arranged in the first chamber 101a and are located between the first expansion beam B1 and the second expansion beam B2, and an avoiding channel 200a is formed between the first expansion beam B1 and the box 101; a converging position R is formed in a part of at least one side of the peripheral side of the first heat exchange assembly 102, the first heat exchange assembly 102 includes a plurality of heat exchange tubes 1, each heat exchange tube 1 having two end portions 11; at least two end portions of all the end portions 11 of the first heat exchange assembly 102 extend to the same converging position R, the converging positions R are in one-to-one correspondence with the avoiding channels 200a, and all the end portions 11 of the converging positions R penetrate through the corresponding avoiding channels 200a, so that the end portions 11 extend from the first chamber 101a to the second chamber 101B. The first expansion beam B1 is provided with a first concave part 105a, the first concave part 105a forms at least part of the avoiding channel 200a, each avoiding channel 200a is provided with a bearing member 106, the bearing members 106 are in abutting fit with the corresponding battery cells 100, and the bearing members 106 are provided with notches 106b for avoiding the end portions 11 at the corresponding converging positions R.

The wall surface of the first expansion beam B1 corresponding to the avoiding channel 200a and the first heat exchange assembly 102 are arranged at intervals, a heat insulation member 107 is arranged between the first expansion beam B1 and the bottom wall 1011a of the box 101, the heat insulation member 107 is an integrated member and includes a first heat insulation part 1071 and a second heat insulation part 1072, the first heat insulation part 1071 is arranged between the wall surface of the first expansion beam B1 corresponding to the avoiding channel 200a and the first heat exchange assembly 102, and the second heat insulation part 1072 is arranged between the part, except the part corresponding to the avoiding channel 200a, of the bottom wall 1011a of the box 101 and the first expansion beam B1.

The first heat exchange assembly 102 includes two heat exchange tubes 1, each heat exchange tube 1 has two end portions 11, and the two end portions 11 are a first end portion 11a and a second end portion 11b respectively; the peripheral sides of the first heat exchange assembly 102 include two sides which are oppositely arranged along a first direction X1 and two sides which are oppositely arranged along a second direction X2; and a first box body 101 and a second box body 102 are oppositely arranged along a fifth direction X5.

Taking the first direction X1 being a direction from left to right, the second direction X2 being a direction from back to front, and the fifth direction X5 being a direction from bottom to top as an example, the three directions are vertical in pairs:
the two heat exchange tubes 1 of the first heat exchange assembly 102 are arranged at intervals along the left-right direction, the converging position R is formed at a part of the front side of the first heat exchange assembly 102, all the end portions 11 of each heat exchange tube 1 extend to the converging position R, the size L1 of the converging position R in the left-right direction is smaller than the size L2 of the first heat exchange assembly 102 in the left-right direction, further, L1≤L2/3. The converging position R and the heat exchange assembly 110 are oppositely arranged in the middle in the left-right direction in a front-back manner; each heat exchange tube 1 is formed by bending a single tube, the heat exchange tube 1 is bent in an arc shape at the bending position, each heat exchange tube 1 is a flat tube or a harmonica-shaped tube, and the thickness direction of the heat exchange tube 1 is the X5 direction.

Therefore, the converging position R corresponds to four end portions 11, the space c1 between any two adjacent end portions 11 of the converging position R is smaller than the maximum radial size c3 (namely the width of the heat exchange tube 1) of the outer contour of the cross section of the end portion 11, and the two second end portions 11b are located between the two first end portions 11a; and each heat exchange tube 1 further includes a communication section 12 connected between the two end portions 11, and at least the central axes of the communication sections 12 of all the heat exchange tubes 1 are located on the same plane so as to be better matched with the battery cells 100.

Each heat exchange tube 1 is constructed to be the first heat exchange tube 1a, a communication section 12 of the first heat exchange tube 1a includes a first heat exchange section 121 and a second heat exchange section 122, the second heat exchange section 122 is bent to form a U-shaped area 120, the first heat exchange section 121 is arranged in the U-shaped area of the second heat exchange section 122 in a bent way, the first heat exchange section 121 and the second heat exchange section 122 are connected in a bent way. The communication sections 12 of the two heat exchange tubes 1 can be symmetrically arranged about a central line of the first heat exchange assembly 102 vertical to the left-right direction.

The first heat exchange section 121 includes a plurality of first heat exchange parts 1211 and first bending parts 1212, the plurality of first heat exchange parts 1211 are arranged at intervals along the first direction, each second heat exchange part 1211 linearly extends along the second direction, and each first bending part 1212 is in an arc shape and is connected between two adjacent first heat exchange parts 1211 in a bent way so that the plurality of first heat exchange parts 1211 are sequentially connected.

The second heat exchange section 122 includes a second heat exchange part 1221, a third heat exchange part 1222, a fourth heat exchange part 1223, and a fifth heat exchange part 1224; the second heat exchange part 1221 extends along the right side periphery of the first heat exchange section 121 (the second heat exchange part 1221 extends along the second direction), the third heat exchange part 1222 is connected between the second heat exchange part 1221 and the first heat exchange section 121 and extends along the rear side periphery of the first heat exchange section 121 (the third heat exchange part 1222 extends along the first direction), a first end of the third heat exchange part 1222 is connected to the second heat exchange part 1221 by an included angle of about 90°, a second end of the third heat exchange part 1222 is connected to the first heat exchange section 121 by an included angle of about 90°, the fourth heat exchange part 1223 communicates with the second heat exchange part 1221 and is connected to the second heat exchange part 1221 by an included angle of about 90°, the fourth heat exchange part 1223 extends along the front side periphery of the first heat exchange section 121 (the fourth heat exchange part 1223 extends along the first direction), so that an opening of the U-shaped area 120 formed by the second heat exchange part 1221, the third heat exchange part 1222, and the fourth heat exchange part 1223 is arranged leftwards; the fifth heat exchange part 1224 extends along the left side periphery of the first heat exchange section 121 and seals at least part of the opening of the U-shaped area 120 formed by the second heat exchange part 1221, the third heat exchange part 1222, and the fourth heat exchange part 1223; and one end of the fifth heat exchange part 1224 is connected to the third heat exchange part 1222 in a bent way, and the other end of the fifth heat exchange part 1224 is connected to the first bending part 1212.

The first heat exchange tube 1a also includes an eighth heat exchange section 128; the first heat exchange section 12 is connected between the eighth heat exchange section 128 and the second heat exchange section 122, and the eighth heat exchange section 128 is connected to the first heat exchange section 121 by an included angle of about 90°; and the eighth heat exchange section 128 is connected to one end portion 11 in a bent way, and the fourth heat exchange part 1223 is connected to the other end portion 11 in a bent way.

### Embodiment 2

With reference to FIG. 5 and FIG. 17, the structure in this embodiment is approximately the same as in the Embodiment 1, the same components are marked by the same attached figure, and the difference is only that one of two heat exchange tubes 1 of the first heat exchange assembly 102 is constructed to be the first heat exchange tube 1a, and the other one is constructed to be the second heat exchange tube 1b; two converging positions R are formed on the side of the first heat exchange assembly 102 in the second direction, the first end portion 11a of each heat exchange tube 1 extends to one converging position R, and the second end portion 11b of each heat exchange tube 1 extends to the other converging position R.

The communication section 12 of the first heat exchange tube 1a includes a first heat exchange section 121 and a second heat exchange section 122, the second heat exchange section 122 is bent to form the U-shaped area 120, the first heat exchange section 121 is arranged in the U-shaped area of the second heat exchange section 122 in a bent way, and the first heat exchange section 121 is connected to the second heat exchange section 122 in a bent way; the first heat exchange section 121 includes a plurality of first heat exchange parts 1211 and first bending parts 1212, the plurality of first heat exchange parts 1211 are arranged at intervals along the first direction, each second heat exchange part 1211 linearly extends along the second direction, and each first bending part 1212 is arc-shaped and is connected between two adjacent first heat exchange parts 1211 in a bent way so that the plurality of first heat exchange parts 1211 are sequentially connected; and the second heat exchange section 122 includes a second heat exchange part 1221, a third heat exchange part 1222, and a fourth heat exchange part 1223; the second heat exchange part 1221, the third heat exchange part 1222, and the fourth heat exchange part 1223 form the U-shaped area 120; the second heat exchange part 1221 extends along the first direction; the third heat exchange part 1222 extends along the second direction; and the fourth heat exchange part 1223 extends along the second direction.

At least the communication section 12 of the second heat exchange tube 1a is arranged in the U-shaped area 120 of the first heat exchange tube 1a; for the second heat exchange tube 1a, the communication section 12 includes a first heat exchange section 121 and a second heat exchange section 122; the second heat exchange section 122 is bent to form the U-shaped area 120; the first heat exchange section 121 is bent and arranged in the U-shaped area of the second heat exchange section 122; the first heat exchange section 121 and the second heat exchange section 122 are connected in a bent way; the first heat exchange section 121 includes a plurality of first heat exchange parts 1211 and first bending parts 1212; the plurality of first heat exchange parts 1211 are arranged at intervals along the first direction; each second heat exchange part 1211 linearly extends along the second direction; each first bending part 1212 is arc-shaped and is connected between the two adjacent first heat exchange parts 1211 in a bent way, so that the plurality of first heat exchange parts 1211 are connected in sequence; the second heat exchange section 122 includes a second heat exchange part 1221, a third heat exchange part 1222, and a fourth heat exchange part 1223; the second heat exchange part 1221, the third heat exchange part 1222, and the fourth heat exchange part 1223 form the U-shaped area 120; the second heat exchange part 1221 extends along the first direction; the third heat exchange part 1222 extends along the second direction; and the fourth heat exchange part 1223 extends along the second direction.

### Embodiment 3

With reference to FIG. 7, the structure in this embodiment is approximately the same as in the Embodiment 2, the same components are marked by the same attached figure, and the difference is only that three heat exchange tubes 1 of the first heat exchange assembly 102 are respectively the first heat exchange tube 1a, the second heat exchange tube 1b, and a third heat exchange tube 1c.

The communication section 12 of the first heat exchange tube 1a includes a first heat exchange section 121 and a second heat exchange section 122, the second heat exchange section 122 is bent to form the U-shaped area 120, the first heat exchange section 121 is arranged in the U-shaped area of the second heat exchange section 122 in a bent way, and the first heat exchange section 121 is connected to the second heat exchange section 122 in a bent way; the first heat exchange section 121 includes a plurality of first heat exchange parts 1211 and first bending parts 1212, the plurality of first heat exchange parts 1211 are arranged at intervals along the first direction, each second heat exchange part 1211 linearly extends along the second direction, and each first bending part 1212 is arc-shaped and is connected between two adjacent first heat exchange parts 1211 in a bent way so that the plurality of first heat exchange parts 1211 are sequentially connected; and the second heat exchange section 122 includes a second heat exchange part 1221, a third heat exchange part 1222, and a fourth heat exchange part 1223; the second heat exchange part 1221, the third heat exchange part 1222, and the fourth heat exchange part 1223 form the U-shaped area 120; the second heat exchange part 1221 extends along the first direction; the third heat exchange part 1222 extends along the second direction; and the fourth heat exchange part 1223 extends along the second direction.

At least the communication section 12 of the second heat exchange tube 1a is arranged in the U-shaped area 120 of the first heat exchange tube 1a; for the second heat exchange tube 1a, the communication section 12 includes a third heat exchange section 123, a third heat exchange section 124, and a fifth heat exchange section 125; the third heat exchange section 123 and a fourth heat exchange section 124 are bent to form the U-shaped areas 120 respectively; the third heat exchange section 123 and the fourth heat exchange section 124 are connected in a bent way; the third heat exchange section 123 is arranged in the U-shaped area 120 of the fourth heat exchange section 124; and at least part of the first heat exchange section 121 of the first heat exchange tube 1a is arranged in the U-shaped area 120 of the third heat exchange section 123. Three side edges corresponding to the U-shaped area 120 of the third heat exchange section 123 are correspondingly parallel to three side edges corresponding to the U-shaped area 120 of the fourth heat exchange section 124 respectively. The fifth heat exchange section 125 is connected to the end of the third heat exchange section 123 deviating from the fourth heat exchange section 124, and includes a plurality of sixth heat exchange parts 1251 and a second bending part 1252; the plurality of sixth heat exchange parts 1251 are arranged at intervals along the first direction; each sixth heat exchange part 1251 extends along the second direction; and the second bending part 1252 is arc-shaped and is connected between the two adjacent sixth heat exchange parts 1251 in a bent way, so that the plurality of sixth heat exchange parts 1251 are connected in sequence.

In addition, it is to be noted that the various specific technical features described in the above specific embodiments can be combined in any suitable way without contradiction. In order to avoid unnecessary repetition, the present application will not separately explain various possible combination methods. In addition, various embodiments of the present application can also be combined arbitrarily, as long as they do not violate the ideas of the present application, they should also be considered as the content disclosed in the present application. In other words, without conflict, the embodiments in the present application and the features in the embodiments may be combined with each other.

The foregoing is only a preferred embodiment of the present application and is not intended to limit the present application, which may be subject to various changes and variations for those skilled in the art. Any modification, equivalent replacement, improvement, etc. made within the spirit and principle of the present application shall fall within the scope of protection of the present application.

## Claims

1. A heat exchange assembly, configured to exchange heat with a battery cell, comprising:
a plurality of heat exchange tubes, wherein each heat exchange tube has two end portions; when one of the two end portions is used for liquid intake, the other one is used for liquid output; and
at least one side of the periphery of the heat exchange assembly locally forms a converging position, and at least one end portion of each heat exchange tube extends to the converging position.

2. The heat exchange assembly according to claim 1, wherein a size of the converging position on a corresponding side of the heat exchange assembly is smaller than or equal to 1/3 of the size of the corresponding side of the heat exchange assembly; and optionally, the size of the converging position on the corresponding side of the heat exchange assembly is smaller than or equal to 115 of the size of the corresponding side of the heat exchange assembly.

3. The heat exchange assembly according to claim 1 or 2, wherein all the converging positions of the heat exchange assembly are located on one side of the periphery of the heat exchange assembly.

4. The heat exchange assembly according to claim 3, wherein a plurality of heat exchange tubes are arranged at intervals or are arranged in a mutually winding mode.

5. The heat exchange assembly according to any one of claims 1 to 4, wherein a space between any two adjacent end portions of the converging positions is less than the maximum radial size of outer contours of cross sections of the end portions,
one or a plurality of converging positions are provided, two end portions of each heat exchange tube extend to the same converging position; or,
a plurality of converging positions are provided, two end portions of each heat exchange tube extend to different converging positions.

6. The heat exchange assembly according to claim 5, wherein
the converging positions are located between two corresponding ends of the heat exchange assembly; or,
the converging positions at least in part exceed the corresponding end of the heat exchange assembly.

7. The heat exchange assembly according to claim 6, wherein one converging position is provided, and
the converging position is opposite to the middle of the corresponding side of the heat exchange assembly; or,
the converging position is opposite to one end of the corresponding side of the heat exchange assembly.

8. The heat exchange assembly according to claim 6 or 7, wherein the plurality of heat exchange tubes are arranged at intervals in a first direction, and two heat exchange tubes at two ends are symmetrically arranged about a center line of the heat exchange assembly vertical to the first direction.

9. The heat exchange assembly according to any one of claims 5 to 8, wherein two end portions of each heat exchange tube are a first end portion and a second end portion separately, one of the first end portion and the second end portion is used for liquid intake and the other one is used for liquid output; all the first end portions of two adjacent heat exchange tubes that are arranged at an interval along the first direction are located between two second end portions of the two adjacent heat exchange tubes, and all the first end portions and all the second end portions of the two adjacent heat exchange tubes extend to the same converging position.

10. The heat exchange assembly according to any one of claims 5 to 8, wherein two end portions of each heat exchange tube are the first end portion and the second end portion respectively; the first end portion is used for liquid intake and the second end portion is used for liquid output; the plurality of converging positions comprise a first converging position and a second converging position,
the first end portion of each heat exchange tube extends to the first converging position, and the second end portion of each heat exchange tube extends to the second converging position; or,
the first end portion of at least one heat exchange tube and the second end portion of at least one heat exchange tube extend to the first converging position, and the second end portion of at least one heat exchange tube and the first end portion of at least one heat exchange tube extend to the second converging position.

11. The heat exchange assembly according to any one of claims 1 to 10, further comprising at least one current collector; the current collectors correspond to the converging positions one by one;
the current collectors are in communication with connectors of the plurality of end portions corresponding to the converging positions; or, the current collectors divide the connectors of the plurality of end portions corresponding to the converging positions into a plurality of independent flow channels.

12. The heat exchange assembly according to any one of claims 1 to 11, wherein each heat exchange tube is further provided with a communication section connected between the two end portions; and central axes of at least the communication sections of all the heat exchange tubes are located on the same plane.

13. The heat exchange assembly according to any one of claims 1 to 12, wherein the heat exchange tubes are flat tubes or harmonica-shaped tubes.

14. The heat exchange assembly according to any one of claims 1 to 13, wherein each heat exchange tube is further provided with the communication section connected between two end portions, at least one heat exchange tube is constructed to be a first heat exchange tube, the communication section of the first heat exchange tube comprises a first heat exchange section and a second heat exchange section, the second heat exchange section is bent to form a U-shaped area, and the first heat exchange section is bent and arranged in the U-shaped area and is connected to the second heat exchange section in a bent way.

15. The heat exchange assembly according to claim 14, wherein the first heat exchange section comprises a plurality of first heat exchange parts and first bending parts, the plurality of first heat exchange parts are arranged at intervals along the first direction, each first heat exchange part extends along a second direction, each first bending part is in an arc shape and is connected between two adjacent first heat exchange parts in a bent way, and thus the plurality of first heat exchange parts are sequentially connected; and an included angle is formed between the second direction and the first direction.

16. The heat exchange assembly according to claim 14 or 15, wherein the second heat exchange section comprises a second heat exchange part, a third heat exchange part, and a fourth heat exchange part; the second heat exchange part extends along a peripheral edge of a first side of the first heat exchange section; the third heat exchange part is connected between the second heat exchange part and the first heat exchange section and extends along a peripheral edge of a second side of the first heat exchange section; a first end of the third heat exchange part is connected to the second heat exchange part by an included angle; a second end of the third heat exchange part is connected to the first heat exchange section by an included angle; the fourth heat exchange part is in communication with the second heat exchange part and is connected to the second heat exchange part by an included angle; and the fourth heat exchange part extends along a peripheral edge of a third side of the first heat exchange section.

17. The heat exchange assembly according to claim 16, wherein the first heat exchange section comprises the plurality of first heat exchange parts which are sequentially bent and connected in the first direction;
the second heat exchange part is located on one side of the plurality of first heat exchange parts in the first direction, the third heat exchange part is located on one side of the plurality of first heat exchange parts in the second direction, and the first direction and the second direction are arranged by an included angle; the first end of the third heat exchange part is connected to one end of the second heat exchange part in the second direction, and the second end of the third heat exchange part is connected to one, which is farthest from the second heat exchange part, of the plurality of first heat exchange parts in the first direction; the fourth heat exchange part is located on the other side of the plurality of first heat exchange parts in the second direction; one end of the fourth heat exchange part is connected to one end of the second heat exchange part deviating from the third heat exchange part, and the other end of the fourth heat exchange part extends in the first direction towards a direction deviating from the second heat exchange part; or,
the second heat exchange part is located on one side of the plurality of first heat exchange parts in the second direction, the third heat exchange part is located on one side of the plurality of first heat exchange parts in the first direction, and the first direction and the second direction are arranged by an included angle; and the first end of the third heat exchange part is connected to one end of the second heat exchange part in the first direction, and the second end of the third heat exchange part is connected to one, which is closest to the third heat exchange part, of the plurality of first heat exchange parts in the first direction; the fourth heat exchange part is located on the other side of the plurality of first heat exchange parts in the first direction; and one end of the fourth heat exchange part is connected to one end of the second heat exchange part deviating from the third heat exchange part, and the other end of the fourth heat exchange part extends in the second direction towards the direction deviating from the second heat exchange part.

18. The heat exchange assembly according to claim 16 or 17, wherein the second heat exchange section also comprises a fifth heat exchange part; and the fifth heat exchange part extends along a peripheral edge of a fourth side of the first heat exchange section, and seals at least part of an opening of the U-shaped area formed by the second heat exchange part, the third heat exchange part, and the fourth heat exchange part.

19. The heat exchange assembly according to any one of claims 14 to 18, wherein the first heat exchange section is connected to a downstream of the second heat exchange section along a fluid flowing direction; or, the first heat exchange tubes are configured as that when heating the battery cells, the first heat exchange section is connected to the downstream of the second heat exchange section along the fluid flowing direction, and when cooling the battery cells, the first heat exchange section is connected to an upstream of the second heat exchange section along the fluid flowing direction.

20. The heat exchange assembly according to any one of claims 14 to 19, wherein at least one heat exchange tube is constructed to be a second heat exchange tube; the second heat exchange tubes and the first heat exchange tubes are arranged on the same side of the battery cell; communication sections of the second heat exchange tubes are arranged in the U-shaped areas of the first heat exchange tubes in a bent way; and the communication sections of the second heat exchange tubes and the communication sections of the first heat exchange tubes have the same or different bending structures.

21. The heat exchange assembly according to claim 20, wherein the communication sections of the second heat exchange tubes comprise U-shaped areas having the same structure as the communication sections of the first heat exchange tubes, and at least part of the communication sections of the first heat exchange tubes are arranged in the U-shaped areas of the second heat exchange tubes.

22. The heat exchange assembly according to claim 20 or 21, wherein the communication section of each second heat exchange tube comprises a third heat exchange section and a fourth heat exchange section which are connected in a bent way, the third heat exchange section and the fourth heat exchange section are respectively bent to form U-shaped areas, the third heat exchange section is arranged in the U-shaped area of the fourth heat exchange section, and at least one part of the first heat exchange section of each first heat exchange tube is arranged in the U-shaped area of the third heat exchange section.

23. The heat exchange assembly according to claim 22, wherein the communication section of each second heat exchange tube also comprises a fifth heat exchange section; the fifth heat exchange section comprises a plurality of fifth heat exchange parts and second bending parts; the plurality of fifth heat exchange parts are arranged at intervals along a third direction; each fifth heat exchange part extends along a fourth direction; each second bending part is in an arc shape and is connected between two adjacent fifth heat exchange parts in a bent way, so that the plurality of fifth heat exchange parts are sequentially connected; the fourth direction and the third direction are arranged by an included angle,
the fifth heat exchange sections are arranged between the third heat exchange sections and the fourth heat exchange sections, and/or, the fifth heat exchange sections are arranged between the third heat exchange sections and the corresponding end portions.

24. The heat exchange assembly according to any one of claims 20 to 23, wherein at least one heat exchange tube is constructed to be a third heat exchange tube, and a communication section of the third heat exchange tube is arranged in the U-shaped area of each second heat exchange tube in a bent way.

25. A battery, comprising a box and battery cells that is arranged in the box, wherein
the battery further comprises at least one of a first heat exchange assembly, a second heat exchange assembly, and a third heat exchange assembly; at least one of the first heat exchange assembly, the second heat exchange assembly, and the third heat exchange assembly is configured to exchange heat with the battery cells and is the heat exchange assembly according to any one of claims 1 to 24; the first heat exchange assembly is arranged in the box and is located between the battery cells and the box; the second heat exchange assembly is arranged outside the box; and the third heat exchange assembly is arranged between two adjacent battery cells.

26. The battery according to claim 25, comprising a first heat exchange assembly and a fixed beam, wherein the fixed beam is arranged in the box and divides an internal space of the box into a first chamber and a second chamber; a part of the first heat exchange assembly and the battery cells are arranged in the first chamber; at least one avoiding channel is formed between the fixed beam and the box; and all the end portions at converging positions penetrate through the corresponding avoiding channel so as to extend to the second chamber from the first chamber.

27. The battery according to claim 26, wherein the fixed beam is provided with a first concave part, and/or, a wall of the box is provided with a second concave part, and the first concave part and/or the second concave part form the avoiding channels.

28. The battery according to claim 26 or 27, wherein parts, located on two opposite sides of the fixed beam, of all the end portions at the converging positions are connected in an obtuse angle manner.

29. The battery according to any one of claims 26 to 28, wherein the first heat exchange assembly further comprises at least one current collector; the current collectors are located in the second chamber and correspond to the converging positions one by one; and
the current collectors are in communication with the connectors of the plurality of end portions corresponding to the converging positions, or, the current collectors divide the connectors of the plurality of end portions corresponding to the converging positions into a plurality of independent channels.

30. The battery according to claim 29, wherein the avoiding channels are configured to allow the corresponding current collectors to pass through.

31. The battery according to any one of claims 27 to 30, wherein the fixed beam is constructed to be an expansion beam and is provided with a first matching surface that is abutted against the battery cells; the battery further comprises:
a bearing member, the bearing member is arranged in the avoiding channels and is provided with a second matching surface that is abutted against the battery cells, and the first matching surface is flush with a second matching surface; the bearing member is provided with a notch for avoiding the end portions corresponding to the converging position; and the notch penetrates through the periphery of the bearing member.

32. The battery according to claim 31, wherein a stop part that is in abutting fit the bearing member is formed on at least one of the fixed beam and the box so as to limit movement of the bearing member from the first chamber to the second chamber.

33. The battery according to claim 32, wherein
the stop part is formed at the avoiding channel position on the side of the fixed beam facing the first chamber, and/or,
a stop step that protrudes towards the fixed beam is formed on a wall, provided with the first heat exchange assembly, of the box and; and the stop step forms the stop part.

34. The battery according to claim 33, wherein on a cross section of the fixed beam, the stop part on the fixed beam is formed into an arc-shaped structure, and a cross section of the fixed beam is vertical to a length direction of the fixed beam.

35. The battery according to any one of claims 31 to 34, wherein the bearing member comprises a plate body part and a matching part, wherein:
a surface of the side of the plate body part in the thickness direction forms the second matching surface, and the notch penetrates the two sides of the plate body part in the thickness direction; and
the matching part is formed on an outer edge of the plate body part and is in abutting fit with the fixed beam so as to limit the movement of the bearing member from the first chamber to the second chamber.

36. The battery according to claim 35, wherein the matching part is provided with a first surface and a second surface, the first surface is an arc-shaped surface that is sunken towards the second surface and is matched with the fixed beam, and the second surface is connected to the first surface and is arranged in a flush manner with the second matching surface.

37. The battery according to claim 35 or 36, wherein at least one clamping hole is formed in the expansion beam; the bearing member further comprises:
at least one clamping hook part; the clamping hook part is formed at an outer edge of the plate body part and is located on the side of the plate body part deviating from the second matching surface; and the clamping hook part is clamped in the corresponding clamping hole.

38. The battery according to any one of claims 35 to 37, wherein the bearing member further comprises:
at least one support part; the support part is arranged on the side of the plate body part deviating from the second matching surface and avoids the first heat exchange assembly; and the support part is in butting fit with the box in a butting mode.

39. The battery according to claim 38, wherein a width of the support part in a thickness direction of the plate body part increases from the matching part to the first heat exchange assembly.

40. The battery according to any one of claims 31 to 39, wherein the bearing member is arranged between the first heat exchange assembly and the fixed beam, and
a heat conductivity coefficient of the bearing member is less than that of the fixed beam; and/or,
the bearing member and the first heat exchange assembly are arranged at an interval.

41. The battery according to any one of claims 31 to 40, wherein a strength of a material of the bearing member is at least 0.8 time of the strength of the material of the fixed beam.

42. The battery according to any one of claims 31 to 41, wherein the first heat exchange assembly is arranged on a bottom wall of the box; the end of the second matching surface facing the first heat exchange assembly is flush with the ends of the battery cells facing the first heat exchange assembly, or, the end of the second matching surface facing the first heat exchange assembly is adjacent to the first heat exchange assembly relative to the ends of the battery cells facing the first heat exchange assembly.

43. The battery according to any one of claims 25 to 42, comprising a first heat exchange assembly and a fixed beam, wherein the fixed beam is constructed to be the first expansion beam and is arranged in the box; the first heat exchange assembly and the fixed beam are arranged at an interval, so that heat insulation between the first heat exchange assembly and the fixed beam is realized.

44. The battery according to claim 43, wherein the fixed beam divides the internal space of the box into the first chamber and the second chamber, a part of the first heat exchange assembly and the battery cell are arranged in the first chamber, at least one avoiding channel is formed between the fixed beam and the box, all the end portions of the converging position penetrate through the corresponding avoiding channels to extend from the first chamber to the second chamber; and the wall surface of the fixed beam corresponding to the avoiding channels and the first heat exchange assembly are arranged at an interval.

45. The battery according to claim 44, wherein the second concave part is formed in the wall of the box, and the second concave part forms at least part of the avoiding channels; the part, penetrating through the avoiding channels, of the first heat exchange assembly is arranged in the second concave part; and
the expansion beam is attached to the part, except the second concave part, of the wall of the box; or,
the expansion beam and the part, except the second concave part, of the wall of the box are arranged at an interval.

46. The battery according to claim 45, further comprising:
a heat insulation member which comprises a first heat insulation part, wherein the first heat insulation part is arranged between the wall surface of the fixed beam corresponding to the avoiding channels and the first heat exchange assembly.

47. The battery according to claim 46, wherein the heat insulation member further comprises a second heat insulation part which is arranged between the part, except the second concave part, of the wall of the box and the fixed beam.

48. The battery according to claim 47, wherein a first fixing member is further arranged on the fixed beam, and at least part of the first fixing member is located in the fixed beam; and
the battery further comprises a second fixing member, and the second fixing member penetrates through the box, the second heat insulation part, and the fixed beam and is connected to the first fixing member.

49. The battery according to any one of claims 25 to 48, wherein the box comprises a first box body; the first box body is an integrated punch forming member and comprises a bottom wall and an enclosure, the enclosure is arranged around the bottom wall, and the first heat exchange assembly is arranged between at least one of the bottom wall and the enclosure and the battery cell.

50. An electrical apparatus, comprising the above battery according to any one of claims 25 to 49.
